(19) Europäisches Patentamt
European Patent Office
Office européen des brevets

(11) EP 3 950 357 A1

(12) **EUROPEAN PATENT APPLICATION**
published in accordance with Art. 153(4) EPC

(43) Date of publication:
**09.02.2022 Bulletin 2022/06**

(21) Application number: **20784170.1**

(22) Date of filing: **04.02.2020**

(51) International Patent Classification (IPC):
***B41J 2/01*** $^{(2006.01)}$ ***C09D 11/328*** $^{(2014.01)}$
***C09D 11/38*** $^{(2014.01)}$ ***B41M 5/00*** $^{(2006.01)}$
***C09B 23/01*** $^{(2006.01)}$ ***C09B 67/46*** $^{(2006.01)}$

(52) Cooperative Patent Classification (CPC):
**B41J 2/01; B41M 5/00; C09D 11/328; C09D 11/38**

(86) International application number:
**PCT/JP2020/004098**

(87) International publication number:
**WO 2020/202774 (08.10.2020 Gazette 2020/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2019 JP 2019068256**

(71) Applicant: **FUJIFILM Corporation**
**Tokyo 106-8620 (JP)**

(72) Inventors:
- **SASADA, Misato**
**Ashigarakami-gun, Kanagawa 258-8577 (JP)**
- **HARA, Akihiro**
**Ashigarakami-gun, Kanagawa 258-8577 (JP)**
- **SASAKI, Daisuke**
**Ashigarakami-gun, Kanagawa 258-8577 (JP)**

(74) Representative: **Klunker IP**
**Patentanwälte PartG mbB**
**Destouchesstraße 68**
**80796 München (DE)**

(54) **INKJET INK FOR INFRARED ABSORBENT IMAGE FORMATION, METHOD FOR INFRARED ABSORBENT IMAGE FORMATION, AND RECORDING MATERIAL**

(57) Provided are an ink jet ink for forming an infrared absorbing image and applications thereof, the ink jet ink including an infrared absorbing material represented by Formula (1), resin particles, a water-soluble organic solvent, a water-soluble organic compound X1, a surfactant, and water. $M^+$ represents a proton, a monovalent alkali metal cation, or an organic cation, $L^1$ represents a methine chain consisting of 5 or 7 methine groups, a methine group at a center of the methine chain has a substituent, $R^1$ to $R^4$ each independently represent a hydrogen atom or a substituent, and X represents O, S, or Se.

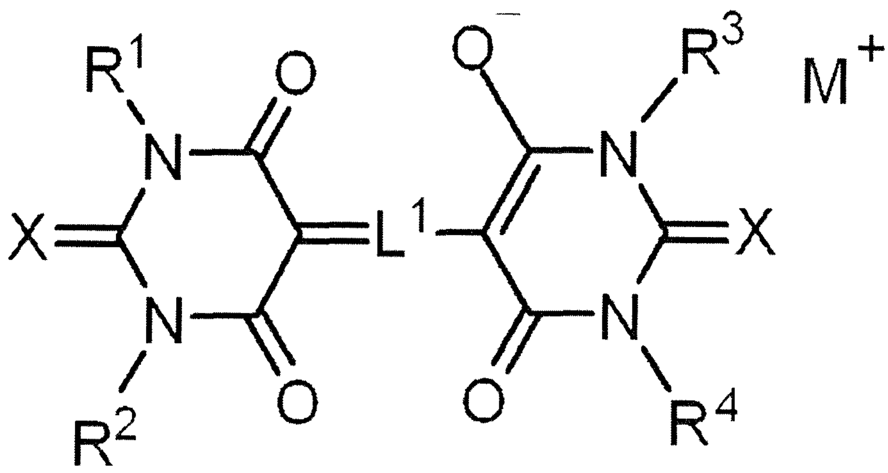

(1)



Printed by Jouve, 75001 PARIS (FR)

## Description

BACKGROUND OF THE INVENTION

1. Field of the Invention

The present disclosure relates to an ink jet ink for forming an infrared absorbing image, an infrared absorbing image forming method, and a recorded material.

2. Description of the Related Art

In general, as a unit that optically reads information written on a certificate such as a stock certificate, a bond certificate, a check, a gift certificate, a lottery, or a commutation ticket, a code pattern that is readable using a bar code or an optical character reader (OCR) is provided in many cases. In addition, as a code pattern using optical reading, a bar code is widely used mainly in a physical distribution management system or the like. Further, recently, a two-dimensional code capable of a larger volume of data storage and high-density printing, for example, Data Code, Veri Code, Code 1. Maxi Code, or a two-dimensional bar code (QR code (registered trade name)) has been spread. In addition, a method using a dot pattern is also known.
As the above-described code pattern, a visible code pattern is generally used.
However, for the visible code pattern, a region for forming the code pattern need to be secured, which imposes restrictions on the design of a printed material.
Accordingly, demands for excluding the visible code pattern have increased.
Further, in order to prevent forgery of a certificate, it has been attempted to make a code pattern transparent by forming a code pattern using an ink not having an absorption band in a visible range.
Making a code pattern transparent has advantageous effects in that a recorded material can be freely designed, an area for recording a code pattern does not need to be secured, and it is difficult to determine and identify a code pattern by visual inspection.
As an attempt to make a code pattern transparent (invisible), techniques of forming an infrared absorbing image using an ink that mainly absorbs infrared light are known (refer to JP2008-144004A, JP2013-189596A, WO2017/056760A, and WO2018/034347A).

SUMMARY OF THE INVENTION

However, further improvement of rub resistance and infrared absorbing properties of an infrared absorbing image may be required.
An object of the present disclosure is to provide an ink jet ink for forming an infrared absorbing image and an infrared absorbing image forming method in which an infrared absorbing image having excellent rub resistance and infrared absorbing properties can be formed, and a recorded material including an infrared absorbing image having excellent rub resistance and infrared absorbing properties.
Configurations for achieving the objects include the following aspects.

<1> An ink jet ink for forming an infrared absorbing image comprising:

an infrared absorbing material represented by Formula (1);
resin particles;
a water-soluble organic solvent;
a water-soluble organic compound X1 having a melting point of 50°C or higher and a molecular weight of lower than 3000;
a surfactant; and
water,
wherein a content of the water-soluble organic solvent is from 10 mass% to 26 mass% with respect to a total amount of the ink jet ink for forming an infrared absorbing image,
a content of the water-soluble organic compound X1 is from 1 mass% to 8 mass% with respect to the total amount of the ink jet ink for forming an infrared absorbing image, and
a surface tension at 25°C is 18 mN/m or higher and 30 mN/m or lower.

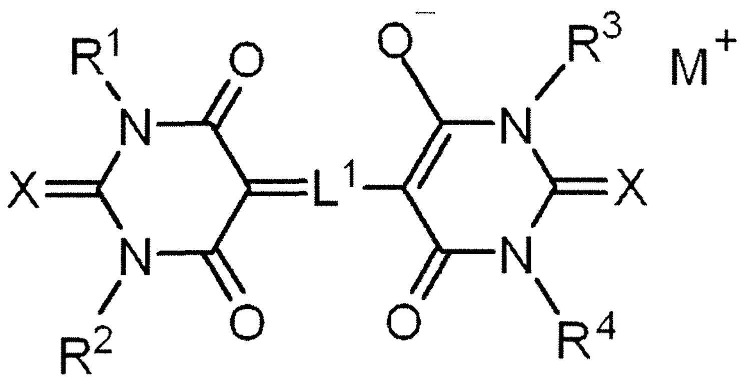

(1)

In Formula (1), $M^+$ represents a proton, a monovalent alkali metal cation, or an organic cation, $L^1$ represents a methine chain consisting of 5 or 7 methine groups, and a methine group at a center of the methine chain has a substituent,

each of $R^1$, $R^2$, $R^3$, and $R^4$ independently represents a hydrogen atom, an alkyl group, an aryl group, or a monovalent heterocyclic group, and
each X independently represents an O atom, a S atom, or a Se atom.

<2> The ink jet ink for forming an infrared absorbing image according to <1>,
in which the infrared absorbing material represented by Formula (1) is an infrared absorbing material represented by Formula (2).

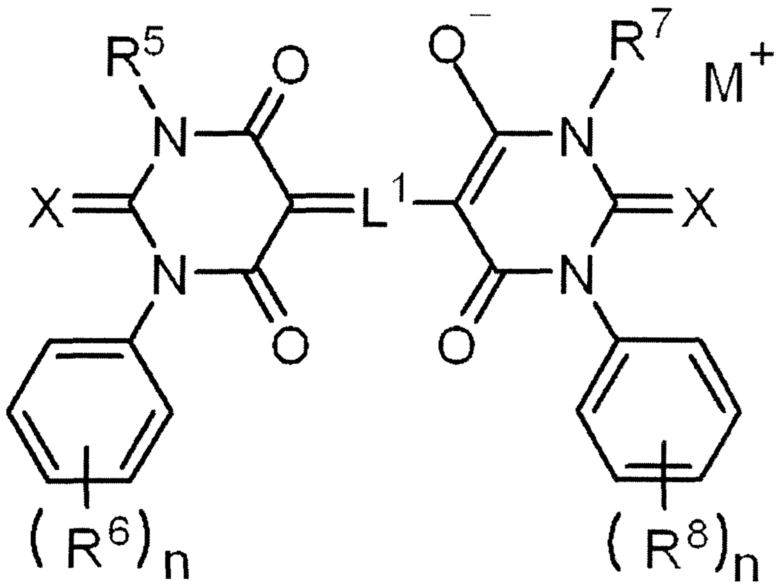

(2)

In Formula (2), $M^+$ represents a proton, a monovalent alkali metal cation, or an organic cation, $L^1$ represents a methine chain consisting of 5 or 7 methine groups, and a methine group at a center of the methine chain has a substituent,

each of $R^5$ and $R^7$ independently represents a hydrogen atom, an alkyl group, an aryl group, or a monovalent heterocyclic group,
each of $R^6$ and $R^8$ independently represents an alkyl group, a halogen atom, an alkenyl group, an aryl group, a monovalent heterocyclic group, a nitro group, a cyano group, $-OR^{L3}$, $-C(=O)R^{L3}$, $-C(=O)OR^{L3}$, $-OC(=O)R^{L3}$, $-N(R^{L3})_2$, $-NHC(=O)R^{L3}$, $-C(=O)N(R^{L3})_2$, $-NHC(=O)OR^{L3}$, $-OC(=O)N(R^{L3})_2$, $-NHC(=O)N(R^{L3})_2$, $-SR^{L3}$, $-S(=O)_2R^{L3}$, $-S(=O)_2OR^{L3}$, $-NHS(=O)_2R^{L3}$, or $-S(=O)_2N(R^{L3})_2$, and $R^{L3}$'s each independently represent a hydrogen atom, an alkyl group, an alkenyl group, an aryl group, or a monovalent heterocyclic group,
each n independently represents an integer from 1 to 5, and
each X independently represents an O atom, a S atom, or a Se atom.

<3> The ink jet ink for forming an infrared absorbing image according to <2>,
in which in Formula (2), $R^6$ and $R^8$ each independently represent -NHC(=O)$R^{L3}$.
<4> The ink jet ink for forming an infrared absorbing image according to any one of <1> to <3>,
in which a proportion of a water-soluble organic solvent L1 having a boiling point of 200°C or lower in the water-soluble organic solvent is 70 mass% or higher.
<5> The ink jet ink for forming an infrared absorbing image according to any one of <1> to <4>,
in which the water-soluble organic compound X1 includes at least one of urea or trimethylolpropane.
<6> An infrared absorbing image forming method comprising:
a step of forming an infrared absorbing image by applying the ink jet ink for forming an infrared absorbing image according to any one of <1> to <5> to a substrate using an ink jet method.
<7> The infrared absorbing image forming method according to <6>, further comprising:

a step of applying a treatment liquid including an aggregating agent to the substrate before the step of forming the infrared absorbing image,
in which in the step of forming the infrared absorbing image, the infrared absorbing image is formed by applying the ink jet ink for forming an infrared absorbing image to at least a part of a region of the substrate to which the treatment liquid is applied.

<8> The infrared absorbing image forming method according to <7>,
in which in the step of applying the treatment liquid, the treatment liquid is applied to the substrate in a pattern image shape using an ink jet method.
<9> A recorded material comprising:

a substrate; and
an infrared absorbing image that is disposed on the substrate and is a dry material of the ink jet ink for forming an infrared absorbing image according to any one of <1> to <5>.

According to the present disclosure, it is possible to provide an ink jet ink for forming an infrared absorbing image and an infrared absorbing image forming method in which an infrared absorbing image having excellent rub resistance and infrared absorbing properties can be formed, and a recorded material including an infrared absorbing image having excellent rub resistance and infrared absorbing properties.

DESCRIPTION OF THE PREFERRED EMBODIMENTS

In the present disclosure, numerical ranges represented by "to" include numerical values before and after "to" as lower limit values and upper limit values.
Regarding numerical ranges that are described stepwise in the present disclosure, an upper limit value or a lower limit value described in a numerical value may be replaced with an upper limit value or a lower limit value of another stepwise numerical range. In addition, regarding a numerical range described in the present disclosure, an upper limit value or a lower limit value described in a numerical value may be replaced with a value described in Examples.
In addition, in the present disclosure, in a case where a plurality of materials corresponding to each of components in a composition are present, the amount of the component in the composition represents the total amount of the plurality of materials present in the composition unless specified otherwise.
In addition, in the present disclosure, a combination of preferable aspects is a more preferable aspect.
In the present disclosure, the term "step" denotes not only an individual step but also a step which is not clearly distinguishable from another step as long as an effect expected from the step can be achieved.
In addition, in the present disclosure, a combination of two or more preferable aspects is a more preferable aspect.
In the present disclosure, unless specified as a substituted group or as an unsubstituted group, a group (atomic group) denotes not only a group having no substituent but also a group having a substituent. For example, "alkyl group" denotes not only an alkyl group having no substituent (unsubstituted alkyl group) but also an alkyl group having a substituent (substituted alkyl group).
In addition, in the present disclosure, a chemical structural formula may also be shown as a simple structural formula in which a hydrogen atom is not shown.
In the present disclosure, "(meth)acrylate" represents acrylate or methacrylate, "(meth)acryl" represents acryl and methacryl, and "(meth)acryloyl" represents acryloyl and methacryloyl.

[Ink Jet Ink for Forming Infrared Absorbing Image]

An ink jet ink for forming an infrared absorbing image according to an embodiment of the present disclosure (hereinafter, also simply referred to as "ink") includes:

an infrared absorbing material represented by Formula (1);
resin particles;
a water-soluble organic solvent;
a water-soluble organic compound X1 having a melting point of 50°C or higher and a molecular weight of lower than 3000;
a surfactant; and
water,
in which a content of the water-soluble organic solvent is 10 mass% to 26 mass% with respect to a total amount of the ink jet ink for forming an infrared absorbing image,
a content of the water-soluble organic compound X1 is 1 mass% to 8 mass% with respect to the total amount of the ink jet ink for forming an infrared absorbing image, and
a surface tension at 25°C (hereinafter, simply referred to as "surface tension") is 18 mN/m to 30 mN/m.

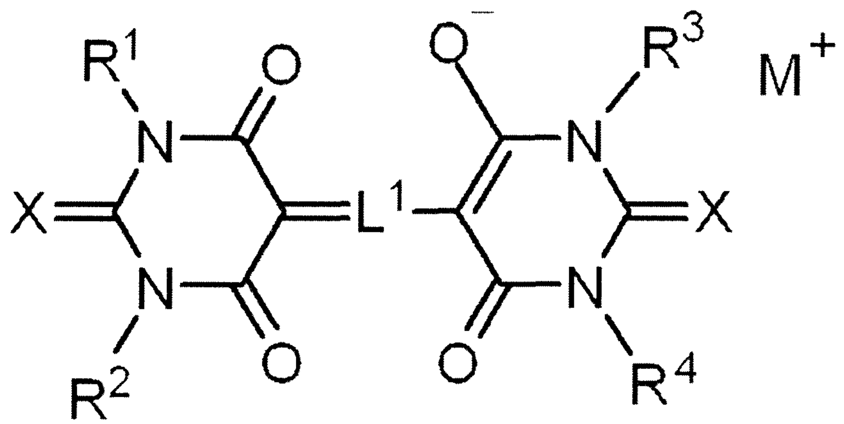

(1)

The meaning of reference numerals in Formula (1) will be described below.
With the ink according to the embodiment of the present disclosure, an infrared absorbing image having excellent rub resistance and infrared absorbing properties can be formed.
The reason for obtaining the effect that the infrared absorbing image has excellent infrared absorbing properties is presumed to be as follows.
It is presumed that, in a case where the ink according to the embodiment of the present disclosure is applied to the substrate to form an infrared absorbing image, a j-aggregate of the infrared absorbing material represented by Formula (1) (hereinafter, also referred to as "specific infrared absorbing material") is formed in the infrared absorbing image. As a result, it is presumed that excellent infrared absorbing properties can be realized in the infrared absorbing image.
In the ink according to the embodiment of the present disclosure,

the content of the water-soluble organic solvent is limited to 26 mass% or lower,
the content of the water-soluble organic compound X1 (that is, the water-soluble organic compound having a melting point of 50°C or higher and a molecular weight of lower than 3000) is 1 mass% to 8 mass%, and
the surface tension of the ink is limited to 30 mN/m or lower.

As a result, the formation of the J-aggregate of the specific infrared absorbing material in the ink that is not yet applied to the substrate is accelerated to some extent, and
the formability of the J-aggregate and the stability in the infrared absorbing image formed by the ink are improved, and thus, it is presumed that excellent infrared absorbing properties can be realized in the infrared absorbing image.
In addition, features contributing to the effect that the infrared absorbing image has excellent rub resistance are presumed to be as follows:

the content of the water-soluble organic solvent in the ink is limited to 26 mass% or lower;

the content of the water-soluble organic compound X1 in the ink is limited to 8 mass% or lower; and
the surface tension of the ink is limited to 30 mN/m or lower.

That is, by limiting the content of the water-soluble organic solvent in the ink to 26 mass% or lower, the drying properties of the ink on the substrate is improved, and thus it is presumed that the rub resistance of the infrared absorbing image is improved.
Further, it is presumed that, by adjusting the content of the water-soluble organic compound X1 in the ink to 8 mass% or lower, the residual amount in the ink after drying on the substrate is secured to be low, and thus the rub resistance of the infrared absorbing image is improved.
Further, by limiting the surface tension of the ink to 30 mN/m or lower, the ink is likely to be dried because is likely to be wetted and spread on the substrate after landing thereon. As a result, it is presumed that the rub resistance of the infrared absorbing image is improved.
In addition, in the ink according to the embodiment of the present disclosure, by limiting the content of the water-soluble organic compound X1 to 1 mass% or higher, the drying and solidification of the ink in the vicinity of a nozzle of an ink jet head is suppressed, and thus the jettability of the ink from the ink jet head that is required as a performance of the ink jet ink is secured.
In the present disclosure, "infrared absorbing image" refers to an image that has invisibility (that is, is inconspicuous by visual inspection and absorbs infrared light.
Preferable spectral characteristics (for example, maximum absorption wavelength) of "infrared absorbing image" will be described below in "Recorded Material".
Hereinafter, the respective components that may be included in the ink according to the embodiment of the present disclosure will be described.

<Specific Infrared Absorbing Material>

The ink according to the embodiment of the present disclosure includes the specific infrared absorbing material, that is, at least one infrared absorbing material represented by Formula (1).

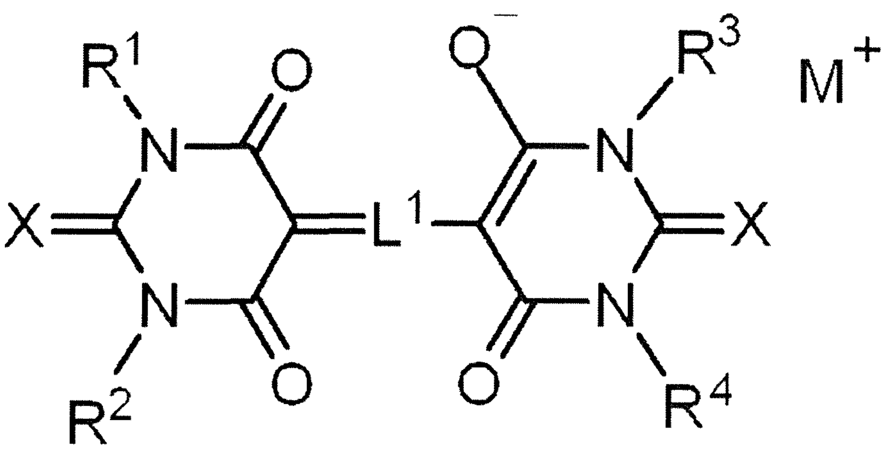

(1)

In Formula (1), $M^+$ represents a proton, a monovalent alkali metal cation, or an organic cation, $L^1$ represents a methine chain consisting of 5 or 7 methine groups, and a methine group at a center of the methine chain has a substituent,

$R^1$, $R^2$, $R^3$, and $R^4$ each independently represent a hydrogen atom, an alkyl group, an aryl group, or a monovalent heterocyclic group, and
X's each independently represent an O atom, a S atom, or a Se atom.

[$M^+$]

In Formula (1), $M^+$ represents a proton, a monovalent alkali metal cation, or an organic cation.
Examples of the monovalent alkali metal cation are not particularly limited and include a lithium ion ($Li^+$), a sodium ion ($Na^+$), a potassium ion ($K^+$), a rubidium ion ($Rb^+$), a cesium ion ($Cs^+$), and a francium ion ($Fr^+$). Among these, $Li^+$, $Na^+$, $K^+$, $Rb^+$, or $Cs^+$ is preferable, $Li^+$, $Na^+$, $K^+$, $Rb^+$, or $Cs^+$ is more preferable, and $Li^+$, $Na^+$, or $K^+$ is still more preferable.

The organic cation may be a monovalent organic cation or a polyvalent organic cation and is preferably a monovalent organic cation.

Examples of the organic cation include a tetraalkylammonium ion, a trialkylammonium ion, a pyridinium ion, a N-methylpyridinium ion, and a N-ethylpyridinium ion. Among these, a trialkylammonium ion is preferable, and a triethylammonium ion is more preferable.

In addition, from the viewpoint of dispersion easiness, a polyvalent organic cation can be used as the organic cation. Examples of the polyvalent organic cation include N,N,N',N'-tetramethylethylenediammonium and Cation Master PD-7 (manufactured by Yokkaichi Chemical Co., Ltd.).

$M^+$ represents a counter cation, and the compound represented by Formula (1) is electrically neutral as a whole due to the presence of $M^+$.

[$L^1$]

In Formula (1), $L^1$ represents a methine chain consisting of 5 or 7 methine groups, and a methine group at a center of the methine chain has a substituent.

The substituent is not particularly limited, and a substituent represented by Formula A is preferable.

$*\text{-}S^A\text{-}T^A$ ... Formula A,

In Formula A, $S^A$ represents a single bond, an alkylene group, an alkenylene group, an alkynylene group, -O-, -S-, $-NR^{L1}-$, -C(=O)-, -C(=O)O-, $-C(=O)NR^{L1}-$, $-S(=O)_2-$, $-OR^{L2}-$, or a group including a combination of at least two thereof, $R^{L1}$ represents a hydrogen atom, a halogen atom, an alkyl group, an aryl group, or a monovalent heterocyclic group, $R^{L2}$ represents an alkylene group, an arylene group, or a divalent heterocyclic group, $T^A$ represents a halogen atom, an alkyl group, an aryl group, a monovalent heterocyclic group, a cyano group, a hydroxy group, a formyl group, a carboxy group, an amino group, a thiol group, a sulfo group, a phosphoryl group, a boryl group, a vinyl group, an ethynyl group, a trialkylsilyl group, or a trialkoxysilyl group, in a case where $S^A$ represents a single bond or an alkylene group and $T^A$ represents an alkyl group, the total number of carbon atoms included in $S^A$ and $T^A$ is 3 or more, and * represents a bonding site to the methine group at the center of the methine chain.

It is preferable that the methine chain consists of five methine groups.

In $L^1$, a methine group other than the methine group at the center of the methine chain may be substituted but is preferably unsubstituted.

The methine chain may have a crosslinking structure at any position. For example, opposite carbon atoms adjacent to the methine group may be crosslinked to form a ring structure. The ring structure is not particularly limited and is preferably an aliphatic ring and more preferably a 5-membered aliphatic ring or a 6-membered aliphatic ring.

$L^1$ represents preferably a group represented by Formula L1-1, L1-2, L2-1, or L2-2 and more preferably a group represented by Formula L1-1 or L1-2.

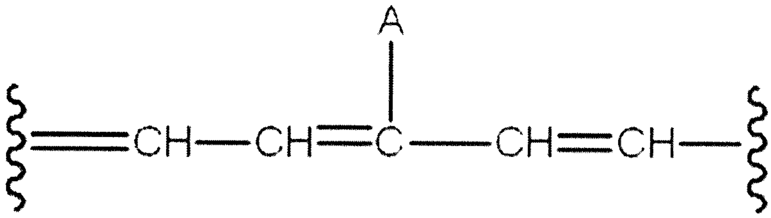

L1-1

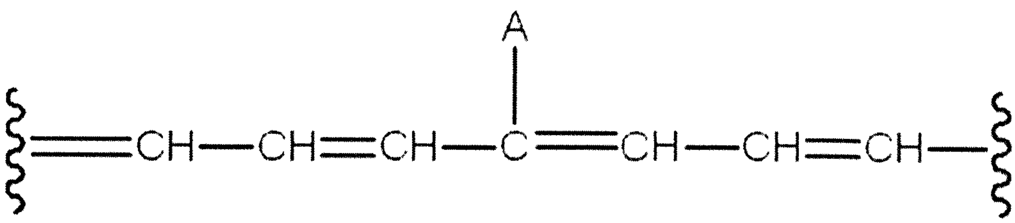

L1-2

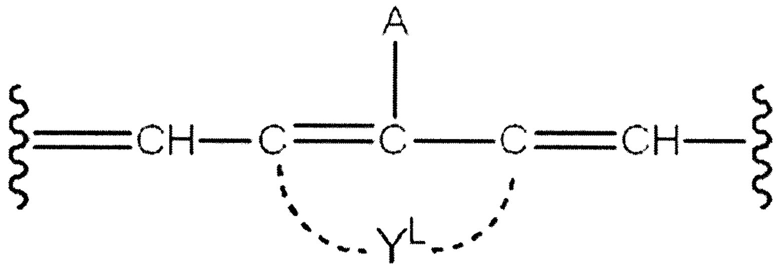

L2-1

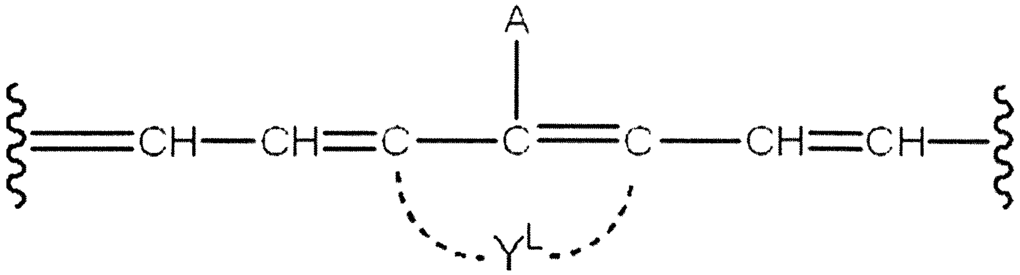

L2-2

In Formulae L1-1, L1-2, L2-1, and L2-2, A represents a substituent represented by Formula A, and wave line portions each independently represent a bonding site to a structure other than $L^1$ in Formula (1).

$Y^L$ represents a non-metal atomic group which forms an aliphatic ring or a heterocycle and preferably a non-metal atomic group which represents an aliphatic ring. As $Y^L$, an alkyl group is preferable. Examples of the alkyl group include $-CH_2CH_2-$ and $-CH_2C(Z)_2-CH_2-$. As the aliphatic ring, a 5-membered aliphatic hydrocarbon ring or a 6-membered aliphatic hydrocarbon ring is preferable.

As the group represented by Formula L2-1 or L2-2, a group represented by any one of the following Formulae L3-1 to L3-4 is preferable.

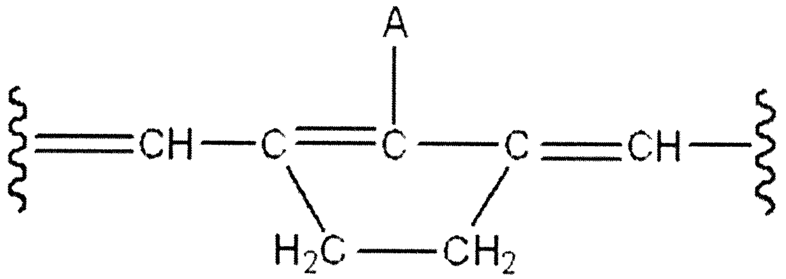

L3-1

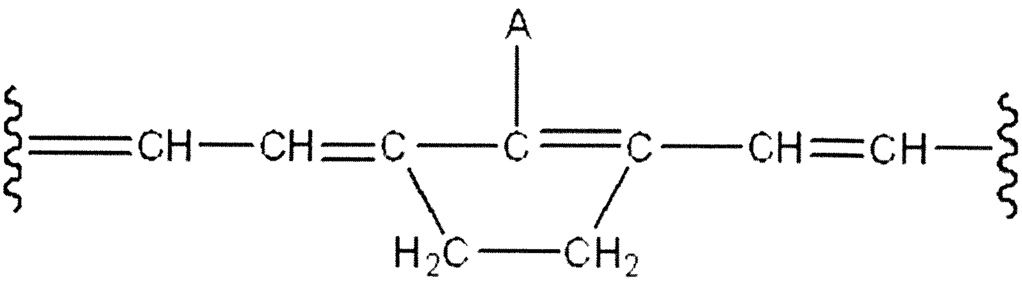

L3-2

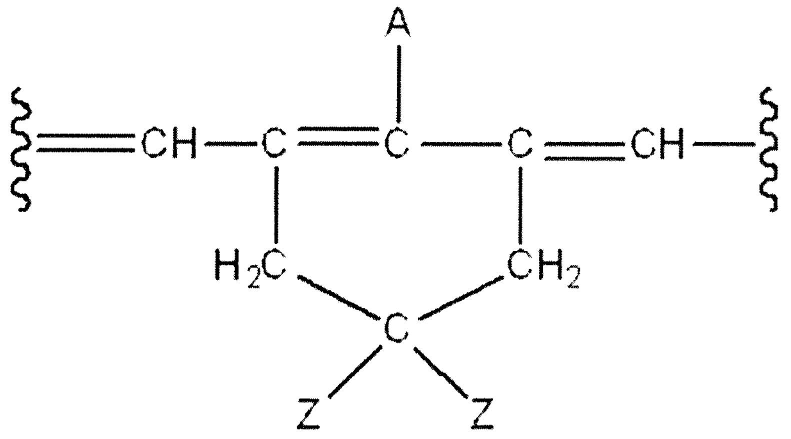

L3-3

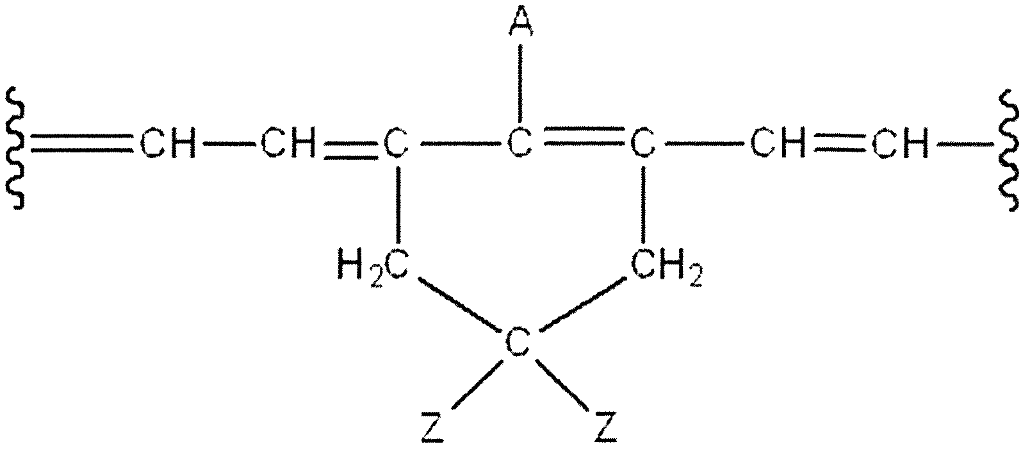

L3-4

In Formulae L3-1 to L3-4, A represents a substituent represented by Formula A. and wave line portions each independently represent a bonding position to a structure other than $L^1$ in Formula (1).

Z represents a hydrogen atom or an alkyl group, preferably a hydrogen atom or an alkyl group having 1 to 8 carbon atoms, and more preferably a hydrogen atom or a methyl group. Two Z's may be bonded to each other to form a ring structure.

-Substituent represented by Formula A-

Here, a preferable aspect of the substituent represented by Formula A will be described.

In Formula A, $S^A$ represents a single bond, an alkylene group, an alkenylene group, an alkynylene group, -O-, -S-, $-NR^{L1}-$, -C(=O)-, -C(=O)O-, $-C(=O)NR^{L1}-$, $-S(=O)_2-$. $-OR^{L2}-$, or a group including a combination of at least two thereof.

Among these, from the viewpoint of improving the invisibility of the obtained infrared absorbing image, $S^A$ represents preferably a single bond, an alkylene group, an alkenylene group, or an alkynylene group and more preferably a single bond.

As the alkylene group, an alkylene group having 1 to 10 carbon atoms is preferable, an alkylene group having 1 to 4 carbon atoms is more preferable, and a methylene group or an ethylene group is still more preferable.

As the alkenylene group, an alkenylene group having 2 to 10 carbon atoms is preferable, an alkenylene group having 2 to 4 carbon atoms is more preferable, and an alkenylene group having 2 or 3 carbon atoms is still more preferable.

As the alkynylene group, an alkynylene group having 2 to 10 carbon atoms is preferable, an alkynylene group having 2 to 4 carbon atoms is more preferable, and an alkynylene group having 2 or 3 carbon atoms is still more preferable.

The alkylene group, the alkenylene group, and the alkynylene group may be linear or branched, and some or all of the carbon atoms included in each of the groups may form a cyclic structure. Unless specified otherwise, the above-described contents shall be applied to the description of the alkylene group, the alkenylene group, and the alkynylene group in the present disclosure.

In -C(=O)O-, the carbon atom is on the side of binding to $L^1$ and the oxygen atom may be on the side of binding to $T^A$ or vice versa.

In $-C(=O)NR^{L1}-$, the carbon atom is on the side of binding to $L^1$ and the nitrogen atom may be on the side of

binding to $T^A$ or vice versa.

$R^{L1}$ represents a hydrogen atom, a halogen atom, an alkyl group, an aryl group, or a monovalent heterocyclic group, preferably a hydrogen atom, an alkyl group, or an aryl group, and more preferably a hydrogen atom.

As the alkyl group, an alkyl group having 1 to 10 carbon atoms is preferable, an alkyl group having 1 to 4 carbon atoms is more preferable, and an alkyl group having 1 or 2 carbon atoms is still more preferable.

The alkyl group may be linear or branched, and some or all of the carbon atoms included in the alkyl group may form a cyclic structure. Unless specified otherwise, the above-described contents shall be applied to the description of the alkyl group in the present disclosure.

As the aryl group, an aryl group having 6 to 20 carbon atoms is preferable, and a phenyl group or a naphthyl group is more preferable.

In the present disclosure, a monovalent heterocyclic group refers to a group obtained by removing one hydrogen atom from a heterocyclic compound, and a divalent heterocyclic group refers to a group obtained by removing two hydrogen atoms from a heterocyclic compound.

It is preferable that a heterocycle in the monovalent heterocyclic group is a 5-membered ring or a 6-membered ring. In addition, the heterocycle may form a fused ring with an aliphatic ring, an aromatic ring, or another heterocycle.

Examples of a heteroatom in the heterocycle include a N atom, an O atom, and a S atom. Among these, a N atom is preferable.

Examples of the heterocycle include a pyridine ring, a piperidine ring, a furan ring, a furfuran ring, a thiophene ring, a pyrrole ring, a quinoline ring, a morpholine ring, an indole ring, an imidazole ring, a pyrazole ring, a carbazole ring, a phenothiazine ring, a phenoxazine ring, an indoline ring, a pyrrolidone ring, a thiazole ring, a pyrazine ring, a thiadiazine ring, a benzoquinoline ring, and a thiadiazole ring.

$R^{L2}$ represents an alkylene group, an arylene group, or a divalent heterocyclic group and preferably an alkylene group.

As the alkylene group, an alkylene group having 1 to 10 carbon atoms is preferable, an alkylene group having 1 to 4 carbon atoms is more preferable, and an alkylene group having 1 or 2 carbon atoms is still more preferable.

As the arylene group, an arylene group having 6 to 20 carbon atoms is preferable, a phenylene group or a naphthylene group is more preferable, and a phenylene group is still more preferable.

As the divalent heterocyclic group, a structure obtained by further removing another hydrogen atom from the monovalent heterocyclic group of $R^L1$ is preferable.

In Formula A, $T^A$ represents a halogen atom, an alkyl group, an aryl group, a monovalent heterocyclic group, a cyano group, a hydroxy group, a formyl group, a carboxy group, an amino group, a thiol group, a sulfo group, a phosphoryl group, a boryl group, a vinyl group, an ethynyl group, a trialkylsilyl group, or a trialkoxysilyl group. Among these, an aryl group, a monovalent heterocyclic group, or a trialkylsilyl group is preferable. As the heterocyclic group, a heterocyclic group having an oxygen atom or a nitrogen atom is preferable. A phenyl group or a pyridyl group is more preferable.

Examples of the halogen atom include a fluorine atom (F atom), a chlorine atom (Cl atom), a bromine atom (Br atom), and an iodine atom (I atom). Among these, a Cl atom or a Br atom is preferable, and a Cl atom is more preferable.

As the alkyl group, an alkyl group having 1 to 10 carbon atoms is preferable, an alkyl group having 1 to 4 carbon atoms is more preferable, and an alkyl group having 1 or 2 carbon atoms is still more preferable.

In a case where $T^A$ represents an alkyl group, $T^A$ may form a ring structure with another carbon atom in the methine chain. As the ring structure, s a 5-membered ring or a 6-membered ring is preferable.

As the aryl group, an aryl group having 6 to 20 carbon atoms is preferable, a phenyl group or a naphthyl group is more preferable, and a phenyl group is still more preferable. The aryl group may further have a substituent. Examples of the substituent that can be introduced into the aryl group include an alkyl group, a halogen atom, an alkenyl group, an aryl group, a monovalent heterocyclic group, a nitro group, a cyano group, $-OR^{L3}$, $-C(=O)R^{L3}$, $-C(=O)OR^{L3}$, $-OC(=O)R^{L3}$, $-N(R^{L3})_2$, $-NHC(=O)R^{L3}$, $-C(=O)N(R^{L3})_2$, $-NHC(=O)OR^{L3}$, $-OC(=O)N(R^{L3})_2$, $-NHC(=O)N(R^{L3})_2$, $-SR^{L3}$, $-S(=O)_2R^{L3}$, $-S(=O)_2OR^{L3}$, $-NHS(=O)_2R^{L3}$, and-$S(=O)_2N(R^{L3})_2$. Among these, an alkyl group, an aryl group, a monovalent heterocyclic group, a nitro group, a cyano group, $-OR^{L3}$, $-N(R^{L3})_2$, $-NHC(=O)R^{L3}$, $-C(=O)N(R^{L3})_2$, $-NHC(=O)OR^{L3}$, or $-NHC(=O)N(R^{L3})_2$ is preferable.

It is preferable that a heterocycle in the monovalent heterocyclic group is a 5-membered ring or a 6-membered ring. In addition, the heterocycle may form a fused ring with an aliphatic ring, an aromatic ring, or another heterocycle.

Examples of a heteroatom in the heterocycle include a N atom, an O atom, and a S atom. Among these, a N atom is preferable.

Examples of the heterocycle include a pyridine ring, a triazine ring, a piperidine ring, a furan ring, a furfuran ring, a Meldrum's acid ring, a barbituric acid ring, a succinimide ring, a thiophene ring, a pyrrole ring, a quinoline ring, a morpholine ring, a thiomorpholine ring, an indole ring, an imidazole ring, a pyrazole ring, a carbazole ring, a phenothiazine ring, a phenoxazine ring, an indoline ring, a pyrrolidone ring, a thiazole ring, a pyrazine ring, a thiadiazine ring, a benzoquinoline ring, and a thiadiazole ring.

The heterocycle may form a salt structure. For example, the pyridine ring may form a pyridinium salt, and may be present as a pyridinium ion.

The aryl group or the monovalent heterocyclic group may have a substituent. Examples of the substituent include an alkyl group, an alkoxy group, a halogen atom, an alkenyl group, an alkynyl group, an aryl group, a monovalent heterocyclic group, a nitro group, a cyano group, $-OR^T$, $-C(=O)R^T$, $-C(=O)OR^T$, $-OC(=O)R^T$, $-N(R^T)_2$, $-NHC(=O)R^T$, $-C(=O)N(R^T)_2$, $-NHC(=O)OR^T$, $-OC(=O)N(R^T)_2$, $-NHC(=O)N(R^T)_2$, $-SR^T$, $-S(=O)_2R^T$, $-S(=O)_2OR^T$, $-NHS(=O)_2R^T$, and $-=S(=O)_2N(R^T)_2$.

$R^T$'s each independently represent a hydrogen atom, an alkyl group, an aryl group, or a monovalent heterocyclic group and preferably a hydrogen atom, an alkyl group, or an aryl group.

As the alkyl group represented by $R^T$, an alkyl group having 1 to 12 carbon atoms is preferable, an alkyl group having 1 to 6 carbon atoms is more preferable, and a methyl group or an ethyl group is still more preferable.

As the aryl group represented by $R^T$, an aryl group having 6 to 20 carbon atoms is preferable, a phenyl group or a naphthyl group is more preferable, and a phenyl group is still more preferable.

It is preferable that a heterocycle in the monovalent heterocyclic group represented by $R^T$ is a 5-membered ring or a 6-membered ring. In addition, the heterocycle may form a fused ring with an aliphatic ring, an aromatic ring, or another heterocycle.

Examples of a heteroatom in the heterocycle include a N atom, an O atom, and a S atom. Among these, a N atom is preferable.

Examples of the heterocycle include a pyridine ring, a piperidine ring, a piperazine ring, a pyrrolidine ring, a furan ring, a tetrahydrofuran ring, a tetrahydropyran ring, a thiophene ring, a pyrrole ring, a quinoline ring, a morpholine ring, an indole ring, an imidazole ring, a pyrazole ring, a carbazole ring, a phenothiazine ring, a phenoxazine ring, an indoline ring, a pyrrolidone ring, a thiazole ring, a pyrazine ring, a thiadiazine ring, a benzoquinoline ring, and a thiadiazole ring.

The monovalent heterocyclic group may further have a substituent. Examples of the substituent include the groups represented by $R^T$, and preferable aspects thereof are also the same.

The amino group refers to an amino group or a substituted amino group, and a diarylamino group or a diheteroarylamino group is preferable.

Examples of a substituent of the substituted amino group include an alkyl group, an aryl group, and a monovalent heterocyclic group. The alkyl group, the aryl group, or the monovalent heterocyclic group has the same definition and the same preferable aspect as the alkyl group, the aryl group, or the monovalent heterocyclic group represented by $T^A$.

As the trialkylsilyl group, a trialkylsilyl group in which the number of carbon atoms in the alkyl group is 1 to 10 is preferable, and a trialkylsilyl group in which the number of carbon atoms in the alkyl group is 1 to 4 is more preferable. Preferable examples of the trialkylsilyl group include a trimethylsilyl group, a dimethylbutylsilyl group, a triethylsilyl group, and a triisopropylsilyl group.

As the trialkoxysilyl group, a trialkoxysilyl group in which the number of carbon atoms in the alkoxy group is 1 to 10 is preferable, and a trialkoxysilyl group in which the number of carbon atoms in the alkoxy group is 1 to 4 is more preferable. Preferable examples of the trialkoxysilyl group include a trimethoxysilyl group and a triethoxysilyl group.

In a case where $S^A$ represents a single bond or an alkylene group and $T^A$ represents an alkyl group, the total number of carbon atoms included in $S^A$ and $T^A$ is 3 or more. From the viewpoint of the invisibility of the obtained infrared absorbing image, the total number of carbon atoms is preferably 4 or more and more preferably 5 or more.

In a case where $S^A$ represents a single bond or an alkylene group, $T^A$ represents an alkyl group, and the total number of carbon atoms is 3 or more, the invisibility of the obtained infrared absorbing image is excellent.

In addition, from the viewpoint of dispersion easiness, the total number of carbon atoms is preferably 20 or less and more preferably 10 or less.

In particular, from the viewpoint of dispersibility, a heterocycle in which $T^A$ at a terminal in Formula A has a nitrogen atom, an aryl group, or a halogen atom is preferable. In addition, the alkyl group, the aryl group, or the like further has a substituent such that the dispersibility and the absorption wavelength of the specific infrared absorbing material, in particular, the maximum absorption wavelength can be easily adjusted to be in the preferable range.

Specific examples of the substituent represented by Formula A include the following substituents A-1 to A-48. It is noted that the substituent represented by Formula A is not limited to these examples.

In the following substituents A-1 to A-48, $i\text{-}C_{10}$ represents an isodecyl group, $i\text{-}C_8$ represents an isooctyl group, and * represents a bonding site to $L^1$ in Formula 1.

Among the following substituents A-1 to A-48, from the viewpoint of dispersibility,

A-1, A-2, A-4, A-7, A-8, A-12, A-13, A-14, A-15, A-16, A-20, A-26, A-28, A-29, A-30, A-31, A-32, A-34, A-39, A-41, A-42, A-43, A-44, A-45, A-47, or A-48 is preferable, and

A-1, A-2, A-4, A-7, A-8, A-13, A-14, A-15, A-26, A-28, A-29, A-30, A-31, A-32, A-34, A-39, or A-42 is more preferable.

In addition, from the viewpoint of increasing the absorption wavelength of the specific infrared absorbing material,

A-1, A-2, A-4, A-5, A-6, A-7, A-8, A-20. A-34, A-39, A-41, A-42, A-45 or A-48 is preferable, and A-1, A-2, A-4, A-8, A-39, or A-42 is more preferable.

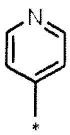
A-1

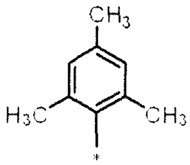
A-2

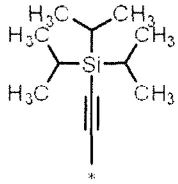
A-3

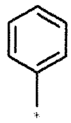
A-4

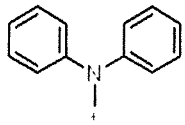
A-5

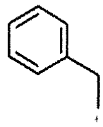
A-6

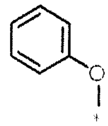
A-7

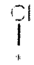
A-8

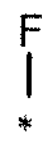
A-9

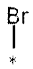
A-10


A-11

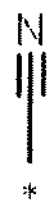
A-12

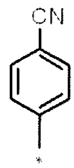
A-13

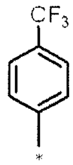
A-14

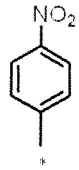
A-15

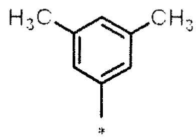
A-16

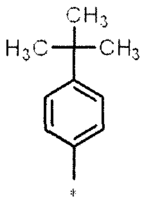
A-17

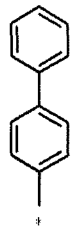
A-18

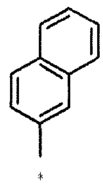
A-19

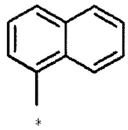
A-20

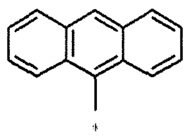
A-21

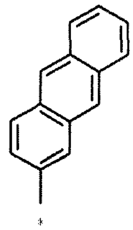
A-22

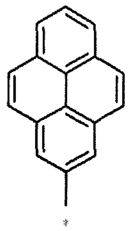
A-23

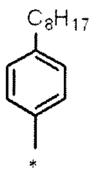
A-25

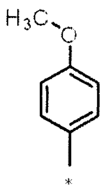
A-26

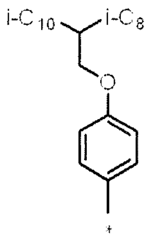
A-27

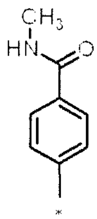
A-28

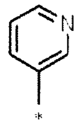
A-29

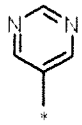
A-30

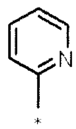
A-31

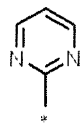
A-32

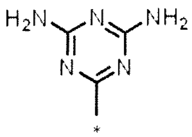
A-33
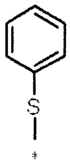
A-34
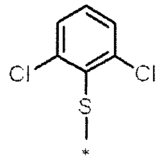
A-35
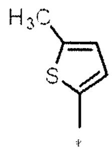
A-36
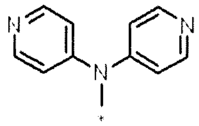
A-37
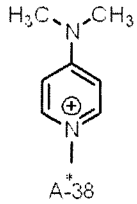
A-38
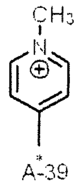
A-39
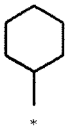
A-40
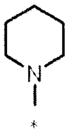
A-41
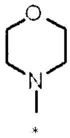
A-42
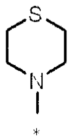
A-43
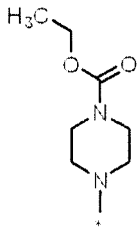
A-44
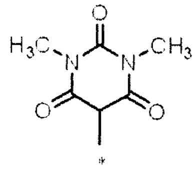
A-45
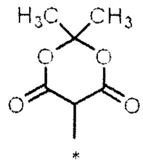
A-46
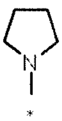
A-47
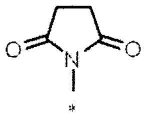
A-48

($R^1$, $R^2$, $R^3$, and $R^4$)

In Formula (1), $R^1$, $R^2$, $R^3$, and $R^4$ each independently represent a hydrogen atom, an alkyl group, an aryl group, or a monovalent heterocyclic group. From the viewpoint of the invisibility of the obtained near infrared absorbing image, a hydrogen atom or an aryl group is preferable, and a hydrogen atom or a phenyl group is more preferable.

As the alkyl group represented by $R^1$, $R^2$, $R^3$, and $R^4$, an alkyl group having 1 to 10 carbon atoms is preferable, an alkyl group having 1 to 4 carbon atoms is more preferable, and a methyl group or an ethyl group is still more preferable.

It is preferable that the alkyl group has a substituent. Examples of the substituent include examples of a substituent in the aryl group described below excluding an alkyl group, a nitro group, and a cyano group, and preferable aspects thereof are also the same.

As the aryl group represented by $R^1$, $R^2$, $R^3$, and $R^4$, an aryl group having 6 to 20 carbon atoms is preferable, a phenyl group or a naphthyl group is more preferable, and a phenyl group is still more preferable.

The aryl group may be unsubstituted but preferably has a substituent. As the introduction position of the substituent, from the viewpoint of dispersibility and aggregation stability, the meta position or the para position is preferable, and the meta position is more preferable with respect to a bonding site to another structure in Formula (1). Among these, an aspect where a polar group is present at the meta position is more preferable.

Examples of the substituent that can be introduced into the aryl group include an alkyl group, a halogen atom, an alkenyl group, an aryl group, a monovalent heterocyclic group, a nitro group, a cyano group, $-OR^{L3}$, $-C(=O)R^{L3}$, $-C(=O)OR^{L3}$, $-OC(=O)R^{L3}$, $-N(R^{L3})_2$, $-NHC(=O)R^{L3}$, $-C(=O)N(R^{L3})_2$, $-NHC(=O)OR^{L3}$, $-OC(=O)N(R^{L3})$, $-NHC(=O)N(R^{L3})_2$, $-SR^{L3}$, $-S(=O)_2R^{L3}$, $-S(=O)_2OR^{L3}$, $-NHS(=O)_2R^{L3}$, and $-S(=O)_2N(R^{L3})_2$.

From the viewpoint of further improving the dispersibility and aggregation stability of the specific infrared absorbing material in the ink, a polar group is preferable as the substituent.

Among the above-described examples of the substituent, a nitro group, a cyano group, $-OR^{L3}$, $-C(=O)R^{L3}$, $-C(=O)OR^{L3}$, $-OC(=O)R^{L3}$, $-N(R^{L3})_2$, $-NHC(=O)R^{L3}$, $-C(=O)N(R^{L3})_2$, $-NHC(=O)OR^{L3}$, $-OC(=O)N(R^{L3})_2$, $-NHC(=O)N(R^{L3})_2$, $-SR^{L3}$, $-S(=O)_2R^{L3}$, $-S(=O)_2OR^{L3}$, $-NHS(=O)_2R^{L3}$, or $-S(=O)_2N(R^{L3})_2$ is preferable as the polar group. Among these, $-NHC(=O)R^{L3}$, $-C(=O)N(R^{L3})_2$, $-NHC(=O)OR^{L3}$, $-OC(=O)N(R^{L3})_2$, $-NHC(=O)N(R^{L3})_2$, $-NHS(=O)_2R^{L3}$, or $-S(=O)_2N(R^{L3})_2$ is more preferable.

In addition, from the viewpoint of improving the light fastness and moist heat resistance of the infrared absorbing image, as the substituent, a hydrogen-bonding group is preferable.

Among the above-described substituents, as the hydrogen-bonding group, for example, -OH, -C(=O)OH, $-NHC(=O)R^{L3}$, $-C(=O)N(R^{L3})_2$, $-NHC(=O)OR^{L3}$, $-OC(=O)N(R^{L3})_2$, $-NHC(=O)N(R^{L3})_2$, $-NHS(=O)_2R^{L3}$, or $-S(=O)_2N(R^{L3})_2$ is preferable, and $-NHC(=O)OR^{L3}$ is more preferable.

$R^{L3}$'s each independently represent a hydrogen atom, an alkyl group, an alkenyl group, an aryl group, or a monovalent heterocyclic group, and preferably a hydrogen atom, an alkyl group, or an aryl group.

As the alkyl group represented by $R^{L3}$, an alkyl group having 1 to 10 carbon atoms is preferable, an alkyl group having 1 to 4 carbon atoms is more preferable, and a methyl group or an ethyl group is still more preferable.

As the alkenyl group represented by $R^{L3}$, an alkenyl group having 2 to 10 carbon atoms is preferable, an alkenyl group having 2 to 4 carbon atoms is more preferable, and an alkenyl group having 2 or 3 carbon atoms is still more

preferable.

As the aryl group represented by $R^{L3}$, an aryl group having 6 to 20 carbon atoms is preferable, a phenyl group or a naphthyl group is more preferable, and a phenyl group is still more preferable.

It is preferable that a heterocycle in the monovalent heterocyclic group represented by $R^{L3}$ is a 5-membered ring or a 6-membered ring. In addition, the heterocycle may form a fused ring with an aliphatic ring, an aromatic ring, or another heterocycle.

Examples of a heteroatom in the heterocycle include a N atom, an O atom, and a S atom. Among these, a N atom is preferable.

Examples of the heterocycle include a pyridine ring, a piperidine ring, a furan ring, a furfuran ring, a thiophene ring, a pyrrole ring, a quinoline ring, a morpholine ring, an indole ring, an imidazole ring, a pyrazole ring, a carbazole ring, a phenothiazine ring, a phenoxazine ring, an indoline ring, a pyrrolidone ring, a thiazole ring, a pyrazine ring, a thiadiazine ring, a benzoquinoline ring, and a thiadiazole ring.

The monovalent heterocyclic group may further have a substituent. Examples of the substituent include the groups represented by $R^{L3}$, and preferable aspects thereof are also the same.

It is preferable that a heterocycle in the monovalent heterocyclic group represented by $R^1$, $R^2$, $R^3$, and $R^4$ is a 5-membered ring or a 6-membered ring. In addition, the heterocycle may form a fused ring with an aliphatic ring, an aromatic ring, or another heterocycle.

Examples of a heteroatom in the monovalent heterocyclic group include a N atom, an O atom, and a S atom. Among these, a N atom is preferable.

Examples of the monovalent heterocyclic group include a pyridine ring, a piperidine ring, a furan ring, a furfuran ring, a thiophene ring, a pyrrole ring, a quinoline ring, a morpholine ring, an indole ring, an imidazole ring, a pyrazole ring, a carbazole ring, a phenothiazine ring, a phenoxazine ring, an indoline ring, a pyrrolidone ring, a thiazole ring, a pyrazine ring, a thiadiazine ring, a benzoquinoline ring, and a thiadiazole ring.

It is preferable that the monovalent heterocyclic group has a substituent. Examples of the substituent include the examples of the substituent in a case where $R^1$, $R^2$, $R^3$, and $R^4$ represent an aryl group, and preferable aspects thereof are also the same.

In addition, from the viewpoint of dispersibility of the infrared absorbing material, it is preferable that at least one selected from the group consisting of $R^1$, $R^2$, $R^3$, and $R^4$ is a hydrogen atom, and it is more preferable that two selected from the group consisting of $R^1$, $R^2$, $R^3$, and $R^4$ are a hydrogen atom.

In a case where two selected from the group consisting of $R^1$, $R^2$, $R^3$, and $R^4$ represent a hydrogen atom, it is preferable that one of $R^1$ or $R^2$ and one of $R^3$ or $R^4$ represent a hydrogen atom.

Further, from the viewpoint of further improving, in a case where the ink is prepared using a dispersion, invisibility of an near infrared absorbing image that is a dry material of the ink while improving dispersibility, it is more preferable that one of $R^1$ or $R^2$ and one of $R^3$ or $R^4$ represent a hydrogen atom and the other one of $R^1$ or $R^2$ and the other one of $R^3$ or $R^4$ represent a phenyl group. It is still more preferable that the phenyl group has a substituent as described above.

Specific examples of $R^1$, $R^2$, $R^3$, and $R^4$ include the following substituents R-1 to R-79. It is noted that $R^1$, $R^2$, $R^3$, and $R^4$ according to the embodiment of the present disclosure are not limited to these examples. Among the following substituents R-1 t o R-79, from the viewpoint of aggregation stability, R-1, R-2, R-4,R-5, R-7, R-11, R-13, R-14, R-15, R-16, R-17, R-18, R-19, R-20, R-22, R-23, R-24, R-25, R-33, R-34, R-35, R-36, R-37, R-38, R-39, R-40, R-43, R-50, R-51, R-52, R-53, R-56, R-57, R-60, R-61, R-62, R-63, R-64, R-65, R-66, R-67, R-68, R-69, R-70, R-71, R-72, R-73, R-74, R-75, R-76, R-77, R-78, or R-79 is preferable, and R-1, R-4, R-5, R-7, R-11, R-13, R-16, R-17, R-18, R-19, R-20, R-22, R-24, R-25, R-37, R-38, R-43, R-50, R-51, R-52, R-53, R-56, R-60, R-61, R-62, R-63, R-64, R-65, R-66, R-67, R-69, R-70, R-71, R-72, R-73, R-74, R-75, R-76, R-77, R-78, or R-79 is more preferable.

In structures of the following substituents, Me represents a methyl group.

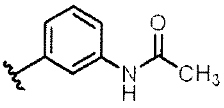
R-1

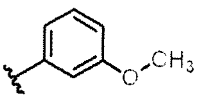
R-2

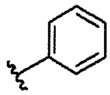
R-3

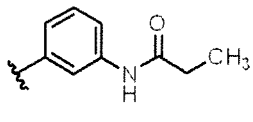
R-4

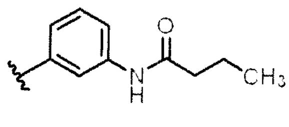
R-5

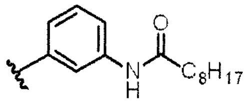
R-6

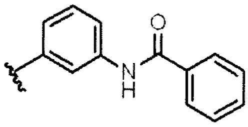
R-7

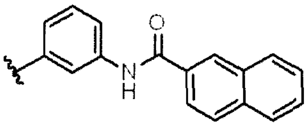
R-8

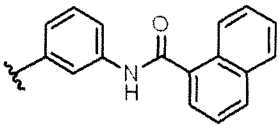
R-9

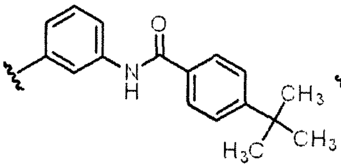
R-10

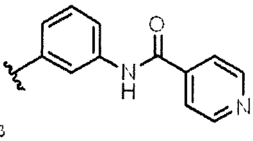
R-11

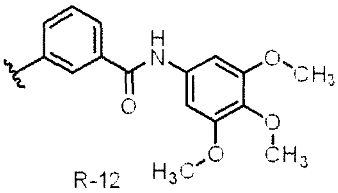
R-12

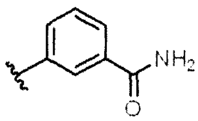
R-13

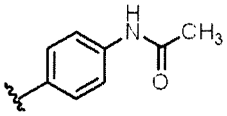
R-14

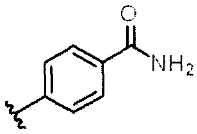
R-15

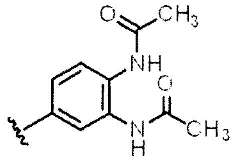
R-16

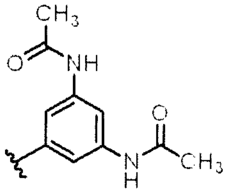
R-17

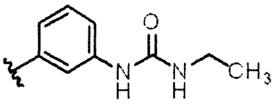
R-18

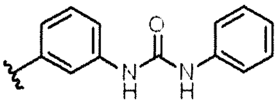
R-19

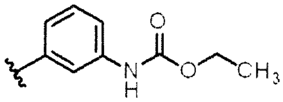
R-20

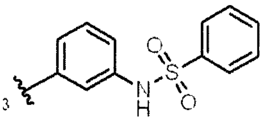
R-21

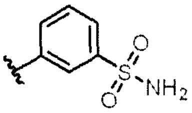
R-22

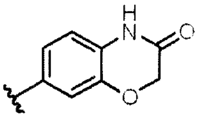
R-23

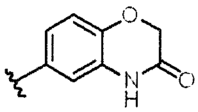
R-24

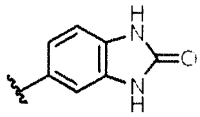
R-25

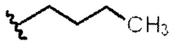
R-26

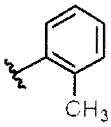
R-27

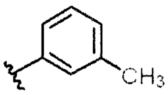
R-28

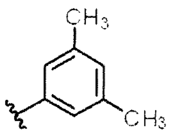
R-29

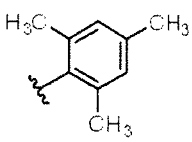
R-30

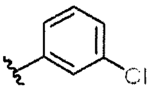
R-31

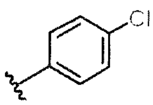
R-32

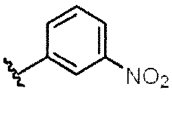
R-33

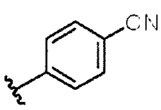
R-34

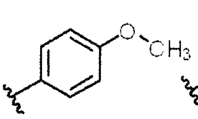
R-35

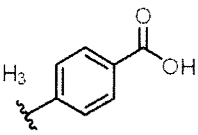
R-36

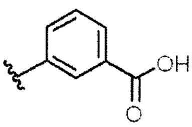
R-37

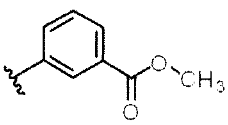
R-38

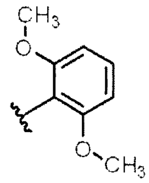
R-39

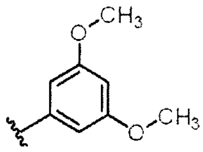
R-40

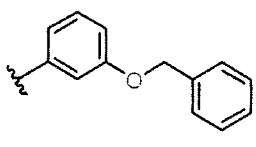
R-41

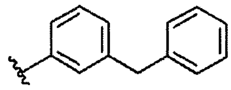
R-42

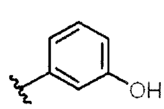
R-43

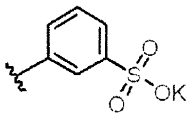
R-44

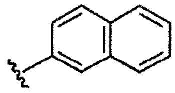
R-45

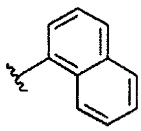
R-46

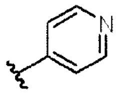
R-47

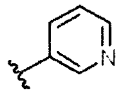
R-48

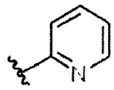
R-49

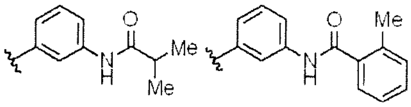
R-50

R-51

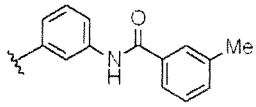
R-52

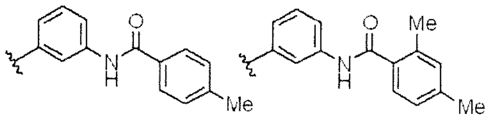
R-53

R-54

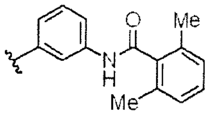
R-55

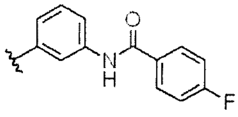
R-56

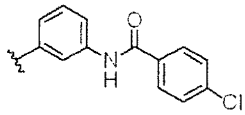
R-57

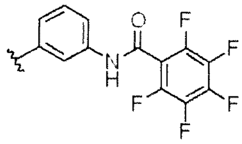
R-58

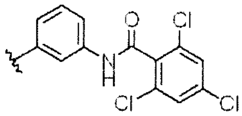
R-59

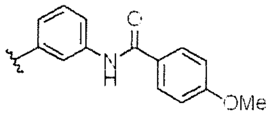
R-60

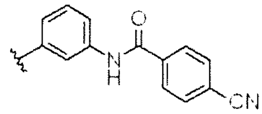
R-61

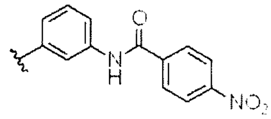
R-62

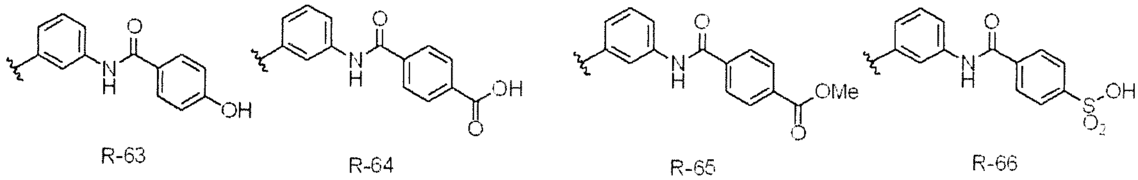
R-63

R-64

R-65

R-66

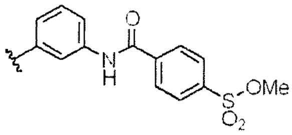
R-67

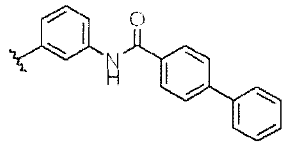
R-68

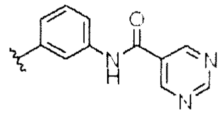
R-69

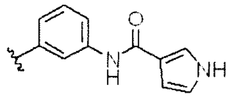
R-70

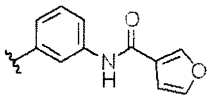
R-71

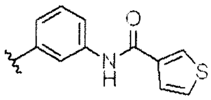
R-72

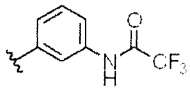
R-73

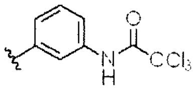
R-74

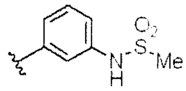
R-75

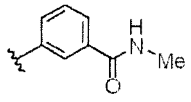
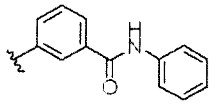
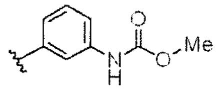
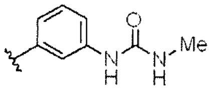

R-76 R-77 R-78 R-79

It is preferable that the infrared absorbing material represented by Formula (1) is a compound represented by Formula (2). As a result, the absorption wavelength of the image that is a dry material of the ink including the infrared absorbing material is shifted to a longer wavelength, and an infrared absorbing image having excellent invisibility can be obtained.

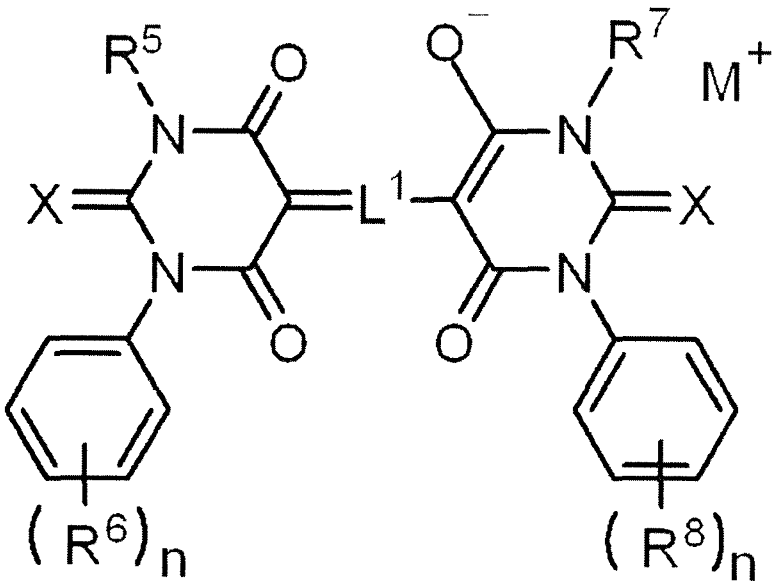

(2)

In Formula (2), $M^+$ represents a proton, a monovalent alkali metal cation, or an organic cation, $L^1$ represents a methine chain consisting of 5 or 7 methine groups, and a methine group at a center of the methine chain has a substituent,

$R^5$ and $R^7$ each independently represent a hydrogen atom, an alkyl group, an aryl group, or a monovalent heterocyclic group,

$R^6$ and $R^8$ each independently represent an alkyl group, a halogen atom, an alkenyl group, an aryl group, a monovalent heterocyclic group, a nitro group, a cyano group, $-OR^{L3}$, $-C(=O)R^{L3}$, $-C(=O)OR^{L3}$, $-OC(=O)R^{L3}$, $-N(R^{L3})_2$, $-NHC(=O)R^{L3}$, $-C(=O)N(R^{L3})_2$, $-NHC(=O)OR^{L3}$, $-OC(=O)N(R^{L3})_2$, $-NHC(=O)N(R^{L3})_2$, $-SR^{L3}$, $-S(=O)_2R^{L3}$, $-S(=O)_2OR^{L3}$, $-NHS(=O)_2R^{L3}$, or $-S(=O)_2N(R^{L3})_2$, and $R^{L3}$'s each independently represent a hydrogen atom, an alkyl group, an alkenyl group, an aryl group, or a monovalent heterocyclic group,

n's each independently represent an integer of 1 to 5, and

X's each independently represent an O atom, a S atom, or a Se atom.

In Formula (2), $L^1$ has the same definition and the same preferable aspect as those of $L^1$ in Formula (1).

In Formula (2), X has the same definition and the same preferable aspect as those of X in Formula (1).

Each of $R^5$ and $R^7$ in Formula (2) has the same definition and the same preferable aspect as $R^1$ to $R^4$ in Formula (1).

($R^6$ and $R^8$)

In Formula (2), $R^6$ and $R^8$ each independently represent an alkyl group, a halogen atom, an alkenyl group, an aryl group, a monovalent heterocyclic group, a nitro group, a cyano group, $-OR^{13}$, $-C(=O)R^{L3}$, $-C(=O)OR^{L3}$, $-OC(=O)R^{L3}$, $-N(R^{L3})_2$- $-NHC(=O)R^{L3}$, $-C(=O)N(R^{L3})_2$, $-NHC(=O)OR^{L3}$, $-OC(=O)N(R^{L3})_2$, $-NHC(=O)N(R^{L3})_2$, $-SR^{L3}$, $-S(=O)_2R^{L3}$, $-S(=O)_2OR^{L3}$, $-NHS(=O)_2R^{L3}$, or $-S(=O)_2N(R^{L3})_2$.

$R^{L3}$'s have the same definition and the same preferable aspect as $R^{L3}$ in the substituent that can be introduced into the aryl group in $R^1$ to $R^4$ in Formula (1).

From the viewpoint of improving light fastness and moist heat resistance, it is preferable $R^6$ and $R^8$ each independently includes a hydrogen-bonding group.

As the hydrogen-bonding group, for example. -OH, -C(=O)OH. -NHC(=O)$R^{L3}$, -C(=O)N($R^{L3}$)$_2$, -NHC(=O)O$R^{L3}$, -OC(=O)N($R^{L3}$)$_2$, -NHC(=O)N($R^{L3}$)$_2$, -NHS(=O)$_2$$R^{L3}$, or -S(=O)$_2$N($R^{L3}$)$_2$ is preferable, and -NHC(=O)O$R^{L4}$ is more preferable.

$R^{L3}$'s have the same definition and the same preferable aspect as $R^{L3}$ in the substituent that can be introduced into the aryl group in $R^1$ to $R^4$ in Formula (1).

$R^{L4}$ represents an alkyl group, preferably an alkyl group having 1 to 4 carbon atoms, and more preferably a methyl group.

From the viewpoint of ink stability, it is preferable that the infrared absorbing material represented by Formula (2) has one group represented by $R^6$ and one group represented by $R^8$. In this case, it is preferable that the bonding position of the group represented by $R^6$ or the group represented by $R^8$ is the meta position with respect to the bonding position of a barbituric acid ring in a benzene ring to which the group represented by $R^6$ or $R^8$ is bonded.

In Formula (2), it is preferable that at least one selected from the group consisting of $R^5$, $R^6$, $R^7$, and $R^8$ has a hydrogen-bonding group, and it is more preferable that at least two selected from the group consisting of $R^5$, $R^6$, $R^7$, and $R^8$ have a hydrogen-bonding group.

Further, it is preferable that one of $R^5$ or $R^7$ represent a hydrogen atom and $R^6$ and $R^8$ represent a hydrogen-bonding group.

In addition, from the viewpoint of further improving the rub resistance and infrared absorbing properties of the infrared absorbing image, it is preferable that $R^6$ and $R^8$ in Formula (2) each independently represent -NHC(=O)$R^{L3}$.

In this case, it is more preferable that both $R^5$ and $R^7$ in Formula (2) represent a hydrogen atom.

(n)

In Formula (2), n's each independently represent an integer of 1 to 5.

From the viewpoint of dispersion easiness, n's in Formula (2) each independently represent preferably an integer of 1 to 3, more preferably 1 or 2, and still more preferably 1.

(X)

In Formula (2), X's each independently represent an O atom, a S atom, or a Se atom.

The specific infrared absorbing material (that is, the infrared absorbing material represented by Formula (1)) can be synthesized with reference to, for example, methods described in JP2002-20648A and F. M. Harmer, "Heterocyclic Compounds Cyanine Dyes and Related Compounds" (John Wiley&Sons, New York, London, 1964).

Specific examples of the specific infrared absorbing material include compounds corresponding to the infrared absorbing material represented by Formula (1) among compounds described in paragraphs "0075" to "0135" of WO2018/034347A.

Hereinafter, specific examples of the specific infrared absorbing material (that is, the infrared absorbing material represented by Formula (1) (including the compound represented by Formula (2))) will be shown in a form where the respective substituents in Formula (1) are shown, and the specific infrared absorbing material is not limited to the following specific examples.

In the following specific examples, H represents a hydrogen atom.

| | Substituent in Formula (1) | | | | | | | |
|---|---|---|---|---|---|---|---|---|
| | $L^1$ | A in $L^1$ | $R^1$ | $R^2$ | $R^3$ | $R^4$ | X | $M^+$ |
| Compound 1-1 to 6 | L1-1 | A-1 | H | R-1 | H | R-1 | O | 1: $Li^+$, 2: $Na^+$, 3: $K^+$, 4: $Rb^+$, 5: $Cs^+$, 6: $Fr^+$ |
| Compound 2-1 to 6 | L1-1 | A-1 | H | R-4 | H | R-4 | O | |
| Compound 3-1 to 6 | L1-1 | A-1 | H | R-7 | H | R-7 | O | |
| Compound 4-1 to 6 | L1-1 | A-1 | H | R-11 | H | R-11 | O | |
| Compound 5-1 to 6 | L1-1 | A-1 | H | R-13 | H | R-13 | O | |
| Compound 6-1 to 6 | L1-1 | A-1 | H | R-18 | H | R-18 | O | |
| Compound 7-1 to 6 | L1-1 | A-1 | H | R-19 | H | R-19 | O | |
| Compound 8-1 to 6 | L1-1 | A-1 | H | R-51 | H | R-51 | O | |
| Compound 9-1 to 6 | L1-1 | A-1 | H | R-52 | H | R-52 | O | |
| Compound 10-1 to 6 | L1-1 | A-1 | H | R-53 | H | R-53 | O | |
| Compound 11-1 to 6 | L1-1 | A-1 | H | R-56 | H | R-56 | O | |
| Compound 12-1 to 6 | L1-1 | A-1 | H | R-57 | H | R-57 | O | |
| Compound 13-1 to 6 | L1-1 | A-1 | H | R-60 | H | R-60 | O | |
| Compound 14-1 to 6 | L1-1 | A-1 | H | R-61 | H | R-61 | O | |
| Compound 15-1 to 6 | L1-1 | A-1 | H | R-62 | H | R-62 | O | |
| Compound 16-1 to 6 | L1-1 | A-1 | H | R-63 | H | R-63 | O | |
| Compound 17-1 to 6 | L1-1 | A-1 | H | R-64 | H | R-64 | O | |
| Compound 18-1 to 6 | L1-1 | A-1 | H | R-79 | H | R-79 | O | |
| Compound 19-1 to 6 | L1-1 | A-2 | H | R-1 | H | R-1 | O | |
| Compound 20-1 to 6 | L1-1 | A-2 | H | R-4 | H | R-4 | O | |
| Compound 21-1 to 6 | L1-1 | A-2 | H | R-7 | H | R-7 | O | |
| Compound 22-1 to 6 | L1-1 | A-2 | H | R-11 | H | R-11 | O | |
| Compound 23-1 to 6 | L1-1 | A-2 | H | R-13 | H | R-13 | O | |
| Compound 24-1 to 6 | L1-1 | A-2 | H | R-18 | H | R-18 | O | |
| Compound 25-1 to 6 | L1-1 | A-2 | H | R-19 | H | R-19 | O | |
| Compound 26-1 to 6 | L1-1 | A-2 | H | R-51 | H | R-51 | O | |
| Compound 27-1 to 6 | L1-1 | A-2 | H | R-52 | H | R-52 | O | |
| Compound 28-1 to 6 | L1-1 | A-2 | H | R-53 | H | R-53 | O | |
| Compound 29-1 to 6 | L1-1 | A-2 | H | R-56 | H | R-56 | O | |
| Compound 30-1 to 6 | L1-1 | A-2 | H | R-57 | H | R-57 | O | |
| Compound 31-1 to 6 | L1-1 | A-2 | H | R-60 | H | R-60 | O | |

(continued)

| | Substituent in Formula (1) | | | | | | | |
|---|---|---|---|---|---|---|---|---|
| | $L^1$ | A in $L^1$ | $R^1$ | $R^2$ | $R^3$ | $R^4$ | X | $M^+$ |
| Compound 32-1 to 6 | L1-1 | A-2 | H | R-61 | H | R-61 | O | 1: $Li^+$, 2: $Na^+$, 3: $K^+$, 4: $Rb^+$, 5: Cs', 6: $Fr^+$ |
| Compound 33-1 to 6 | L1-1 | A-2 | H | R-62 | H | R-62 | O | |
| Compound 34-1 to 6 | L1-1 | A-2 | H | R-63 | H | R-63 | O | |
| Compound 35-1 to 6 | L1-1 | A-2 | H | R-64 | H | R-64 | O | |
| Compound 36-1 to 6 | L1-1 | A-2 | H | R-79 | H | R-79 | O | |
| Compound 37-1 to 6 | L1-1 | A-4 | H | R-1 | H | R-1 | O | |
| Compound 38-1 to 6 | L1-1 | A-4 | H | R-4 | H | R-4 | O | |
| Compound 39-1 to 6 | L1-1 | A-4 | H | R-7 | H | R-7 | O | |
| Compound 40-1 to 6 | L1-1 | A-4 | H | R-11 | H | R-11 | O | |
| Compound 41-1 to 6 | L1-1 | A-4 | H | R-13 | H | R-13 | O | |
| Compound 42-1 to 6 | L1-1 | A-4 | H | R-18 | H | R-18 | O | |
| Compound 43-1 to 6 | L1-1 | A-4 | H | R-19 | H | R-19 | O | |
| Compound 44-1 to 6 | L1-1 | A-4 | H | R-51 | H | R-51 | O | |
| Compound 45-1 to 6 | L1-1 | A-4 | H | R-52 | H | R-52 | O | |
| Compound 46-1 to 6 | L1-1 | A-4 | H | R-53 | H | R-53 | O | |
| Compound 47-1 to 6 | L1-1 | A-4 | H | R-56 | H | R-56 | O | |
| Compound 48-1 to 6 | L1-1 | A-4 | H | R-57 | H | R-57 | O | |
| Compound 49-1 to 6 | L1-1 | A-4 | H | R-60 | H | R-60 | O | |
| Compound 50-1 to 6 | L1-1 | A-4 | H | R-61 | H | R-61 | O | |
| Compound 51-1 to 6 | L1-1 | A-4 | H | R-62 | H | R-62 | O | |
| Compound 52-1 to 6 | L1-1 | A-4 | H | R-63 | H | R-63 | O | |
| Compound 53-1 to 6 | L1-1 | A-4 | H | R-64 | H | R-64 | O | |
| Compound 54-1 to 6 | L1-1 | A-4 | H | R-79 | H | R-79 | O | |
| Compound 55-1 to 6 | L1-1 | A-8 | H | R-1 | H | R-1 | O | |
| Compound 56-1 to 6 | L1-1 | A-8 | H | R-4 | H | R-4 | O | |
| Compound 57-1 to 6 | L1-1 | A-8 | H | R-7 | H | R-7 | O | |
| Compound 58-1 to 6 | L1-1 | A-8 | H | R-11 | H | R-11 | O | |
| Compound 59-1 to 6 | L1-1 | A-8 | H | R-13 | H | R-13 | O | |
| Compound 60-1 to 6 | L1-1 | A-8 | H | R-18 | H | R-18 | O | |
| Compound 61-1 to 6 | L1-1 | A-8 | H | R-19 | H | R-19 | O | |
| Compound 62-1 to 6 | L1-1 | A-8 | H | R-51 | H | R-51 | O | |
| Compound 63-1 to 6 | L1-1 | A-8 | H | R-52 | H | R-52 | O | |
| Compound 64-1 to 6 | L1-1 | A-8 | H | R-53 | H | R-53 | O | |
| Compound 65-1 to 6 | L1-1 | A-8 | H | R-56 | H | R-56 | O | |

(continued)

| | Substituent in Formula (1) | | | | | | | |
|---|---|---|---|---|---|---|---|---|
| | $L^1$ | A in $L^1$ | $R^1$ | $R^2$ | $R^3$ | $R^4$ | X | $M^+$ |
| Compound 66-1 to 6 | L1-1 | A-8 | H | R-57 | H | R-57 | 0 | 1: $Li^+$, 2: $Na^+$, 3: $K^+$, 4: $Rb^+$, 5: $Cs^+$, 6: $Fr^+$ |
| Compound 67-1 to 6 | L1-1 | A-8 | H | R-60 | H | R-60 | 0 | |
| Compound 68-1 to 6 | L1-1 | A-8 | H | R-61 | H | R-61 | 0 | |
| Compound 69-1 to 6 | L1-1 | A-8 | H | R-62 | H | R-62 | 0 | |
| Compound 70-1 to 6 | L1-1 | A-8 | H | R-63 | H | R-63 | 0 | |
| Compound 71-1 to 6 | L1-1 | A-8 | H | R-64 | H | R-64 | 0 | |
| Compound 72-1 to 6 | L1-1 | A-8 | H | R-79 | H | R-79 | 0 | |
| Compound 73-1 to 6 | L1-1 | A-39 | H | R-1 | H | R-1 | 0 | |
| Compound 74-1 to 6 | L1-1 | A-39 | H | R-4 | H | R-4 | 0 | |
| Compound 75-1 to 6 | L1-1 | A-39 | H | R-7 | H | R-7 | 0 | |
| Compound 76-1 to 6 | L1-1 | A-39 | H | R-11 | H | R-11 | 0 | |
| Compound 77-1 to 6 | L1-1 | A-39 | H | R-13 | H | R-13 | 0 | |
| Compound 78-1 to 6 | L1-1 | A-39 | H | R-18 | H | R-18 | 0 | |
| Compound 79-1 to 6 | L1-1 | A-39 | H | R-19 | H | R-19 | 0 | |
| Compound 80-1 to 6 | L1-1 | A-39 | H | R-51 | H | R-51 | 0 | |
| Compound 81-1 to 6 | L1-1 | A-39 | H | R-52 | H | R-52 | 0 | |
| Compound 82-1 to 6 | L1-1 | A-39 | H | R-53 | H | R-53 | 0 | |
| Compound 83-1 to 6 | L1-1 | A-39 | H | R-56 | H | R-56 | 0 | |
| Compound 84-1 to 6 | L1-1 | A-39 | H | R-57 | H | R-57 | 0 | |
| Compound 85-1 to 6 | L1-1 | A-39 | H | R-60 | H | R-60 | 0 | |
| Compound 86-1 to 6 | L1-1 | A-39 | H | R-61 | H | R-61 | 0 | |
| Compound 87-1 to 6 | L1-1 | A-39 | H | R-62 | H | R-62 | 0 | |
| Compound 88-1 to 6 | L1-1 | A-39 | H | R-63 | H | R-63 | 0 | |
| Compound 89-1 to 6 | L1-1 | A-39 | H | R-64 | H | R-64 | 0 | |
| Compound 90-1 to 6 | L1-1 | A-39 | H | R-79 | H | R-79 | 0 | |
| Compound 91-1 to 6 | L1-1 | A-42 | H | R-1 | H | R-1 | 0 | |
| Compound 92-1 to 6 | L1-1 | A-42 | H | R-4 | H | R-4 | 0 | |
| Compound 93-1 to 6 | L1-1 | A-42 | H | R-7 | H | R-7 | 0 | |
| Compound 94-1 to 6 | L1-1 | A-42 | H | R-11 | H | R-11 | 0 | |
| Compound 95-1 to 6 | L1-1 | A-42 | H | R-13 | H | R-13 | 0 | |
| Compound 96-1 to 6 | L1-1 | A-42 | H | R-18 | H | R-18 | 0 | |
| Compound 97-1 to 6 | L1-1 | A-42 | H | R-19 | H | R-19 | 0 | |
| Compound 98-1 to 6 | L1-1 | A-42 | H | R-51 | H | R-51 | 0 | |

| | Substituent in Formula (1) | | | | | | | |
|---|---|---|---|---|---|---|---|---|
| | $L^1$ | A in $L^1$ | $R^1$ | $R^2$ | $R^3$ | $R^4$ | X | $M^+$ |
| Compound 99-1 to 6 | L1-1 | A-42 | H | R-52 | H | R-52 | O | 1: $Li^+$, 2: $Na^+$, 3: $K^+$, 4: $Rb^+$, 5: $Cs^+$, 6: $Fr^+$ |
| Compound 100-1 to 6 | L1-1 | A-42 | H | R-53 | H | R-53 | O | |
| Compound 101-1 to 6 | L1-1 | A-42 | H | R-56 | H | R-56 | O | |
| Compound 102-1 to 6 | L1-1 | A-42 | H | R-57 | H | R-57 | O | |
| Compound 103-1 to 6 | L1-1 | A-42 | H | R-60 | H | R-60 | O | |
| Compound 104-1 to 6 | L1-1 | A-42 | H | R-61 | H | R-61 | O | |
| Compound 105-1 to 6 | L1-1 | A-42 | H | R-62 | H | R-62 | O | |
| Compound 106-1 to 6 | L1-1 | A-42 | H | R-63 | H | R-63 | O | |
| Compound 107-1 to 6 | L1-1 | A-42 | H | R-64 | H | R-64 | O | |
| Compound 108-1 to 6 | L1-1 | A-42 | H | R-79 | H | R-79 | O | |
| Compound 109-1 to 6 | L1-1 | A-1 | H | R-1 | H | R-1 | S | |
| Compound 110-1 to 6 | L1-1 | A-4 | H | R-35 | H | R-35 | O | |
| Compound 111-1 to 6 | L1-1 | A-4 | R-3 | R-3 | R-3 | R-3 | O | |
| Compound 112-1 to 6 | L1-2 | A-1 | H | R-1 | H | R-1 | O | |
| Compound 113-1 to 6 | L2-1 | A-1 | H | R-1 | H | R-1 | O | |
| Compound 114-1 to 6 | L3-1 | A-1 | H | R-1 | H | R-1 | O | |
| Compound 115-1 to 6 | L3-3 Z=Me | A-1 | H | R-1 | H | R-1 | O | |

The content of the specific infrared absorbing material is preferably 0.01 mass% to 5 mass%, more preferably 0.05 mass% to 2 mass%, and still more preferably 0.1 mass% to 1.5 mass% with respect to the total amount of the ink.

<Resin Particles>

The ink according to the embodiment of the present disclosure includes at least one kind of resin particles.

The resin particles are not particularly limited as long as they are particles including a resin, and are preferably particles consisting of a resin.

The shape of the resin particles is not particularly limited and may be an unstructured shape, a polyhedral shape, or a hollow shape. From the viewpoint of jettability in an ink jet method, it is preferable that the resin particles have a spherical shape.

Examples of the resin particles include particles of various resins including: a thermoplastic, thermosetting, or modified resin such as an acrylic resin, an epoxy resin, a polyurethane resin, a polyether resin, a polyamide resin, an unsaturated polyester resin, a phenol resin, a silicone resin, or a fluororesin, a polyvinyl resin such as vinyl chloride, vinyl acetate, polyvinyl alcohol, or polyvinyl butyral; a polyester resin such as an alkyd resin or a phthalic acid resin; an amino material such as a melamine resin, a melamine formaldehyde resin, an amino-alkyd co-condensate resin, or a urea resin; and a resin having an anionic group such as a copolymer or a mixture of the above-described resins.

Among the resins, the anionic acrylic resin can be obtained, for example, by polymerization of an acrylic monomer having an anionic group (anionic group-containing acrylic monomer) and another optional monomer that is copolymerizable with the anionic group-containing acrylic monomer in a solvent.

Examples of the anionic group-containing acrylic monomer include an acrylic monomer having one or more groups selected from the group consisting of a carboxy group, a sulfonate group, and a phosphonate group. In particular, an acrylic monomer having a carboxy group (for example, acrylic acid, methacrylic acid, crotonic acid, etacrylic acid, propylacrylic acid, isopropylacrylic acid, itaconic acid, or fumaric acid) is preferable, and acrylic acid or methacrylic acid is more preferable.

From the viewpoints of rub resistance and a dot shape, it is preferable that the resin particles are particles of an acrylic resin, a vinyl acetate resin, a styrene-butadiene resin, a vinyl chloride resin, a urethane resin, an acryl-styrene resin, a butadiene resin, a styrene resin, a crosslinked acrylic resin, a crosslinked styrene resin, or a polyethylene resin, it is more preferable that the resin particles are at least one kind of resin particles selected from the group consisting of

acrylic resin particles, urethane resin particles, polyethylene resin particles, and styrene-acrylic resin particles, and it is still more preferable that the resin particles are acrylic resin particles.

From the viewpoint of the stability (in particular, dispersion stability) of the ink, it is preferable that the resin particles are particles of a self-dispersing resin (self-dispersing resin particles).

Here, the self-dispersing resin refers to a water-insoluble polymer that can be dispersed in an aqueous medium due to a functional group (in particular, an acidic group or a salt thereof) in the polymer itself in a case where it is dispersed using a phase-transfer emulsification method in the absence of a surfactant.

Here, the dispersed state refers to both of an emulsified state (emulsion) in which a water-insoluble polymer in a liquid state is dispersed in an aqueous medium and a dispersed state (suspension) in which a water-insoluble polymer in a solid state is dispersed in an aqueous medium.

In the present disclosure, "water-insoluble" in the water-insoluble polymer represents that, in a case where the resin is mixed with water at 25°C, the amount of the resin to be dissolved in water is 10 mass% or lower in terms of the mass ratio with respect to the total amount of the resin to be mixed.

Examples of the particles of the self-dispersing resin include self-dispersing polymer particles described in paragraphs "0062" to "0076" of JP2016-188345A, paragraphs "0109" to "0140" of WO2013/180074A, and the like.

The resin in the resin particles is

more preferably an acrylic resin including at least one selected from the group consisting of a benzyl (meth)acrylate unit, a phenoxyethyl (meth)acrylate unit, and a cyclic aliphatic group-containing (meth)acrylate unit and a (meth)acrylic acid unit, and

still more preferably an acrylic resin including at least one selected from the group consisting of a benzyl (meth)acrylate unit, a phenoxyethyl (meth)acrylate unit, and a cyclic aliphatic group-containing (meth)acrylate unit, a (meth)acrylic acid unit, and an alkyl (meth)acrylate unit that has an alkyl group having 1 to 4 carbon atoms.

Here, the benzyl (meth)acrylate unit refers to a structural unit derived from benzyl (meth)acrylate, that is, a structural unit formed by polymerization of benzyl (meth)acrylate. The same shall be applied to other "units".

As the cyclic aliphatic group-containing (meth)acrylate unit, at least one selected from the group consisting of an alkyl (meth)acrylate that has a cycloalkyl group having 3 to 10 carbon atoms (for example, cyclohexyl (meth)acrylate), isobornyl (meth)acrylate, adamantyl (meth)acrylate, and dicyclopentanyl (meth)acrylate is preferable, and at least one selected from the group consisting of isobornyl (meth)acrylate, adamantyl (meth)acrylate, or dicyclopentanyl (meth)acrylate is more preferable.

In the resin in the resin particles,

the total content of the benzyl (meth)acrylate unit, the phenoxyethyl (meth)acrylate unit, and the cyclic aliphatic group-containing (meth)acrylate unit is preferably 20 mass% to 80 mass% and more preferably 30 mass% to 75 mass% with respect to the total amount of the resin dispersant.

In the resin in the resin particles,the total content of the benzyl (meth)acrylate unit, the phenoxyethyl (meth)acrylate unit, the cyclic aliphatic group-containing (meth)acrylate unit, and the alkyl (meth)acrylate that has an alkyl group having 1 to 4 carbon atoms is preferably 80 mass% to 98 mass%, more preferably 85 mass% to 97 mass%, and still more preferably 90 mass% to 95 mass% with respect to the total amount of the resin dispersant.

In the resin in the resin particles, the content of the (meth)acrylic acid unit is preferably 2 mass% to 20 mass%, more preferably 3 mass% to 15 mass%, and still more preferably 5 mass% to 10 mass% with respect to the total amount of the resin dispersant.

It is preferable that the resin in the resin particles has a neutralized acid group.

The resin particles formed of the resin having a neutralized acid group can be obtained, for example, by synthesizing a copolymer having an acid group and neutralizing at least a part of the acid group in the obtained copolymer.

Examples of the acid group before the neutralization include a carboxy group. Examples of the neutralized acid group include a salt of a carboxy group.

The neutralization can be performed, for example, using an alkali such as sodium hydroxide or potassium hydroxide in the process of manufacturing an aqueous dispersion of the resin particles.

Specific examples of the resin in the resin particles include a phenoxyethyl acrylate/methyl methacrylate/acrylic acid copolymer (50/45/5), a phenoxyethyl acrylate/benzyl methacrylate/isobutyl methacrylate/methacrylic acid copolymer (30/35/29/6), a phenoxyethyl methacrylate/isobutyl methacrylate/ methacrylic acid copolymer (50/44/6), a phenoxyethyl acrylate/methyl methacrylate/ethyl acrylate/acrylic acid copolymer (30/55/10/5), a benzyl methacrylate/isobutyl methacrylate/methacrylic acid copolymer (35/59/6), a styrene/phenoxyethyl acrylate/methyl methacrylate/acrylic acid copolymer (10/50/35/5), a benzyl acrylate/methyl methacrylate/acrylic acid copolymer (55/40/5), a phenoxyethyl methacrylate/benzyl acrylate/methacrylic acid copolymer (45/47/8), a styrene/phenoxyethyl acrylate/butyl methacrylate/acrylic

acid copolymer (5/48/40/7), a benzyl methacrylate/isobutyl methacrylate/cyclohexyl methacrylate/methacrylic acid copolymer (35/30/30/5), a phenoxyethyl acrylate/methyl methacrylate/butyl acrylate/methacrylic acid copolymer (12/50/30/8), a benzyl acrylate/isobutyl methacrylate/acrylic acid copolymer (93/2/5), a methyl methacrylate/methoxyethyl acrylate/benzyl methacrylate/acrylic acid copolymer (44/15/35/6), a styrene/butyl acrylate/acrylic acid copolymer (62/35/3), a methyl methacrylate/phenoxyethyl acrylate/acrylic acid copolymer (45/51/4), a methyl methacrylate/isobornyl methacrylate/methacrylic acid copolymer (20/72/8), a methyl methacrylate/isobornyl methacrylate/methacrylic acid copolymer (40/52/8), a methyl methacrylate/isobornyl methacrylate/methacrylic acid copolymer (48/42/10), a methyl methacrylate/isobornyl methacrylate/dicyclopentanyl methacrylate/methacrylic acid copolymer (20/62/10/8), and a methyl methacrylate/dicyclopentanyl methacrylate/methacrylic acid copolymer (20/72/8).

Numerical values in parentheses represent a mass ratio between copolymerization components.

In addition, specific examples of the resin in the resin particles include the respective copolymers in which at least a part of the carboxy group is neutralized.

(Acid Value)

From the viewpoint of dispersion stability and aggregating properties during the recording of an image, the acid value of the resin in the resin particles is preferably 25 mgKOH/g to 100 mgKOH/g, more preferably 30 mgKOH/g to 90 mgKOH/g, and still more preferably 35 mgKOH/g to 80 mgKOH/g.

The acid value can be measured using a method described in JIS (JIS K 0070:1992).

(Volume Average Particle Size)

From the viewpoint of improving ink jettability, the volume average particle size of the resin particles is preferably 1 μm or less, more preferably 125 nm or less, and still more preferably 100 nm or less.

In addition, from the viewpoint of ink stability, the volume average particle size of the resin particles is preferably 5 nm or more and more preferably 10 nm or more.

The volume average particle size and the particle size distribution of the resin particles can be measured with a dynamic light scattering method using a Nanotrac particle size distribution measuring apparatus.

As the Nanotrac particle size distribution measuring apparatus, UPA-EX150 (manufactured by Nikkiso Co., Ltd.) can be used.

In addition, the particle size distribution of the resin particles is not particularly limited, and the resin particles may have a wide particle size distribution or a monodispersed particle size distribution. In addition, a mixture of two or more kinds of resin particles may be used.

(Weight-Average Molecular Weight)

The weight-average molecular weight of the resin of the resin particles is preferably 5000 or higher and more preferably 10000 or higher.

In addition, the weight-average molecular weight of the resin of the resin particles is preferably 300000 or lower and more preferably 100000 or lower.

In the present disclosure, the number-average molecular weight and the weight-average molecular weight are values measured by gel permeation chromatography (GPC).

Specifically, in the GPC, HLC-8220GPC (manufactured by Tosoh Corporation) is used as a measuring device, three pieces of TSKgel Super Multipore HZ-H (4.6 mm ID ×15 cm, manufactured by Tosoh Corporation) are used as columns, and tetrahydrofuran (THF) is used as an eluent. In addition, the measurement can be used using a differential refractive index (RI) detector under measurement conditions of sample concentration: 0.45 mass%, flow rate: 0.35 ml/min, sample injection volume: 10 μl, and measurement temperature: 40°C. A calibration curve is obtained from 8 samples of "Standard sample, TSK standard, polystyrene": "F-40", "F-20", "F-4", "F-1", "A-5000", "A-2500", "A-1000", and "n-propylbenzene" (manufactured by Tosoh Corporation).

(Glass Transition Temperature)

From the viewpoint of rub resistance and ink stability, the glass transition temperature (Tg) of the resin of the resin particles is preferably 30°C to 230°C and more preferably 70°C to 230°C.

Tg is a value measured using a differential scanning calorimeter (DSC) EXSTAR 6220 (manufactured by SII Nanotechnology Inc.) under typical measurement conditions.

However, in a case where the measurement is difficult due to the decomposition of a resin or the like, calculated Tg calculated from the following calculation expression is applied. The calculated Tg is calculated from Expression (a).

$$1/Tg = \Sigma(Xi/Tgi) \ldots \qquad \text{Expression (a)}$$

Here, it is assumed that a polymer to be calculated is obtained by copolymerization of n types monomer components (i=1 to n). Xi represents a mass fraction ($\Sigma Xi = 1$) of an i-th monomer, and Tgi represents a glass transition temperature (absolute temperature) of a homopolymer of the i-th monomer. In this case, Σ represents the sum of i=1 to n. As the value of the glass transition temperature of the homopolymer of each of the monomer, a value described in Polymer Handbook(3rd Edition) (J.Brandrup, E.H.Immergut, (Wiley-Interscience, 1989)) is adopted.

(Content)

The ink according to the embodiment of the present disclosure may include one kind of resin particles or may include two or more kinds of resin particles.

From the viewpoint of improving rub resistance, ink stability, and ink jettability, the total content of the resin particles is preferably 1 mass% to 20 mass%, more preferably 2 mass% to 12 mass%, and still more preferably 3 mass% to 10 mass% with respect to the total amount of the ink according to the embodiment of the present disclosure.

In addition, from the viewpoint of improving light fastness, the content of the resin particles is preferably 60 mass% to 96 mass% with respect to the total content of the specific infrared absorbing material and the resin particles.

<Water-Soluble Organic Solvent>

The ink according to the embodiment of the present disclosure includes at least one water-soluble organic solvent.

The water-soluble organic solvent is not particularly limited, and a well-known water-soluble organic solvent in the field of the ink jet ink can be used.

In the present disclosure, "water-soluble" refers to a property in which 1 g or more of a substance is dissolved in 100 g of water at 25°C.

In the present disclosure, it is preferable that "water-soluble" refers to a property in which 5 g or more (more preferably 10 g or more) of a substance is dissolved in 100 g of water at 25°C.

From the viewpoint of further improving the drying properties of the ink applied to the substrate, it is preferable that the ink according to the embodiment of the present disclosure includes a water-soluble organic solvent L1 having a boiling point of 200°C or lower as a water-soluble organic solvent. In this case, the ink according to the embodiment of the present disclosure may include not only the water-soluble organic solvent L1 having a boiling point of 200°C or lower but also a water-soluble organic solvent having a boiling point of higher than 200°C.

From the viewpoint of further improving the drying properties of the ink applied to the substrate, a proportion of the water-soluble organic solvent L1 having a boiling point of 200°C or lower in the water-soluble organic solvents (that is, in all the water-soluble organic solvents in the ink) is preferably 70 mass% or higher, more preferably 80 mass% or higher, and still more preferably 90 mass% or higher.

The proportion of the water-soluble organic solvent L1 having a boiling point of 200°C or lower in the water-soluble organic solvents may be 100 mass%.

In the present disclosure, the boiling point refers to a boiling point at 1 atm (101325 Pa) or lower.

Examples of the water-soluble organic solvent L1 (that is, the water-soluble organic solvent having a boiling point of 200°C or lower) include propylene glycol (boiling point: 188°C), propylene glycol monomethyl ether (boiling point: 121°C), ethylene glycol (boiling point: 197°C), ethylene glycol monomethyl ether (boiling point: 124°C), propylene glycol monoethyl ether (boiling point: 133°C), ethylene glycol monoethyl ether (boiling point: 135°C), propylene glycol monopropyl ether (boiling point: 149°C), ethylene glycol monopropyl ether (boiling point: 151°C), propylene glycol monobutyl ether (boiling point: 170°C), ethylene glycol monobutyl ether (boiling point: 171°C), 2-ethyl-1-hexanol (boiling point: 187°C), dipropylene glycol monomethyl ether (boiling point: 188°C), diethylene glycol dimethyl ether (boiling point: 162°C), diethylene glycol diethyl ether (boiling point: 188°C), and dipropylene glycol dimethyl ether (boiling point: 175°C).

On the other hand, examples of the water-soluble organic solvent having a boiling point of higher than 200°C include glycerin (boiling point: 290°C), 1,2-hexanediol (boiling point: 223°C), 1,3-propanediol (boiling point: 213°C), diethylene glycol (boiling point: 245°C), diethylene glycol monobutyl ether (boiling point: 230°C), triethylene glycol (boiling point: 285°C), dipropylene glycol (boiling point: 232°C), tripropylene glycol (boiling point: 267°C), trimethylolpropane (boiling point: 295°C), 2-pyrrolidone (boiling point: 245°C), tripropylene glycol monomethyl ether (boiling point: 243°C), and triethylene glycol monomethyl ether (boiling point: 248°C).

The ink according to the embodiment of the present disclosure includes preferably a water-soluble organic solvent having a molecular weight of 500 or lower, more preferably a water-soluble organic solvent having a molecular weight of 200 or lower, and still more preferably a water-soluble organic solvent having a molecular weight of 100 or lower.

In addition, the ink according to the embodiment of the present disclosure includes a water-soluble organic solvent having a solubility parameter (SP value) of preferably 23 or higher and more preferably 25 or higher.

Examples of the organic solvent having a solubility parameter (SP value) of 23 or higher include propylene glycol (SP value: 26.7), diethylene glycol (SP value: 26.1), and dipropylene glycol (26).

The SP value described in the present disclosure is calculated using the Okitsu method ("Journal of the Adhesion Society of Japan" 29(5) (1993) by Toshinao Okitsu). Specifically, the SP value is calculated from the following expression. ΔF refers to a value described in the document.

$$\text{SP Value } (\delta) = \Sigma\Delta F \text{ (Molar Attraction Constants) / V (Molar Volume)}$$

In addition, the unit of the SP value in the present disclosure is $(cal/cm^3)^{1/2}$.

The content of the water-soluble organic solvent (in a case where the ink includes two or more water-soluble organic solvents, the total content thereof) is 10 mass% to 26 mass% with respect to the total amount of the ink according to the embodiment of the present disclosure.

The content of the water-soluble organic solvent being 10 mass% or higher contributes to the improvement of the jettability of the ink. The content of the water-soluble organic solvent is preferably 15 mass% or higher.

The content of the water-soluble organic solvent being 26 mass% or lower contributes to the improvement of the rub resistance of the infrared absorbing image. The content of the water-soluble organic solvent is preferably 24 mass% or lower.

<Water>

The ink according to the embodiment of the present disclosure includes water.

The content of water is preferably 50 mass% or higher, more preferably 60 mass% or higher with respect to the total amount of the ink.

The upper limit of the content of water is not particularly limited may be determined depending on the contents of other components, and is preferably 99 mass% or lower, more preferably 98 mass% or lower, and still more preferably 95 mass% or lower.

<Water-Soluble Organic Compound X1>

The ink according to the embodiment of the present disclosure includes at least one water-soluble organic compound X1.

As described above, the water-soluble organic compound X1 is a water-soluble organic compound having a melting point of 50°C or higher and a molecular weight of lower than 3000.

The water-soluble organic compound X1 has a melting point of 50°C or higher.

From this viewpoint, the water-soluble organic compound X1 is classified into the above-described water-soluble organic solvent.

The water-soluble organic compound X1 has water solubility and thus is dissolved in the ink. As a result, the viscosity of the ink is adjusted to be in a range suitable for a head or contributes to suppression of drying and solidification in the vicinity of a nozzle such that jettability can be improved.

On the other hand, the water-soluble organic compound X1 has a melting point of 50°C or higher, and thus remains in the infrared absorbing image formed by the ink. In a case where the residual amount of the water-soluble organic compound X1 in the infrared absorbing image is excessively large, the rub resistance of the infrared absorbing image may decrease. In the ink according to the embodiment of the present disclosure, by reducing the content of the water-soluble organic compound X1 to 8 mass% or lower, the residual amount of the water-soluble organic compound X1 in the infrared absorbing image is reduced, and a decrease in the rub resistance of the infrared absorbing image is suppressed.

Accordingly, in the ink according to the embodiment of the present disclosure, the jettability of the ink and the rub resistance of the infrared absorbing image are improved simultaneously.

The water-soluble organic compound X1 has a molecular weight of lower than 3000.

In a case where the water-soluble organic compound X1 has a molecular weight distribution, the molecular weight refers to the number-average molecular weight. The number-average molecular weight refers to a value measured by GPC. Detailed conditions of GPC are as described above.

The molecular weight of the water-soluble organic compound X1 being lower than 3000 contributes to the improvement of the jettability of the ink. In addition, in a case where the molecular weight of the water-soluble organic compound X1 is lower than 3000, the formation of the J-aggregate in the ink or the dispersibility is not likely to be inhibited.

Therefore, the molecular weight of the water-soluble organic compound X1 being lower than 3000 contributes to the improvement of the infrared absorbing properties of the image.

The molecular weight of the water-soluble organic compound X1 is preferably 400 or lower, more preferably 200 or lower, and still more preferably 100 or lower.

The lower limit of the molecular weight of the water-soluble organic compound X1 is, for example, 50.

The water-soluble organic compound X1 is not particularly limited as long as it is a compound that is water-soluble, has a melting point of 50°C or higher, and has a molecular weight of lower than 3000.

Examples of the water-soluble organic compound X1 include a polyhydric alcohol, a urea, a urea derivative, a saccharide, a saccharide derivative, and a hyaluronic acid having a melting point of 50°C or higher.

Examples of the polyhydric alcohol having a melting point of 50°C or higher include trimethylolpropane, xylitol, and sorbitol.

Examples of the urea derivative include a compound in which a hydrogen atom directly bonded to a nitrogen atom in the structure of urea is substituted with a substituent and a compound in which a hydrogen atom directly bonded to a nitrogen atom in the structure of thiourea is substituted with a substituent.

Specific examples of the urea derivative include N,N-dimethylurea, thiourea, ethylene urea, hydroxyethyl urea, hydroxybutyl urea, ethylenethio urea, diethylthio urea, phenyl urea, benzyl urea, N-ethyl-N'-phenyl urea, ethoxy phenyl urea, N-N'-diphenyl urea, N-N-diphenyl urea, tetraphenyl urea, and N-benzoyl urea.

Examples of the saccharide include a monosaccharide, a disaccharide, an oligosaccharide (including a trisaccharide and a tetrasaccharide), and a polysaccharide.

Specific examples of the saccharide include glucose, mannose, fructose, ribose, xylose, arabinose, galactose, aldonic acid, glucitol (sorbitol), maltose, cellobiose, lactose, sucrose, trehalose, and maltotriose.

Here, the polysaccharide refers to a saccharide in a broad sense and includes materials that are widely present in the nature, for example, alginic acid, $\alpha$-cyclodextrin, or cellulose.

Examples of the saccharide derivative include a reducing saccharide (for example, sugar alcohol), an oxidized saccharide (for example, aldonic acid, uronic acid, amino acid, or thiosugar).

Examples of the sugar alcohol include maltitol, sorbitol, and xylitol.

Examples of the hyaluronic acid include a hyaluronate.

In a case where the ink includes a hyaluronate, a commercially available sodium hyaluronate 1% aqueous solution (molecular weight: 350000) may be used as the material.

It is preferable that the water-soluble organic compound X1 includes at least one of urea or trimethylolpropane. As a result, the rub resistance and the infrared absorbing properties of the infrared absorbing material are further improved.

In a case where the water-soluble organic compound X1 includes at least one of urea or trimethylolpropane, the total content of urea and trimethylolpropane is preferably 30 mass% to 100 mass%, more preferably 50 mass% to 100 mass%, still more preferably 60 mass% to 100 mass%, and still more preferably 80 mass% to 100 mass% with respect to the total content of all the water-soluble organic compounds X1 in the ink.

As described above, the content of the water-soluble organic compound X1 (in a case where the ink includes two or more water-soluble organic solvents, the total content thereof) is 1 mass% to 8 mass% with respect to the total amount of the ink.

By adjusting the content of the water-soluble organic compound X1 to be 1 mass% or higher, the effect of the water-soluble organic compound X1 (that is, the improvement of the jettability of the ink) is exhibited. The content of the water-soluble organic compound X1 is preferably 2 mass% or higher and more preferably 3 mass% or higher.

By adjusting the content of the water-soluble organic compound X1 to be 8 mass% or lower, as described above, the residual amount of the water-soluble organic compound X1 in the infrared absorbing image is reduced, and thus a decrease in the rub resistance of the infrared absorbing image is suppressed.

Further, by adjusting the content of the water-soluble organic compound X1 to be 8 mass% or lower, the polarity of the solvent of the ink can be maintained to be high, which is advantageous for the formation of the J-aggregate in the ink. Therefore, the content of the water-soluble organic compound X1 being 8 mass% or lower contributes to the improvement of the infrared absorbing properties of the image.

The content of the water-soluble organic compound X1 is preferably 6 mass% or lower.

<Surfactant>

The ink according to the embodiment of the present disclosure includes at least surfactant.

As a result, the surface tension of the ink can be adjusted to be in a range of 18 mN/m to 30 mN/m.

As the surfactant, a compound having a structure that includes both a hydrophilic portion and a hydrophobic portion in a molecule can be effectively used, and any one of an anionic surfactant, a cationic surfactant, an amphoteric surfactant, a nonionic surfactant, or a betaine surfactant can also be used.

As the surfactant, from the viewpoint of the stability of the ink, an anionic surfactant or a nonionic surfactant is

preferable, and a nonionic surfactant is more preferable. In particular, an acetylenic glycol derivative (acetylenic glycol-based surfactant) is more preferable.

Examples of the acetylenic glycol-based surfactant include 2,4,7,9-tetramethyl-5-decyne-4,7-diol and alkylene oxide adduct of 2,4,7,9-tetramethyl-5-decyne-4,7-diol. At least one selected from the examples is preferable.

Examples of a commercially available product of the acetylenic glycol-based surfactant include SURFYNOL series such as SURFYNOL 104PG manufactured by Nissin Chemical Co., Ltd. and E series such as OLFINE E1010 manufactured by Nissin Chemical Co., Ltd.

As a surfactant other than the acetylenic glycol-based surfactant, a fluorine-based surfactant is preferable. Examples of the fluorine-based surfactant include an anionic surfactant, a nonionic surfactant, and a betaine surfactant. Among these, an anionic surfactant is more preferable. Examples of the anionic surfactant include: Capstone FS-63, Capstone FS-61, and Capstone FS-31 (manufactured by Dupont); FTERGENT 100, FTERGENT 110, and FTERGENT 150 (manufactured by Neos Co., Ltd.); and CHEMGUARD S-760P (manufactured by Chemguard Inc.).

In particular, it is preferable that the ink according to the embodiment of the present disclosure includes a fluorine-based surfactant. In this aspect, the surface tension of the ink can be more easily adjusted to be 30 mN/m or lower.

The content of the surfactant (in a case where two or more surfactants are included, the total content) in the ink according to the embodiment of the present disclosure is not particularly limited and is preferably 0.1 mass% or higher, more preferably 0.1 mass% to 10 mass%, and still more preferably 0.2 mass% to 3 mass% with respect to the total amount of the ink.

In addition, in a case where the ink according to the embodiment of the present disclosure includes an acetylenic glycol-based surfactant and a fluorine-based surfactant, a ratio of the content mass of the fluorine-based surfactant to the content mass of the acetylenic glycol-based surfactant (that is, a content mass ratio (fluorine-based surfactant/acetylenic glycol-based surfactant) is preferably 0.01 or higher, more preferably 0.01 to 1, still more preferably 0.05 to 1, still more preferably 0.05 to 0.5, and still more preferably 0.05 to 0.3.

In addition, in a case where the ink includes not only a fluorine-based surfactant but also a low-polarity solvent such as diethylene glycol monohexyl ether or ethylene glycol monohexyl ether, which is preferable from the viewpoint of reducing the surface tension of the ink.

<Water-Soluble Polymer Compound>

The ink according to the embodiment of the present disclosure may include at least one water-soluble polymer compound.

The water-soluble polymer compound is not particularly limited. For example, a natural hydrophilic polymer compound described in paragraphs "0021" and "0022" of JP2010-188661A or a synthetic hydrophilic polymer compound including a vinyl polymer such as polyvinyl alcohol, polyvinyl pyrrolidone, or polyvinyl methyl ether, an acrylic resin such as polyacrylamide, polyacrylic acid or an alkali metal salt thereof, or a water-soluble styrene-acrylic resin, a water-soluble styrene-maleic acid resin, a water-soluble vinyl naphthalene acrylic resin, a water-soluble vinyl naphthalene maleic acid resin, polyvinyl pyrrolidone, polyvinyl alcohol, an alkali metal salt of a β-naphthalene sulfonic acid formalin condensate, and a quaternary ammonium, or a polymer compound having a salt of a cationic functional group such as an amino group at a side chain can be used.

Among these, a well-known water-soluble polymer compound such as polyvinyl alcohol, polyacrylamide, polyvinyl pyrrolidone, polyethylene glycol, or hydroxypropyl methyl cellulose is preferable.

The weight-average molecular weight of the water-soluble polymer compound is not particularly limited and is, for example, 5000 to 100000, preferably 10000 to 80000 and more preferably 10000 to 50000.

In addition, in a case where the ink according to the embodiment of the present disclosure includes a water-soluble polymer compound, the content of the water-soluble polymer compound is preferably 0.1 mass% to 10 mass%, more preferably 0.1 mass% to 4 mass%, still more preferably 0.1 mass% to 2 mass%, and still more preferably 0.1 mass% to 1 mass% with respect to the total amount of the ink.

<Other Components>

Examples of the other components of the ink include additives such as an antifading agent, an emulsion stabilizer, a penetration enhancer, an ultraviolet absorber, a preservative, a fungicide, a pH adjuster, a surface tension adjuster, an antifoaming agent, a viscosity adjuster, a dispersant, a dispersion stabilizer, a rust inhibitor, or a chelating agent. Regarding the respective components, compounds described in paragraphs "0044" to "0050" of JP2008-144004A can be used.

<Colorant>

The ink according to the embodiment of the present disclosure may include a colorant (for example, a pigment or a dye). The colorant is not particularly limited, and well-known colorants in the field of an ink jet ink can be used.
From the viewpoint of the invisibility of the infrared absorbing image, it is preferable that the ink according to the embodiment of the present disclosure does not substantially include a colorant.
Specifically, the ink according to the embodiment of the present disclosure does not include a colorant, or in a case where the ink according to the embodiment of the present disclosure includes a colorant, the content of the colorant is preferably lower than 0.1 mass% (more preferably 0.05 mass% or lower) with respect to the total amount of the ink.

<Surface Tension of Ink>

In the ink according to the embodiment of the present disclosure, a surface tension (that is, a surface tension at 25°C) is 18 mN/m to 30 mN/m.
The surface tension of the ink according to the embodiment of the present disclosure is 18 mN/m or higher, which contributes to jettability. The surface tension of the ink according to the embodiment of the present disclosure is preferably 20 mN/m or higher and more preferably 21 mN/m or higher.
The surface tension of the ink according to the embodiment of the present disclosure being 30 mN/m or lower contributes to the improvement of the rub resistance and the improvement of the infrared absorbing properties in the infrared absorbing image (in particular, the improvement of the rub resistance). The surface tension of the ink according to the embodiment of the present disclosure is preferably 28 mN/m or lower and more preferably 25 mN/m or lower.
The surface tension of the ink according to the embodiment of the present disclosure at 25°C refers to a value that is measured under a condition of 25°C with a plate method using an Automatic Surface Tensiometer CBVP-Z (manufactured by Kyowa Interface Science Co., Ltd.).

<pH of Ink>

From the viewpoint of jettability, the pH of the ink according to the embodiment of the present disclosure is preferably 7 to 10 and more preferably 7.5 to 9.5.
In a case where the pH is in the above-described range, the dispersibility of the resin particles is excellent. Therefore, it is presumed that the dot shape of the infrared absorbing image and the ink jettability can be improved.
The pH of the ink is a value measured using a pH meter (Model Number: HM-31, manufactured by DKK-TOA Corporation) at 25°C.

<Viscosity>

The viscosity of the ink according to the embodiment of the present disclosure is preferably 0.5 mPa·s to 30 mPa·s, more preferably 2 mPa·s to 20 mPa·s, still more preferably 2 mPa·s to 15 mPa·s, and still more preferably 3 mPa·s to 10 mPa·s.
The viscosity is measured under a condition of 30°C using a viscometer (for example, VISOMETER TV-22 (manufactured by Toki Sangyo Co., Ltd.)).

<Maximum Absorption Wavelength>

In a case where a dry material is obtained from the ink according to the embodiment of the present disclosure, it is preferable that a maximum absorption wavelength is present in a range of 700 nm to 1200 nm.
From the viewpoint of the invisibility of the obtained recorded material, the maximum absorption wavelength is present more preferably in a range of 710 nm to 1200 nm, still more preferably in a range of 760 nm to 1200 nm, and still more preferably in a range of 800 nm to 1200 nm.
In a case where a dry material is obtained from the ink according to the embodiment of the present disclosure, by allowing the maximum absorption wavelength of the dry material to be present in a range of 700 nm to 1200 nm, the invisibility of the obtained infrared absorbing image and the readability thereof by a detector using infrared light are further improved.
In the present disclosure, the dry material of the ink is obtained by applying the ink to OK Top Coat Paper (manufactured by Oji Paper Co., Ltd.) at 7 to 10 pL, 600 dpi, and a halftone dot rate of 1 to 100% and heating and drying the ink with warm air at 100°C for 1 minute.
The maximum absorption wavelength of the dry material is obtained by measuring a reflection spectrum using a spectrophotometer UV-3100PC (manufactured by Shimadzu Corporation) including a 150mm φ large integrating

sphere attachment LISR-3100 (manufactured by Shimadzu Corporation).

From the viewpoints of the invisibility and readability of the obtained infrared absorbing image, it is preferable that the maximum absorption wavelength of the dry material of the ink according to the embodiment of the present disclosure in a range of 400 nm to 1200 nm is present in a range of 700 nm to 1200 nm.

By measuring an optical density in a range of 400 nm to 1200 nm using the same method of measuring the maximum absorption wavelength of the dry material, a value of the maximum absorption wavelength can be measured.

The optical density is measured using a spectrophotometer UV-3100PC (manufactured by Shimadzu Corporation) including a 150mm φ large integrating sphere attachment LISR-3100 (manufactured by Shimadzu Corporation).

<J-Aggregate>

From the viewpoint of the invisibility of the obtained infrared absorbing image. In the dry material of the ink according to the embodiment of the present disclosure, it is preferable that at least a part of the infrared absorbing material represented by Formula (1) forms a J-aggregate.

In general, a state where compounds are fixed to a specific space arrangement by a covalent bond, a coordinate bond, or a bonding strength such as various intermolecular forces (for example, a hydrogen bond, a van der Waals force, or a Coulomb force) is referred to as an aggregate (or associate) state. From the viewpoint of the absorption wavelength of the aggregate, an aggregate in which absorption shifts to a short wavelength side with respect to the monomer absorption will be referred to as "H-aggregate" (especially, the dimer will be referred to as "dimer"), and an aggregate in which absorption shifts to a long wavelength side with respect to the monomer absorption will be referred to as "J-aggregate".

The specific infrared absorbing material in a J-aggregate state forms a so-called a J-band, and thus shows a sharp absorption spectrum peak. The details of the aggregate and the J-band of the specific infrared absorbing material can be found in a document (for example, Photographic Science and Engineering Vol 18, No 323-335 (1974)).

A maximum absorption wavelength of the specific infrared absorbing material in a J-aggregate state shifts to a longer wavelength side than a maximum absorption wavelength of the specific infrared absorbing material in a solution state. Accordingly, whether the specific infrared absorbing material is in a J-aggregate state or a non-aggregate state can be determined by measuring the maximum absorption wavelength in 400 nm to 1200 nm.

In a case where a difference between the maximum absorption wavelength of the dry material in the present disclosure in a wavelength range of 700 nm to 1200 nm and an maximum absorption wavelength of a solution in which the specific infrared absorbing material in the ink is dissolved in N,N-dimethylformamide (DMF) nm is 30 nm or more, it can be determined that the specific infrared absorbing material in the dry material forms the J-aggregate.

From the viewpoint of improving the invisibility of the obtained infrared absorbing image, the difference is preferably 50 nm or more, more preferably 70 nm or more, and still more preferably 100 nm or more.

In addition, the specific infrared absorbing material may form a J-aggregate in the ink, or may form a J-aggregate in the infrared absorbing image without forming a J-aggregate in the ink while liquid droplets of the specific infrared absorbing material are moving to a substrate or after the liquid droplets arrive at the substrate.

Further, the entirety of the specific infrared absorbing material on the substrate does not need to form a J-aggregate, and the specific infrared absorbing material that forms a J-aggregate and the specific infrared absorbing material in a molecular dispersion state may be mixed.

As described above, it is preferable that at least a part of the specific infrared absorbing material in the ink according to the embodiment of the present disclosure forms a J-aggregate. As a result, the formability and the stability of the J-aggregate in the infrared absorbing image are further improved, and the infrared absorbing properties of the infrared absorbing image are further improved.

It is preferable that the specific infrared absorbing material forms an aggregate by being simply dissolved in water. In order to promote the formation of an aggregate in the ink or in the infrared absorbing image, the ink may include an amphoteric compound (the polymer compound such as gelatin, low molecular weight collagen, oligopeptide, or polyacrylic acid (JURYMER ET410, manufactured by Toagosei Co., Ltd.) included in the above-described water-soluble polymer compound or amino acid thereof), a salt (for example, an alkali earth metal salt such as barium chloride, strontium chloride, calcium chloride, or magnesium chloride, an alkali metal salt such as potassium chloride or sodium chloride, a group 13 metal salt such as aluminum chloride, an organic salt such as ammonium acetate, an organic intramolecular salt such as betaine, or a salt including an organic polycation or polyanion), an inorganic acid such as hydrochloric acid or sulfuric acid, an organic acid such as acetic acid or p-toluenesulfonic acid, an inorganic base such as potassium carbonate or sodium hydroxide, or an organic base such as trialkylamine or pyridine.

The content of the amphoteric compound is preferably 10 ppm to 50000 ppm (5 mass%) and more preferably 30 ppm to 20000 ppm (2 mass%) with respect to the total amount of the ink.

The content of the salt is preferably 10 ppm to 50000 ppm (5 mass%) and more preferably 30 ppm to 20000 ppm (2 mass%) with respect to the total amount of the ink.

The content of the acid and the base is preferably 10 ppm to 50000 ppm (5 mass%) and more preferably 30 ppm to 20000 ppm (2 mass%) with respect to the total amount of the ink.
In the present disclosure, ppm refers to ppm by mass (that is, mass ppm).

<Divalent Alkali Metal Element and Trivalent Group 13 Metal Element>

In the ink according to the embodiment of the present disclosure, it is preferable that the content of at least one of a divalent alkali earth metal element or a trivalent group 13 metal element is 10 ppm to 50000 ppm with respect to the total amount of the ink.
Examples of the divalent alkali earth metal include magnesium, calcium, strontium, barium, and radium.
Examples of the trivalent group 13 metal element include aluminum, gallium, indium, and thallium.
It is preferable that the divalent alkali earth metal element or the trivalent group 13 metal element is an element derived from the alkali earth metal salt or the group 13 metal salt.
From the viewpoint of the dispersion stability and jettability of the ink, the content of the divalent alkali metal element and the trivalent group 13 metal element is preferably 10 ppm to 50000 ppm (5 mass%), more preferably 10 ppm to 10000 ppm (1 mass%), still more preferably 10 ppm to 1000 ppm (0.1 mass%), and still more preferably 10 ppm to 100 ppm (0.01 mass%) with respect to the total amount of the ink.
In addition, the content of the divalent alkali metal element or the trivalent group 13 metal element is, as a molar ratio thereof to the specific infrared absorbing material, preferably 0.01 equivalents to 1 equivalent, more preferably 0.1 equivalents to 0.8 equivalents, and still more preferably 0.15 equivalents to 0.6 equivalents.
The molar ratio of the content of the divalent alkali metal element or the trivalent group 13 metal element to the specific infrared absorbing material being 0.01 equivalents represents that the molar amount of the divalent alkali metal element or the trivalent group 13 metal element/the molar amount of the specific infrared absorbing material is 0.01.
As the divalent alkali metal element or the trivalent group 13 metal element, one kind may be included, or two or more kinds may be included.
In a case where two or more divalent alkali metal elements or two or more trivalent group 13 metal elements are included, the content refers to the total content of the two or more divalent alkali metal elements or the two or more trivalent group 13 metal elements.
The content is determined by analyzing a solution in which the ink is diluted with N-methylpyrrolidone and the specific infrared absorbing material is completely dissolved using a plasma optical emission spectrometer (OPTIMA 7300DV, manufactured by PerkinElmer Co., Ltd.).
It is presumed that, in a case where the content of the divalent alkali metal element and the trivalent group 13 metal element is in the above-described range, a plurality of specific infrared absorbing materials in which a divalent or trivalent metal ion is negatively charged are bonded to each other and are partially crosslinked to each other to form a structure such that the dispersion stability of the ink is further improved.
In addition, it is presumed that, in a case where the content of the divalent alkali metal element and the trivalent group 13 metal element is in the above-described range, the amount of the crosslinked structure formed is appropriate and excessive aggregation of the specific infrared absorbing materials is suppressed such that the jettability of the ink is maintained.

<Method of Manufacturing Ink>

A method of manufacturing the ink according to the embodiment of the present disclosure is not particularly limited, and the ink composition can be manufactured (prepared) using a well-known method of manufacturing (preparing) an ink.
For example, the ink composition can be manufactured using a method of manufacturing an ink described in JP1993-148436A (JP-H5-148436A), JP1993-295312A (JP-H5-295312A), JP1995-97541A (JP-H7-97541A), JP1995-82515A (JP-H7-82515A), JP1995-118584A (JP-H7-118584A), JP1999-286637A (JP-H11-286637A), or JP1999-286637A (JP-H11-286637A).
As an ink mixing method, various well-known mixing and dispersing methods can be used without any particular limitation. Examples of the dispersion method include a stirring method using a three-one motor or dissolver, a medium dispersion method using media such as beads, and a dispersion method using ultrasonic waves.
In the ink manufacturing step, the content of the above-described specific infrared absorbing material is preferably 0.1 mass% to 5 mass% and more preferably 0.2 mass% to 3 mass% with respect to the total amount of the ink.

[Infrared Absorbing Image Forming Method]

An infrared absorbing image forming method according to the embodiment of the present disclosure (hereinafter,

also referred to as "forming method according to the embodiment of the present disclosure") includes a step of forming an infrared absorbing image by applying the ink according to the embodiment of the present disclosure to a substrate using an ink jet method (hereinafter, also referred to as "infrared absorbing image forming step").

Optionally, the infrared absorbing image forming method according to the embodiment of the present disclosure may further include other steps.

<Substrate>

The substrate on which the infrared absorbing image is to be formed is not particularly limited as long as an infrared absorbing image can be formed. Examples of the substrate include paper, cloth, wood, a metal plate, and a plastic film.

The paper is not particularly limited, and general printing paper or ink jet recording paper including cellulose as a major component, for example, so-called high-quality paper, coated paper, or art paper used in general offset printing or the like can be used.

In addition, as the substrate, an impermeable substrate can also be used. In a case where an impermeable substrate is used as the substrate, from the viewpoint of image formability, it is preferable that the method includes a step of applying a treatment liquid described below to the substrate.

"Impermeable" of the impermeable substrate used in the present disclosure represents that the absorption amount of water included in the ink is small or zero, and specifically refers to a property in which the absorption amount of water is 10.0 $g/m^2$ or less.

The impermeable substrate used in the present disclosure is not particularly limited, and examples thereof include a sheet-shaped substrate and a film-shaped substrate.

From the viewpoint of the productivity of the printed material, it is preferable that the impermeable substrate used in the present disclosure is a sheet-shaped or film-shaped impermeable substrate with which a roll can be formed by being wound.

Examples of the impermeable substrate include a metal (for example, an aluminum foil), a plastic film (for example, a polyvinyl chloride resin, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, or polyvinyl acetal), plastic, and glass.

In particular, a substrate including a thermoplastic resin such as polyvinyl chloride, polyethylene terephthalate, or polypropylene is preferable.

A surface treatment may be performed on the impermeable substrate.

Examples of the surface treatment include corona treatment, plasma treatment, frame treatment, heat treatment, abrasion treatment, light irradiation treatment (UV treatment), and flame treatment. However, the surface treatment is not limited to these examples. For example, in a case where the corona treatment is performed on the surface of the impermeable substrate in advance before applying the ink to form an image, the surface energy of the impermeable substrate increases, and the wetting of the surface of the impermeable substrate and the adhesion of the ink with the impermeable substrate are accelerated. The corona treatment can be performed, for example, using a corona master (PS-10S, manufactured by Shinko Electric & Instrumentation Co., Ltd.). Conditions of the corona treatment may be appropriately selected depending on cases such as the kind of the impermeable substrate or the composition of the ink. For example, the following treatment conditions may be adopted.

- Treatment voltage: 10 to 15.6 kV
- Treatment speed: 30 to 100 mm/s

In addition, a visible image may be formed on the substrate using an ink jet method or other well-known methods.

The visible image may be formed in a step of forming the visible image described below, or a substrate on which the visible image formed in the image forming method according to the embodiment of the present disclosure may be used.

<Infrared Absorbing Image Forming Step>

The infrared absorbing image forming step is a step of forming an infrared absorbing image by applying the ink according to the embodiment of the present disclosure to a substrate using an ink jet method.

According to this step, the ink can be selectively applied to the substrate, and a desired infrared absorbing image can be formed.

The infrared absorbing image which is formed in this step is not particularly limited, and an infrared absorbing image consisting of a plurality of component patterns (for example, dot patterns or line patterns), in other words, an

infrared absorbing image that is a set of a plurality of component patterns is preferable.

The diameter of the dot pattern is preferably 25 μm to 70 μm and more preferably 30 μm to 60 μm.

The ink jet method is not particularly limited and may be any one of well-known methods such as an electric charge control method of jetting ink using an electrostatic attraction force, a drop-on-demand method (pressure pulse method) using a vibration pressure of a piezoelectric element, an acoustic ink jet method of jetting ink using a radiation pressure by converting an electrical signal into an acoustic beam and irradiating the ink with the acoustic beam, or a thermal ink jet method (Bubble Jet (registered trade name)) of heating ink to form bubbles and using a pressure generated from the bubbles.

As the ink jet method, in particular, an ink jet method described in JP1988-59936A (JP-S54-59936A) can be preferably used, in which a rapid volume change occurs in the ink due to the action of thermal energy, and the ink is jetted from a nozzle due to a force generated by the stage change.

In addition, the ink jet method can also refer to a method described in paragraphs "0093" to 0105" of JP2003-306623A.

Examples of an ink jet head used in the ink jet method include: a shuttle type that performs recording using a short serial head while causing the head to scan a substrate in a width direction; and a line type that uses a line head in which recording elements are arranged corresponding to the entire region of one side of a substrate.

In the line type, pattern formation can be performed on the entire surface of a substrate by scanning the substrate in a direction perpendicular to a direction in which the recording elements are arranged, and a transport system such as a carriage that scans a short head is unnecessary.

In addition, the movement of the carriage and complex scanning control on the substrate are not necessary, and only the substrate moves. Therefore, an increase in the recording speed can be realized as compared to the shuttle type.

The image forming method according to the embodiment is applicable to the shuttle type or the line type but is preferably applicable to the line type.

From the viewpoint of obtaining a high-accuracy pattern, the amount of liquid droplets of the ink ejected from the ink jet head is preferably 1 pL (picoliters; hereinafter, the same shall be applied) to 20 pL and more preferably 1.5 pL to 10 pL.

In the infrared absorbing image formed in this step, the amount of the specific infrared absorbing material applied per unit area is preferably 0.0001 $g/m^2$ to 1.0 $g/m^2$ and more preferably 0.0001 $g/m^2$ to 0.5 $g/m^2$.

This step (infrared absorbing image forming step) may include a step of heating the ink applied to the substrate.

That is, the infrared absorbing image forming step may be a step of forming an infrared absorbing image by applying the ink according to the embodiment of the present disclosure to a substrate using an ink jet method and heating the applied the ink.

In a case where the infrared absorbing image forming step includes the heating step, it is presumed that a film of resin particles can be more effectively formed in the infrared absorbing image. As a result, the rub resistance of the infrared absorbing image is further improved.

Examples of a unit that heats the ink on the substrate include a well-known heating unit such as a heater, a well-known blowing unit such as a dryer, and a combination thereof.

Examples of a method of heating the ink include

a method of applying heat using a heater or the like from a side of a substrate opposite to an image-forming surface,
a method of blowing warm air or hot air to an image-forming surface of a substrate,
a method of applying heat using an infrared heater from an image-forming surface of a substrate or a side of the substrate opposite to the image-forming surface, and
a method including a combination thereof.

The heating temperature during the heating of the ink on the substrate is preferably 60°C or higher, more preferably 65°C or higher, and still more preferably 70°C or higher.

The upper limit of the heating temperature is not particularly limited and, for example, is preferably 150°C or lower.

The heating time during the heating of the ink on the substrate is not particularly limited and is preferably 1 second to 300 seconds and more preferably 1 second to 30 seconds.

<Step of Applying Treatment Liquid to Substrate (Treatment Liquid Applying Step)>

The forming method according to the embodiment of the present disclosure may include a step of applying a treatment liquid including an aggregating agent to the substrate before the infrared absorbing image forming step (hereinafter, also referred to as "treatment liquid applying step").

A preferable aspect of the treatment liquid will be described below.

In a case where the forming method according to the embodiment of the present disclosure includes the treatment liquid applying step, in the infrared absorbing image forming step, an infrared absorbing image is formed by applying the ink to at least a part of a region of the substrate to which the treatment liquid is applied.

In a case where the forming method according to the embodiment of the present disclosure includes the treatment liquid applying step, the component in the ink can be caused to aggregate in the infrared absorbing image forming step. Therefore, an infrared absorbing image having a higher image quality can be formed.

In a case where an impermeable substrate is used as the substrate and the forming method according to the embodiment of the present disclosure includes the treatment liquid applying step, the bleeding of the infrared absorbing image can be further suppressed.

The forming method according to the embodiment of the present disclosure includes the treatment liquid applying step, which is advantageous in the formability of the J-aggregate of the specific infrared absorbing material in the infrared absorbing image.

The treatment liquid can be applied to the substrate using a well-known method such as a coating method, an ink jet method, or a dipping method.

Examples of the coating method include a well-known coating method using a bar coater (for example, a wire bar coater), an extrusion die coater, an air doctor coater, a blade coater, a rod coater, a knife coater, a squeeze coater, a reverse roll coater, a gravure coater, or a flexo coater.

The details of the ink jet method are the same as those the ink jet method that is applicable to the infrared absorbing image forming step.

It is preferable that, in the treatment liquid applying step, the treatment liquid is applied to the substrate in a pattern image shape using an ink jet method.

As a result, the treatment liquid can be applied even to a substrate having high permeability or a substrate having unevenness, The formation of an aggregate of the coloring material in the ink using the treatment liquid can be accelerated, and an image having high infrared absorbing properties and high invisibility can be formed.

In addition, in the treatment liquid applying step, the substrate may be heated before the application of the treatment liquid.

Regarding the heating temperature, the temperature of the substrate is preferably 20°C to 50°C and more preferably 25°C to 40°C.

In the treatment liquid applying step, the treatment liquid may be heated and dried before the infrared absorbing image forming step and after the application of the treatment liquid.

Examples of a unit that heats and dries the treatment liquid include a well-known heating unit such as a heater, a well-known blowing unit such as a dryer, and a combination thereof.

Examples of a method of heating and drying the treatment liquid include

a method applying heat using a heater or the like to a surface of the substrate opposite to a surface to which the treatment liquid is applied,
a method of blowing warm air or hot air to the surface of the substrate to which the treatment liquid is applied;
a method applying heat using an infrared heater to the surface of the substrate to which the treatment liquid is applied or to a surface of the substrate opposite to the surface of the substrate to which the treatment liquid is applied, and
a method including a combination thereof.

The heating temperature during the heating and drying of the treatment liquid is preferably 35°C or higher and more preferably 40°C or higher.

The upper limit of the heating temperature is not particularly limited and is preferably 100°C, more preferably 90°C, and still more preferably 70°C.

The time of heating and drying is not particularly limited and is preferably 0.5 seconds to 60 seconds, more preferably 0.5 seconds to 20 seconds, and still more preferably 0.5 seconds to 10 seconds.

(Treatment Liquid)

-Aggregating Agent-

The treatment liquid includes the aggregating agent.

It is preferable that the aggregating agent is at least one selected from the group consisting of a polyvalent metal salt, an organic acid, an inorganic acid, a cationic compound, and a metal complex.

The details of each of the components will be described below.

The treatment liquid includes the aggregating agent such that the ink aggregates, and an image having high

image quality can be easily obtained.

-Organic Acid-

Examples of the organic acid include an organic compound having an acidic group.
Examples of the acidic group include a phosphate group, a phosphonate group, a phosphinate group, a sulfate group, a sulfonate group, a sulfinate group, and a carboxy group. From the viewpoint of the aggregation rate of the ink, the acidic group is preferably a phosphate group or a carboxy group and more preferably a carboxy group.
It is preferable that at least a part of the acidic group is dissociated in the treatment liquid.
As the organic compound having a carboxy group, for example, polyacrylic acid, acetic acid, glycolic acid, malonic acid, malic acid (preferably DL-malic acid), maleic acid, ascorbic acid, succinic acid, glutaric acid, fumaric acid, citric acid, tartaric acid, phthalic acid, 4-methylphthalic acid, lactic acid, sulfonic acid, orthophosphoric acid, pyrrolidone carboxylic acid, pyrone carboxylic acid, pyrrole carboxylic acid, furan carboxylic acid, pyridine carboxylic acid, coumaric acid, thiophene carboxylic acid, nicotinic acid, or a derivatives of the above-described compound, or a salt thereof is preferable. As the compound, one kind may be used alone, or two or more kinds may be used in combination.
As the organic compound having a carboxy group, from the viewpoint of the aggregation rate of the ink, a divalent or higher carboxylic acid (hereinafter, also referred to as "polycarboxylic acid") is preferable.
As the polycarboxylic acid, malonic acid, malic acid, maleic acid, succinic acid, glutaric acid, fumaric acid, tartaric acid, 4-methylphthalic acid, or citric acid is more preferable, and malonic acid, malic acid, glutaric acid, tartaric acid, or citric acid is still more preferable.
It is preferable that the pKa of the organic acid is low (for example, 1.0 to 5.0).
As a result, the surface charge of particles such as the pigment or the polymer particles in the ink in which dispersion is stabilized by a weakly acidic functional group such as a carboxy group decreases due to the contact with the organic acidic compound having a lower pKa such that the dispersion stability can be decreased.
As the organic acid included in the treatment liquid, an organic acid having a low pKa, a high solubility in water, and a valence of 2 or higher is preferable, and a divalent or trivalent acidic material having high buffer capacity in a pH range lower than the pKa of the functional group (for example, a carboxy group) that stabilizes the dispersion of the particles in the ink is more preferable.
In a case where an organic acid is used as the aggregating agent, the content of the organic acid is preferably 1 mass% to 20 mass%, more preferably 2 mass% to 15 mass%, and still more preferably 5 mass% to 10 mass% with respect to the total amount of the treatment liquid.

-Inorganic Acid-

The ink composition may include a compound such as sulfuric acid, hydrochloric acid, nitric acid, or phosphoric acid as the inorganic acid.
In a case where an inorganic acid is used as the aggregating agent, the content of the inorganic acid is preferably 1 mass% to 40 mass%, more preferably 2 mass% to 30 mass%, and still more preferably 5 mass% to 20 mass% with respect to the total amount of the treatment liquid.

-Polyvalent Metal Salt-

It is preferable that the polyvalent metal salt is formed of a divalent or higher polyvalent metal ion and an anion bonded to the polyvalent metal ion. In addition, it is preferable that the polyvalent metal salt is water-soluble.
Specific examples of the polyvalent metal ion include a divalent metal ion such as $Ca^{2+}$, $Cu^{2+}$, $Ni^{2+}$, $Mg^{2+}$, $Zn^{2+}$, or $Ba^{2+}$ and a trivalent metal ion such as $Al^{3+}$, $Fe^{3+}$, or $Cr^{3+}$. Examples of the anion include $Cl^-$, $NO_3^-$, $I^-$, $Br^-$, $ClO_3^-$, $SO_4^{2-}$, and a carboxylate ion.
From the viewpoint of the image quality of the obtained infrared absorbing image, a salt including $Ca^{2+}$ or $Mg^{2+}$ is preferable as the polyvalent metal salt.
In addition, as the polyvalent metal salt, a salt of a sulfate ion ($SO_4^{2-}$), a nitrate ion ($NO_3^-$), or a carboxylate ion ($RCOO^-$, R represents an alkyl group having 1 or more carbon atoms) is preferable.
It is preferable that the carboxylate ion is derived from a saturated aliphatic monocarboxylic acid having 1 to 6 carbon atoms or a carbocyclic monocarboxylic acid having 7 to 11 carbon atoms. Preferable examples of the saturated aliphatic monocarboxylic acid having 1 to 6 carbon atoms include formic acid, acetic acid, propionic acid, butyric acid, isobutyric acid, valeric acid, isovaleric acid, pivalic acid, and hexanoic acid. In particular, formic acid or acetic acid is preferable.
In a case where a polyvalent metal salt is used as the aggregating agent, the content of the polyvalent metal salt is preferably 1 mass% to 40 mass%, more preferably 2 mass% to 25 mass%, and still more preferably 5 mass% to

20 mass% with respect to the total amount of the treatment liquid according to the embodiment of the present disclosure.

-Cationic Compound-

As the cationic compound, for example, a primary, secondary, or tertiary amine salt compound is preferable. Examples of the amine salt compound include a compound of a hydrochloride or an acetate (for example, laurylamine, coconut amine, stearylamine, or rosinamine), a quaternary ammonium salt compound (for example, lauryl trimethyl ammonium chloride, cetyl trimethyl ammonium chloride, lauryl dimethyl benzyl ammonium chloride, benzyl tributyl ammonium chloride, or benzalkonium chloride), a pyridinium salt compound (for example, cetyl pyridinium chloride or cetyl pyridinium bromide), an imidazoline cationic compound (for example, 2-heptadecenyl-hydroxyethylimidazoline), and an ethylene oxide adduct of higher alkylamine (for example, dihydroxy ethyl stearylamine). In addition, a polyallylamine may be used.

As the polyallylamine or the polyallylamine derivative is not particularly limited, a well-known material can be appropriately selected and used, and examples thereof include a polyallylamine hydrochloride, a polyallylamine amide sulfate, an allylamine hydrochloride-diallylamine hydrochloride copolymer, an allylamine acetate-diallylamine acetate copolymer, an allylamine hydrochloride-dimethylallylamine hydrochloride copolymer, an allylamine-dimethylallylamine copolymer, a polydiallylamine hydrochloride, a polymethyldiallylamine hydrochloride, a polymethyldiallylamine amide sulfate, a polymethyldiallylamine acetate, a polydiallyldimethylammonium chloride, a diallylamine acetate-sulfur dioxide copolymer, a diallyl methyl ethyl ammonium ethyl sulfate-sulfur dioxide copolymer, a methyldiallylamine hydrochloride-sulfur dioxide copolymer, a diallyldimethylammonium chloride-sulfur dioxide copolymer, and a diallyldimethylammonium chloride-acrylamide copolymer.

In a case where the cationic compound is a polymer, it is preferable that the polymer is a water-soluble polymer.

As the polyallylamine or the polyallylamine derivative, a commercially available product can be used. For example, "PAA-HCL-01", "PAA-HCL-03", "PAA-HCL-05", "PAA-HCL-3L", "PAA-HCL-10L", "PAA-H-HCL", "PAA-SA", "PAA-01", "PAA-03", "PAA-05", "PAA-08", "PAA-15", "PAA-15C", "PAA-25", "PAA-H-10C", "PAA-D11-HCL", "PAA-D41-HCL", "PAA-D19-HCL" "PAS-21CL", "PAS-M-1L", "PAS-M-1", "PAS-22SA", "PAS-M-1A", "PAS-H-1L", "PAS-H-5L", "PAS-H-10L", "PAS-92", "PAS-92A", "PAS-J-81L", "PAS-J-81" (trade names, manufactured by Nittobo Medical Co.,Ltd.), "HIMO Neo-600", "HIMOLOC Q-101", "HIMOLOC Q-311", "HIMOLOC Q-501", and "HIMAX SC-505", (trade names, manufactured by HYMO Co., Ltd.) can be used.

In a case where a cationic compound is used as the aggregating agent, the content of the cationic compound is preferably 1 mass% to 40 mass%, more preferably 2 mass% to 25 mass%, and still more preferably 5 mass% to 20 mass% with respect to the total amount of the treatment liquid.

-Metal Complex-

The metal complex refers to a compound in which a ligand is coordinated to a metal ion such as a zirconium ion, a titanium ion, or an aluminum ion.

As the metal complex, commercially available metal complexes may be used.

In addition, various organic ligands, in particular, various multidentate ligands capable of forming a metal chelate catalyst are commercially available. Therefore, as the metal complex, a metal complex prepared using a commercially available organic ligand and a metal in combination may be used.

Examples of the metal complex include zirconium tetraacetylacetonate (for example, "ORGATIX ZC-150" manufactured by Matsumoto Fine Chemical Co. Ltd.), zirconium monoacetylacetonate (for example, "ORGATIX ZC-540" manufactured by Matsumoto Fine Chemical Co. Ltd.), zirconium bisacetylacetonate (for example, "ORGATIX ZC-550" manufactured by Matsumoto Fine Chemical Co. Ltd.), zirconium monoethylacetoacetate (for example, "ORGATIX ZC-560" manufactured by Matsumoto Fine Chemical Co. Ltd.), zirconium acetate (for example, "ORGATIX ZC-115" manufactured by Matsumoto Fine Chemical Co. Ltd.), titanium diisopropoxy bis(acetylacetonate) (for example, "ORGATIX TC-100" manufactured by Matsumoto Fine Chemical Co. Ltd.), titanium tetraacetylacetonate (for example, "ORGATIX TC-401" manufactured by Matsumoto Fine Chemical Co. Ltd.), titanium dioctyloxy bis(octyleneglycolate) (for example, "ORGATIX TC-200" manufactured by Matsumoto Fine Chemical Co. Ltd.), titanium diisopropoxy bis(ethyl acetoacetate) (for example, "ORGATIX TC-750" manufactured by Matsumoto Fine Chemical Co. Ltd.), zirconium tetraacetylacetonate (for example, "ORGATIX ZC-700" manufactured by Matsumoto Fine Chemical Co. Ltd.), zirconium tributoxymonoacetylacetonate (for example, "ORGATIX ZC-540" manufactured by Matsumoto Fine Chemical Co. Ltd.), zirconium monobutoxy acetylacetonate bis(ethyl acetoacetate) (for example, "ORGATIX ZC-570" manufactured by Matsumoto Fine Chemical Co. Ltd.), zirconium dibutoxy bis(ethyl acetoacetate) (for example, "ORGATIX ZC-580" manufactured by Matsumoto Fine Chemical Co. Ltd.), aluminum trisacetylacetonate (for example, "ORGATIX AL-80" manufactured by Matsumoto Fine Chemical Co. Ltd.), titanium lactate ammonium salts (for example, "ORGATIX TC-300" manufactured by Matsumoto Fine Chemical Co. Ltd.), titanium lactate (for example, "ORGATIX TC-310, 315" manufactured by Matsumoto Fine

Chemical Co. Ltd.), titanium triethanolaminate (for example, "ORGATIX TC-400" manufactured by Matsumoto Fine Chemical Co. Ltd.), and a zirconyl chloride compound "ORGATIX ZC-126" (manufactured by Matsumoto Fine Chemical Co. Ltd.).

Among these, titanium lactate ammonium salts (for example, "ORGATIX TC-300" manufactured by Matsumoto Fine Chemical Co. Ltd.), titanium lactate (for example, "ORGATIX TC-310, 315" manufactured by Matsumoto Fine Chemical Co. Ltd.), titanium triethanolaminate (for example, "ORGATIX TC-400" manufactured by Matsumoto Fine Chemical Co. Ltd.), or a zirconyl chloride compound ("ORGATIX ZC-126" manufactured by Matsumoto Fine Chemical Co. Ltd.) is preferable.

-Water-

It is preferable that the treatment liquid includes water.

The content of water is preferably 50 mass% or higher, more preferably 60 mass% or higher, and still more preferably 70 mass% or higher with respect to the total amount of the treatment liquid.

The upper limit of the content of water with respect to the total amount of the treatment liquid is appropriately determined depending on the amount of the other components such as the aggregating agent. The upper limit of the content of water with respect to the total amount of the treatment liquid is preferably 95 mass% or lower, more preferably 90 mass% or lower, and still more preferably 85 mass% or lower.

-Water-Soluble Organic Solvent-

The treatment liquid may include at least one water-soluble organic solvent.

As the water-soluble organic solvent, a well-known water-soluble organic solvent can be used without any particular limitation.

Examples of the water-soluble organic solvent include: a glycol such as glycerin, 1,2,6-hexanetriol, trimethylolpropane, ethylene glycol, propylene glycol, diethylene glycol, triethylene glycol, tetraethylene glycol, pentaethylene glycol, or dipropylene glycol; a polyhydric alcohol, for example, an alkanediol such as 2-butene-1,4-diol, 2-ethyl-1,3-hexanediol, 2-methyl-2,4-pentanediol, 1,2-octanediol, 1,2-hexanediol, 1,2-pentanediol, or 4-methyl-1,2-pentanediol; and a saccharide, a sugar alcohol, a hyaluronic acid, an alkyl alcohol having 1 to 4 carbon atoms, a glycol ether, 2-pyrrolidone, or N-methyl-2-pyrrolidone described in paragraph "0116" of JP2011-42150A.

In particular, from the viewpoint of suppressing the peeling of an image, polyalkylene glycol or a derivative is preferable, and at least one selected from diethylene glycol monoalkyl ether, triethylene glycol monoalkyl ether, dipropylene glycol, tripropylene glycol monoalkyl ether, polyoxypropylene glyceryl ether, or polyoxyethylene polyoxypropylene glycol is more preferable.

In a case where the treatment liquid includes the water-soluble organic solvent, the content of the water-soluble organic solvent is preferably 3 mass% to 20 mass% and more preferably 5 mass% to 15 mass% with respect to the total amount of the treatment liquid from the viewpoint of application properties.

-Surfactant-

The treatment liquid may include at least one surfactant.

The surfactant can be used as a surface tension adjuster or an antifoaming agent.

Examples of the surface tension adjuster or the antifoaming agent include a nonionic surfactant, a cationic surfactant, an anionic surfactant, and a betaine surfactant. In particular, from the viewpoint of the aggregation rate of the ink, an anionic surfactant is preferable.

The anionic surfactant can be appropriately selected from well-known anionic surfactants. For example, a sulfate, a sulfonate, a phosphate, a fatty acid salt, and a formalin condensate. Examples of a cation for forming a salt include an ammonium ion, a triethanolamine ion, and a metal cation. Among these cations, a monovalent metal cation is more preferable, and a sodium ion or a potassium ion is still more preferable.

Examples of the surfactant include compounds described as surfactants in pp. 37 to 38 of JP1976-157636A (JP-S59-157636A) and Research Disclosure No. 308119 (1989). In addition, for example, fluorine (fluorinated alkyl) surfactants or silicone surfactants described in JP2003-322926A, JP2004-325707A, and JP2004-309806A can also be used.

The content of the surfactant may be appropriately adjusted such that the surface tension of the treatment liquid is in a range described below.

-Other Additives-

The treatment liquid may optionally include components other than the above-described component.

Examples of the other components that may be included in the treatment liquid include well-known additives such as a solid wetting agent, colloidal silica, an inorganic salt, an antifading agent, an emulsion stabilizer, a penetration enhancer, an ultraviolet absorber, a preservative, a fungicide, a pH adjuster, a viscosity adjuster, a rust inhibitor, or a chelating agent.

-Physical Properties of Treatment Liquid-

From the viewpoint of the aggregation rate of the ink, the pH of the treatment liquid at 25°C is preferably 0.1 to 3.5.

In a case where the pH of the treatment liquid is 0.1 or higher, the graininess of the substrate is further reduced, and the adhesiveness of an image area is further improved.

In a case where the pH of the treatment liquid is 3.5 or lower, the aggregation rate is further improved, coalescence of dots (ink dots) of the ink on the substrate is further suppressed, and the graininess of the image is further reduced.

The pH (25°C) of the treatment liquid is more preferably 0.2 to 2.0.

From the viewpoint of the aggregation rate of the ink, the viscosity of the treatment liquid is preferably in a range of 0.5 mPa·s to 30 mPa·s, more preferably in a range of 1 mPa·s to 20 mPa·s, still more preferably in a range of 2 mPa·s to 15 mPa·s, and still more preferably in a range of 2 mPa·s to 10 mPa·s.

The viscosity of the treatment liquid is measured using VISOMETER TV-22 (manufactured by Toki Sangyo Co., Ltd.) under a condition of 25°C.

The surface tension of the treatment liquid at 25°C is preferably 60 mN/m or lower, more preferably 20 mN/m to 50 mN/m, and still more preferably 30 mN/m to 45 mN/m.

In a case where the surface tension of the treatment liquid is in the above-described range, the adhesiveness between the substrate and the treatment liquid is improved.

The surface tension of the treatment liquid is measured with a plate method using an Automatic Surface Tensiometer CBVP-Z (manufactured by Kyowa Interface Science Co., Ltd.).

<Step of forming Visible Image>

The image forming method according to the embodiment of the present disclosure may further include a step of forming the visible image.

In the present disclosure, the visible image refers to an image that can be seen by eyes, and is preferably an image that is formed using an ink other than the ink according to the embodiment of the present disclosure (for example, a colored ink including a colorant).

The step of forming the visible image is not particularly limited, and examples thereof include a step of forming an image using a well-known printing method such as printing using an ink jet method, screen printing, gravure printing, or flexographic printing.

The image forming method according to the embodiment of the present disclosure may include the step of forming the visible image before or after the step of forming the infrared absorbing image.

<Step of forming Overcoat Layer>

The image forming method according to the embodiment of the present disclosure may further include a step of forming an overcoat layer after the step of forming the infrared absorbing image.

Examples of a method of forming the overcoat layer include a method of applying an overcoat layer-forming composition including the same resin particles as those included in the ink according to the embodiment of the present disclosure to the image formed in the step of forming the infrared absorbing image and heating the overcoat layer-forming composition.

(Overcoat Layer-Forming Composition)

It is preferable that the overcoat layer-forming composition includes the same resin particles as the resin particles in the ink according to the embodiment of the present disclosure and/or a polymer compound other than the resin particles in the ink according to the embodiment of the present disclosure.

In addition, it is preferable that the overcoat layer-forming composition includes the same water-soluble organic solvent as that of the resin particles included in the ink according to the embodiment of the present disclosure, a surfactant, and water. Further, it is preferable that the overcoat layer-forming composition includes, as other components, additives

such as an antifading agent, an emulsion stabilizer, a penetration enhancer, an ultraviolet absorber, a preservative, a fungicide, a pH adjuster, a surface tension adjuster, an antifoaming agent, a viscosity adjuster, a dispersant, a dispersion stabilizer, a rust inhibitor, or a chelating agent.

The components included in the overcoat layer-forming composition have the same definitions and the same preferable aspects as those of the components included in the ink according to the embodiment of the present disclosure.

(Method of applying Overcoat Layer-Forming Composition)

A method of applying the overcoat layer-forming composition is not particularly limited, and examples thereof include a coating method such as spray coating or a coating roller and a method of application, dipping, or the like using an ink jet method. Among these, an ink jet method is preferable.

The application of the overcoat layer-forming composition using an ink jet method can be performed using the same method as the ink jet method in the step of forming the infrared absorbing image described above.

(Heating Method)

By heating the overcoat layer-forming composition formed on the infrared absorbing image, for example, a film is formed using the resin particles in the overcoat layer-forming composition to form the overcoat layer. During this heating, drying may be performed.

In addition, a heating method in the step of forming the overcoat layer can be performed using the same method as the heating method in the above-described step of heating the ink.

<Step of forming Protective Film>

The image forming method according to the embodiment of the present disclosure may further include a method of forming a protective film after the step of forming the infrared absorbing image.

The protective film is not particularly limited, and a protective film in which a transmittance at a maximum absorption wavelength of the infrared absorbing image in a wavelength range of 700 nm to 1200 nm is 50% or higher is preferable.

Examples of a material of the protective film include a resin and glass.

A method of forming the protective film is not particularly limited, and examples thereof include a method of disposing the protective film on the infrared absorbing image and a method of bonding the protective film using a well-known bonding method. Examples of the well-known bonding method include a method using an adhesive and a laminating method.

[Recorded Material]

A recorded material according to the embodiment of the present disclosure includes: a substrate; and an infrared absorbing image that is a dry material of the ink according to the embodiment of the present disclosure.

In the present disclosure, "drying" refers to volatilizing and removing at least a part of water or a water-soluble organic solvent in the ink, and a material obtained by drying the ink refers to "dry material".

It is preferable that the recorded material according to the embodiment of the present disclosure is a recorded material obtained using the infrared absorbing image forming method according to the embodiment of the present disclosure.

<Substrate>

The substrate in the recorded material according to the embodiment of the present disclosure is the same as the substrate in the infrared absorbing image forming method according to the embodiment of the present disclosure, and a preferable aspect thereof is also the same.

<Infrared Absorbing Image>

The infrared absorbing image in the recorded material according to the embodiment of the present disclosure is a dry material of the ink according to the embodiment of the present disclosure.

A method of obtaining the dry material using the ink according to the embodiment of the present disclosure is not particularly limited, and the dry material can be obtained using the above-described infrared absorbing image forming method.

In addition, a maximum absorption wavelength of the infrared absorbing image in the recorded material according to the present disclosure is present preferably in a range of 700 nm to 1200 nm, more preferably in a range of 710 nm to 1200 nm, still more preferably in a range of 760 nm to 1200 nm, and still more preferably in a range of 800 nm to 1200 nm.
The maximum absorption wavelength is measured using the same method as the method of measuring the maximum absorption wavelength of the dry material of the ink according to the embodiment of the present disclosure.
In addition, from the viewpoints of the invisibility and readability of the infrared absorbing image, it is preferable that a maximum absorption wavelength of the infrared absorbing image in the recorded material according to the embodiment of the present disclosure in a range of 400 nm to 1200 nm is present in a range of 700 nm to 1200 nm.
The maximum absorption wavelength is measured using the same method as the method of measuring the maximum absorption wavelength of the dry material of the ink according to the embodiment of the present disclosure.
From the viewpoint of the invisibility of the infrared absorbing image, it is preferable that an optical density (OD) of the infrared absorbing image in the recorded material according to the embodiment of the present disclosure at 450 nm is 1/7 or lower of an optical density of the infrared absorbing image at a maximum absorption wavelength. It is more preferable the optical density is 1/8 or lower of the optical density at the maximum absorption wavelength, and it is still more preferable the optical density is 1/9 or lower of the optical density at the maximum absorption wavelength.
In addition, from the viewpoint of readability, the optical density of the infrared absorbing image at the maximum absorption wavelength is preferably 0.1 or higher, more preferably 0.3 or higher, and still more preferably 0.5 or higher.
The optical density is measured using the same method as the method of measuring the optical density of the dry material of the ink according to the embodiment of the present disclosure.
In the infrared absorbing image in the recorded material according to the embodiment of the present disclosure, the content of the specific infrared absorbing material per unit area is preferably 0.0001 g/$m^2$ to 1.0 g/$m^2$ and more preferably 0.0001 g/$m^2$ to 0.5 g/$m^2$.

<Visible Image>

The recorded material according to the embodiment of the present disclosure may include a visible image.
The visible image may be disposed between the substrate and the infrared absorbing image or may be disposed above the substrate and the infrared absorbing image.
The details of the visible image in the recorded material according to the embodiment of the present disclosure is the same as those of the visible image in the step of the visible image in the above-described image forming method according to the embodiment of the present disclosure, and a preferable aspect thereof is also the same.

<Overcoat Layer>

The recorded material according to the embodiment of the present disclosure may include an overcoat layer.
It is preferable that the overcoat layer is disposed above the substrate and the infrared absorbing image, and in a case where the recorded material includes the visible image, it is preferable that the overcoat layer is disposed above the substrate, the visible image, and the infrared absorbing image.
The details of the overcoat layer in the recorded material according to the embodiment of the present disclosure is the same as those of the overcoat layer in the step of the overcoat layer in the above-described image forming method according to the embodiment of the present disclosure, and a preferable aspect thereof is also the same.

<Protective Film>

The recorded material according to the embodiment of the present disclosure may include a protective film.
It is preferable that the protective film is disposed above the substrate and the infrared absorbing image, and in a case where the recorded material includes the visible image, it is preferable that the protective film is disposed above the substrate, the visible image, and the infrared absorbing image.
The details of the protective film in the recorded material according to the embodiment of the present disclosure is the same as those of the protective film in the step of the protective film in the above-described image forming method according to the embodiment of the present disclosure, and a preferable aspect thereof is also the same.

(Method of reading Infrared Absorbing Image)

A method of reading the infrared absorbing image in the recorded material according to the embodiment of the present disclosure includes a step of reading the infrared absorbing image that is a dry material of the ink according to the present disclosure or the infrared absorbing image in the recorded material according to the present disclosure.

<Step of Reading Infrared Absorbing Image>

A method of reading the infrared absorbing image is not particularly limited, and a well-known method can be used.
For example, a method of reading the infrared absorbing image by irradiating the infrared absorbing image with infrared light from an oblique direction and reading reflected light using an optical receiver provided in the vicinity of an infrared output portion to determine whether or not absorption of infrared light is present.
As a light source used for reading the infrared absorbing image, for example, a laser or a light emitting diode (LED) is used.
As a wavelength used for reading the infrared absorbing image, a wavelength in a range of 700 nm to 1,200 nm is preferable. As a wavelength used for reading the infrared absorbing image, for example, a wavelength of 850 nm that is a wavelength for a general LED is preferable.

Examples

Hereinafter, Examples of the present disclosure will be shown, and the present disclosure is not limited to the following Examples.
Hereinafter, unless specified otherwise, "part(s)" and "%" represent "part(s) by mass" and "mass%", respectively.
Hereinafter, as the water, ultrapure water was used.

[Example 1]

<Preparation of Ink>

(Preparation of Specific Infrared Absorbing Material Dispersion A)

2 parts by mass of the specific infrared absorbing material was added to 98 parts by mass of ultrapure water, and the solution was dispersed using a beads mill for 3 hours to obtain a specific infrared absorbing material dispersion A.
As the specific infrared absorbing material, a compound 1-1 in the above-described specific example was used.

(Preparation of Resin Particles A-1)

Methyl ethyl ketone (540.0 g) was charged into a 2 L three-neck flask equipped with a mechanical stirrer, a thermometer, a reflux cooling pipe, and a nitrogen gas introduction pipe and was heated to 75°C. While maintaining the reaction vessel internal temperature at 75°C, a mixed solution consisting of methyl methacrylate (108 g), isobornyl methacrylate (388.8 g), methacrylic acid (43.2 g), methyl ethyl ketone (108 g), and "V-601" (manufactured by Fujifilm Wako Pure Chemical Corporation; 2.1 g) was added dropwise at a constant speed until the dropwise addition was completed after 2 hours. After completion of the dropwise addition, a solution consisting of "V-601" (1.15 g) and methyl ethyl ketone (15.0 g) was added, and the solution was stirred at 75°C for 2 hours. Further, a solution consisting of "V-601" (0.54 g) and methyl ethyl ketone (15.0 g) was added, and the solution was stirred at 75°C for 2 hours. Next, the solution was heated to 85°C, and was further stirred for 2 hours. As a result, a resin solution of a methyl methacrylate/isobornyl methacrylate/methacrylic acid copolymer (=20/72/8 [mass ratio]) copolymer was obtained.
In the obtained copolymer, the weight-average molecular weight (Mw) was 60000, the acid value was 54.2 mgKOH/g, and the glass transition temperature was 124°C.
Next, the resin solution (588.2 g) was weighed, isopropanol (165 g) and 1 mol/L of a sodium hydroxide aqueous solution (120.8 ml) were added, and the reaction vessel internal temperature was increased to 80°C. Next, distilled water (718 g) was added dropwise at a rate of 20 ml/min and was water-dispersed. Next, under the atmospheric pressure, the reaction vessel internal temperature was held at 80°C for 2 hours, was held at 85°C for 2 hours, and was held at 90°C for 2 hours to distill off the solvent. Further, the internal pressure of the reaction vessel was reduced, and isopropanol, methyl ethyl ketone, and distilled water were distilled off. As a result, an aqueous dispersion of resin particles A-1 (a solid content concentration of 25.0 mass%) was obtained.

(Preparation of Ink)

The specific infrared absorbing material dispersion A, the aqueous dispersion of the resin particles A-1, and components other than the compound 1-1 and the resin particles A-1 were mixed to obtain an ink having the following composition.

-Composition of Ink-

- Compound 1-1 [specific infrared absorbing material]
  ... 0.8 mass%
- Propylene glycol (manufactured by Fujifilm Wako Pure Chemical Corporation) [Water-Soluble Organic Solvent]
  ... 20 mass%
- Urea [water-soluble organic compound X1]
  ... 5 mass%
- Polyvinylpyrrolidone (dispersant)
  ... 0.2 mass%
- OLFINE E1010 (manufactured by Nissin Chemical Co., Ltd.) [acetylenic surfactant]
  ... 1 mass%
- Capstone FS63 (manufactured by DuPont) [fluorine-based surfactant concentration: 35%]
  ... 0.014 mass% [0.005 mass% as the amount of the fluorine-based surfactant (solid content)]
- Resin particles A-1
  ... 6 mass% (as the solid content of the resin particles)
- SNOWTEX (registered trade name) XS (trade name, colloidal silica, concentration of solid contents: 20 mass%, volume average particle size: 5 nm, manufactured by Nissan Chemical Industries Ltd.)
  ... 0.28 mass% [0.056 mass% as the amount of solid contents]
- Water
  ... Remainder with respect to 100 mass% of the total amount

<Evaluation>

The following evaluation was performed using the ink.
The results are shown in Table 1.

[Rub Resistance of Infrared Absorbing Image]

The ink was charged into an ink cartridge provided in an ink jet recording device (DMP-2831, manufactured by Fujifilm Composition), was applied to coated paper (OK TOP COAT) at a halftone dot rate of 100% under conditions of 600 dpi × 600 dpi (dots per inch) and a droplet amount of 10 pl, and was dried with warm air at 100°C for 1 minute. As a result, an infrared absorbing image was formed on the coated paper.
The infrared absorbing image formed on the coated paper was slowly rubbed twice with a paperweight wound around the coated paper at a load of 55 g/$cm^2$ for an rubbing operation. After the rubbing operation, the infrared absorbing image was observed by visual inspection and using an IR microscope (a microscope with a portable digital colorimeter function, HandyScope, manufactured by Spectra Co-Op, wavelength of IR light source: 783 nm). Based on the observation result, the rub resistance of the infrared absorbing image was evaluated according to the following evaluation standards.
In the following evaluation standards, the highest rank for the rub resistance of the infrared absorbing image was A.

-Evaluation Standards of Rub Resistance of Infrared Absorbing Image-

A: after the rubbing operation, substantially no scratch was observed on the surface of the infrared absorbing image
B: after the rubbing operation, the surface of the infrared absorbing image was slightly damaged, and the area of a region where the infrared absorbing image was scraped such that an underlayer was seen was lower than 30%
C: after the rubbing operation, a region where the infrared absorbing image was scraped such that an underlayer was seen was observed, and the area of this region was 30% or higher and lower than 50% with respect to the total area of the infrared absorbing image
D: after the rubbing operation, a region where the infrared absorbing image was scraped such that an underlayer was seen was observed, and the area of this region was 50% or higher with respect to the total area of the infrared absorbing image

[Infrared Absorbing Properties of Infrared Absorbing Image]

The ink was charged into an ink cartridge provided in an ink jet recording device (DMP-2831, manufactured by Fujifilm Composition), dots were applied to coated paper (OK TOP COAT) at a halftone dot rate of 4% under conditions of 600 dpi × 600 dpi (dots per inch) and a droplet amount of 10 pl, and was dried with warm air at 100°C for 1 minute. As a result, an infrared absorbing image (dot image) was formed on the coated paper.
The infrared absorbing image (dot image) formed on the coated paper was observed using a microscope Handy Scope (manufactured by Spectra Co-op) with a portable digital color measurement function in an IR image observation mode.
Based on the observation result, the infrared absorbing properties of the infrared absorbing image were evaluated according to the following evaluation standards.
In the following evaluation standards, the highest rank for the infrared absorbing properties of the infrared absorbing image was A.

-Evaluation Standards of Infrared Absorbing Properties of Infrared Absorbing Image-

A: the dots of the infrared absorbing image can be clearly seen
B: the dot of the infrared absorbing image are sparse but can be detected
C: the density of the dots of the infrared absorbing image is low, and there is a problem in practice

[Examples 2 to 68 and Comparative Examples 1 to 6]

In the preparation of the ink, the same operation as that of Example 1 was performed, except that the kind and amount of the specific infrared absorber, the kind and amount of the water-soluble organic compound X1, the amount (presence or absence) of the acetylenic glycol-based (AG-based) surfactant, and the kind and amount of the fluorine-based (F-based) surfactant were changed as shown in Tables 1 to 3.
Results thereof are as shown in Tables 1 to 3.

-Description of Tables 1 to 3-

The amount of each of the components refers to the content (mass%) thereof with respect to the total amount of the ink.
"Remainder" in the column "water" refers to the remainder adjusted such that the total amount was 100 mass%.
In the column "Kind" of the specific infrared absorbing material, the number such as "1-1" or "2-2" represents the number of the compound in the above-described specific examples.
Abbreviations in Tables 1 to 3 are as described below.

PG: propylene glycol (manufactured by Fujifilm Wako Pure Chemical Corporation)
TMP: trimethylolpropane (manufactured by Tokyo Chemical Industry Co., Ltd.)
EGmHE: ethylene glycol monohexyl ether (manufactured by Tokyo Chemical Industry Co., Ltd.)
DEGmHE: diethylene glycol monohexyl ether (manufactured by Tokyo Chemical Industry Co., Ltd.)
AG-based: acetylenic glycol-based surfactant
F-based: fluorine-based surfactant
FS31: Capstone FS31 (manufactured by DuPont) [fluorine-based surfactant]
FS63: Capstone FS63 (manufactured by DuPont) [fluorine-based surfactant]

The details of the following components are as follows.

Sucrose: sucrose manufactured by Fujifilm Wako Pure Chemical Corporation
Galactooligosaccharide: galactooligosaccharide manufactured by Fujifilm Wako Pure Chemical Corporation

[Table 1]

| | Specific Infrared Absorbing Material | | Water-Soluble Organic Solvent | | | | Water-Soluble Organic Compound X1 | | | Dispersant | Surfactant | | | | Resin Particles | Colloidal Silica | Water | Surface Tension (mN/m) | Evaluation Result | |
|---|---|---|---|---|---|---|---|---|---|---|---|---|---|---|---|---|---|---|---|---|
| | | | | | | | | | | | AG-based | F-based | | Amount Ratio (F-based/AG-based) | | | | | Rub Resistance | Infrared Absorbing Properties |
| | Kind | Amount (%) | Kind | Amount (%) | Kind | Amount (%) | Kind | Molecular Weight | Amount (%) | Amount (%) | Amount (%) | Kind | Amount (%) | | Amount (%) | Amount (%) | | | | |
| Example 1 | 1-1 | 0.8 | PG | 20 | - | - | Urea | 60 | 5 | 0.2 | 1 | FS63 | 0.005 | 0.005 | 6 | 0.056 | Remainder | 27 | B | A |
| Example 2 | 2-2 | 0.8 | PG | 20 | - | - | Urea | 60 | 5 | 0.2 | 1 | FS63 | 0.01 | 0.01 | 6 | 0.056 | Remainder | 24 | A | A |
| Example 3 | 2-3 | 0.5 | PG | 20 | - | - | Urea | 60 | 5 | 0.2 | 1 | FS63 | 0.01 | 0.01 | 6 | 0.056 | Remainder | 24 | A | A |
| Example 4 | 3-1 | 0.5 | PG | 20 | - | - | TMP | 134 | 5 | 0.2 | 1 | FS63 | 0.02 | 0.02 | 6 | 0.056 | Remainder | 22 | A | A |
| Example 5 | 3-2 | 0.5 | PG | 20 | - | - | TMP | 134 | 5 | 0.2 | 1 | FS63 | 0.015 | 0.015 | 6 | 0.056 | Remainder | 23 | A | A |
| Example 6 | 3-3 | 0.5 | PG | 20 | - | - | TMP | 134 | 5 | 0.2 | 1 | FS63 | 0.015 | 0.015 | 6 | 0.056 | Remainder | 23 | A | A |
| Example 7 | 4-1 | 0.5 | PG | 20 | - | - | TMP | 134 | 5 | 0.2 | 1 | FS63 | 0.015 | 0.015 | 6 | 0.056 | Remainder | 23 | A | A |
| Example 8 | 5-2 | 0.5 | PG | 20 | - | - | TMP | 134 | 5 | 0.2 | 1 | FS63 | 0.015 | 0.015 | 6 | 0.056 | Remainder | 23 | A | A |
| Example 9 | 6-3 | 0.5 | PG | 20 | - | - | TMP | 134 | 5 | 0.2 | 1 | FS63 | 0.015 | 0.015 | 6 | 0.056 | Remainder | 23 | A | A |
| Example 10 | 7-4 | 0.5 | PG | 20 | - | - | TMP | 134 | 5 | 0.2 | 1 | FS63 | 0.015 | 0.015 | 6 | 0.056 | Remainder | 23 | A | A |
| Example 11 | 8-5 | 0.5 | PG | 20 | - | - | TMP | 134 | 5 | 0.2 | 1 | FS63 | 0.015 | 0.015 | 6 | 0.056 | Remainder | 23 | A | A |
| Example 12 | 9-6 | 0.5 | PG | 20 | - | - | TMP | 134 | 5 | 0.2 | 1 | FS63 | 0.015 | 0.015 | 6 | 0.056 | Remainder | 23 | A | A |
| Example 13 | 10-1 | 0.5 | PG | 20 | - | - | TMP | 134 | 5 | 0.2 | 1 | FS63 | 0.015 | 0.015 | 6 | 0.056 | Remainder | 23 | A | A |
| Example 14 | 11-2 | 0.5 | PG | 20 | - | - | TMP | 134 | 5 | 0.2 | 1 | FS63 | 0.015 | 0.015 | 6 | 0.056 | Remainder | 23 | A | A |
| Example 15 | 12-3 | 0.5 | PG | 20 | - | - | TMP | 134 | 5 | 0.2 | 1 | FS63 | 0.015 | 0.015 | 6 | 0.056 | Remainder | 23 | A | A |
| Example 16 | 13-4 | 0.5 | PG | 20 | - | - | TMP | 134 | 5 | 0.2 | 1 | FS63 | 0.015 | 0.015 | 6 | 0.056 | Remainder | 23 | A | A |
| Example 17 | 14-5 | 0.5 | PG | 20 | - | - | TMP | 134 | 5 | 0.2 | 1 | FS63 | 0.015 | 0.015 | 6 | 0.056 | Remainder | 23 | A | A |
| Example 18 | 15-6 | 0.5 | PG | 20 | - | - | TMP | 134 | 5 | 0.2 | 1 | FS63 | 0.015 | 0.015 | 6 | 0.056 | Remainder | 23 | A | A |
| Example 19 | 16-1 | 0.5 | PG | 20 | - | - | TMP | 134 | 5 | 0.2 | 1 | FS63 | 0.015 | 0.015 | 6 | 0.056 | Remainder | 23 | A | A |
| Example 20 | 17-2 | 0.5 | PG | 20 | - | - | TMP | 134 | 5 | 0.2 | 1 | FS63 | 0.015 | 0.015 | 6 | 0.056 | Remainder | 23 | A | A |
| Example 21 | 18-3 | 0.5 | PG | 20 | - | - | TMP | 134 | 5 | 0.2 | 1 | FS63 | 0.015 | 0.015 | 6 | 0.056 | Remainder | 23 | A | A |
| Example 22 | 19-4 | 0.5 | PG | 20 | - | - | TMP | 134 | 5 | 0.2 | 1 | FS63 | 0.015 | 0.015 | 6 | 0.056 | Remainder | 23 | A | A |
| Example 23 | 20-5 | 0.5 | PG | 20 | - | - | Urea | 60 | 5 | 0.2 | 1 | FS63 | 0.02 | 0.02 | 6 | 0.056 | Remainder | 22 | A | A |
| Example 24 | 22-6 | 0.5 | PG | 20 | - | - | Urea | 60 | 5 | 0.2 | 1 | FS63 | 0.02 | 0.02 | 6 | 0.056 | Remainder | 22 | A | A |
| Example 25 | 24-1 | 0.5 | PG | 20 | - | - | Urea | 60 | 5 | 0.2 | 1 | FS63 | 0.02 | 0.02 | 6 | 0.056 | Remainder | 22 | A | A |

[Table 2]

| | Specific Infrared Absorbing Material | | Water-Soluble Organic Solvent | | | | Water-Soluble Organic Compound X1 | | | Dispersant | Surfactant | | | | Resin Particles | Colloidal Silica | Water | Surface Tension (mN/m) | Evaluation Result | |
|---|---|---|---|---|---|---|---|---|---|---|---|---|---|---|---|---|---|---|---|---|
| | | | | | | | | | | | AG-based | F-based | | Amount Ratio (F-based/AG-based) | | | | | Rub Resistance | Infrared Absorbing Properties |
| | Kind | Amount (%) | Kind | Amount (%) | Kind | Amount (%) | Kind | Molecular Weight | Amount (%) | Amount (%) | Amount (%) | Kind | Amount (%) | | Amount (%) | Amount (%) | | | | |
| Example 26 | 26-2 | 0.5 | PG | 20 | - | - | Urea | 60 | 5 | 0.2 | 1 | FS63 | 0.02 | 0.02 | 6 | 0.056 | Remainder | 22 | A | A |
| Example 27 | 28-1 | 0.5 | PG | 20 | - | - | Urea | 60 | 5 | 0.2 | 1 | FS63 | 0.02 | 0.02 | 6 | 0.056 | Remainder | 22 | A | A |
| Example 28 | 30-2 | 0.5 | PG | 20 | - | - | Urea | 60 | 5 | 0.2 | 1 | FS63 | 0.02 | 0.02 | 6 | 0.056 | Remainder | 22 | A | A |
| Example 29 | 32-3 | 0.5 | PG | 20 | - | - | Urea | 60 | 5 | 0.2 | 1 | FS63 | 0.02 | 0.02 | 6 | 0.056 | Remainder | 22 | A | A |
| Example 30 | 34-4 | 0.5 | PG | 20 | - | - | Urea | 60 | 5 | 0.2 | 1 | FS63 | 0.02 | 0.02 | 6 | 0.056 | Remainder | 22 | A | A |
| Example 31 | 36-5 | 0.5 | PG | 20 | - | - | Urea | 60 | 5 | 0.2 | 1 | FS63 | 0.02 | 0.02 | 6 | 0.056 | Remainder | 22 | A | A |
| Example 32 | 38-6 | 0.5 | PG | 20 | - | - | Urea | 60 | 5 | 0.2 | 1 | FS63 | 0.02 | 0.02 | 6 | 0.056 | Remainder | 22 | A | A |
| Example 33 | 40-1 | 0.5 | PG | 20 | - | - | Urea | 60 | 5 | 0.2 | 1 | FS63 | 0.02 | 0.02 | 6 | 0.056 | Remainder | 22 | A | A |
| Example 34 | 43-2 | 0.5 | PG | 20 | - | - | Urea | 60 | 5 | 0.2 | 1 | FS63 | 0.02 | 0.02 | 6 | 0.056 | Remainder | 22 | A | A |
| Example 35 | 45-3 | 0.5 | PG | 20 | - | - | Urea | 60 | 5 | 0.2 | 1 | FS63 | 0.02 | 0.02 | 6 | 0.056 | Remainder | 22 | A | A |
| Example 36 | 47-4 | 0.5 | PG | 20 | - | - | Urea | 60 | 5 | 0.2 | 1 | FS63 | 0.02 | 0.02 | 6 | 0.056 | Remainder | 22 | A | A |
| Example 37 | 49-5 | 0.5 | PG | 20 | - | - | Urea | 60 | 5 | 0.2 | 1 | FS63 | 0.02 | 0.02 | 6 | 0.056 | Remainder | 22 | A | A |
| Example 38 | 51-6 | 0.5 | PG | 20 | - | - | Sucrose | 342 | 5 | 0.2 | 1 | FS63 | 0.02 | 0.02 | 6 | 0.056 | Remainder | 22 | B | B |
| Example 39 | 53-1 | 0.5 | PG | 20 | - | - | Sucrose | 342 | 5 | 0.2 | 1 | FS63 | 0.02 | 0.02 | 6 | 0.056 | Remainder | 22 | B | B |
| Example 40 | 55-2 | 0.5 | PG | 20 | - | - | Sucrose | 342 | 5 | 0.2 | 1 | FS63 | 0.02 | 0.02 | 6 | 0.056 | Remainder | 22 | B | B |
| Example 41 | 57-3 | 0.5 | PG | 20 | - | - | Sucrose | 342 | 5 | 0.2 | 1 | FS63 | 0.02 | 0.02 | 6 | 0.056 | Remainder | 22 | B | B |
| Example 42 | 59-4 | 0.5 | PG | 20 | - | - | Sucrose | 342 | 5 | 0.2 | 1 | FS63 | 0.02 | 0.02 | 6 | 0.056 | Remainder | 22 | B | B |
| Example 43 | 61-5 | 0.5 | PG | 20 | - | - | Sucrose | 342 | 5 | 0.2 | 1 | FS63 | 0.02 | 0.02 | 6 | 0.056 | Remainder | 22 | B | B |
| Example 44 | 63-6 | 0.5 | PG | 20 | - | - | TMP | 134 | 3 | 0.2 | 1 | FS63 | 0.02 | 0.02 | 6 | 0.056 | Remainder | 22 | A | A |
| Example 45 | 65-1 | 0.5 | PG | 20 | - | - | TMP | 134 | 3 | 0.2 | 1 | FS63 | 0.02 | 0.02 | 6 | 0.056 | Remainder | 22 | A | A |
| Example 46 | 67-2 | 0.5 | PG | 20 | - | - | TMP | 134 | 3 | 0.2 | 1 | FS63 | 0.02 | 0.02 | 6 | 0.056 | Remainder | 22 | A | A |
| Example 47 | 69-1 | 0.5 | PG | 20 | - | - | TMP | 134 | 3 | 0.2 | 1 | FS63 | 0.02 | 0.02 | 6 | 0.056 | Remainder | 22 | A | A |
| Example 48 | 71-2 | 0.5 | PG | 20 | - | - | TMP | 134 | 3 | 0.2 | 1 | FS63 | 0.02 | 0.02 | 6 | 0.056 | Remainder | 22 | A | A |
| Example 49 | 73-3 | 0.5 | PG | 20 | - | - | TMP | 134 | 3 | 0.2 | 1 | FS63 | 0.02 | 0.02 | 6 | 0.056 | Remainder | 22 | A | A |
| Example 50 | 75-4 | 0.5 | PG | 20 | - | - | TMP | 134 | 3 | 0.2 | 1 | FS63 | 0.02 | 0.02 | 6 | 0.056 | Remainder | 22 | A | A |

[Table 3]

| | Specific Infrared Absorbing Material | | Water-Soluble Organic Solvent | | | | Water-Soluble Organic Compound X1 | | | Dispersant | Surfactant | | | | Resin Particles | Colloidal Silica | Water | Surface Tension (mN/m) | Evaluation Result | |
|---|---|---|---|---|---|---|---|---|---|---|---|---|---|---|---|---|---|---|---|---|
| | | | | | | | | | | | AG-based | F-based | | Amount Ratio (F-based/AG-based) | | | | | Rub Resistance | Infrared Absorbing Properties |
| | Kind | Amount (%) | Kind | Amount (%) | Kind | Amount (%) | Kind | Molecular Weight | Amount (%) | Amount (%) | Amount (%) | Kind | Amount (%) | | Amount (%) | Amount (%) | | | | |
| Example 51 | 77-5 | 0.5 | PG | 20 | - | - | TMP | 134 | 3 | 0.2 | 1 | FS63 | 0.02 | 0.02 | 6 | 0.056 | Remainder | 22 | A | A |
| Example 52 | 79-6 | 0.5 | PG | 20 | - | - | TMP | 134 | 3 | 0.2 | 1 | FS63 | 0.02 | 0.02 | 6 | 0.056 | Remainder | 22 | A | A |
| Example 53 | 81-1 | 0.5 | PG | 20 | - | - | TMP | 134 | 3 | 0.2 | 1 | FS63 | 0.02 | 0.02 | 6 | 0.056 | Remainder | 22 | A | A |
| Example 54 | 83-2 | 0.5 | PG | 20 | - | - | TMP | 134 | 3 | 0.2 | 1 | FS63 | 0.02 | 0.02 | 6 | 0.056 | Remainder | 22 | A | A |
| Example 55 | 85-3 | 0.5 | PG | 23 | - | - | TMP | 134 | 5 | 0.2 | 1 | FS63 | 0.01 | 0.01 | 6 | 0.056 | Remainder | 24 | B | A |
| Example 56 | 87-4 | 0.5 | PG | 23 | - | - | TMP | 134 | 5 | 0.2 | 1 | FS63 | 0.01 | 0.01 | 6 | 0.056 | Remainder | 24 | B | A |
| Example 57 | 89-5 | 0.5 | PG | 23 | - | - | TMP | 134 | 5 | 0.2 | 1 | FS63 | 0.01 | 0.01 | 6 | 0.056 | Remainder | 24 | B | A |
| Example 58 | 91-6 | 0.5 | PG | 23 | - | - | TMP | 134 | 5 | 0.2 | 1 | FS63 | 0.01 | 0.01 | 6 | 0.056 | Remainder | 24 | B | A |
| Example 59 | 94-1 | 0.5 | PG | 23 | - | - | TMP | 134 | 5 | 0.2 | 1 | FS63 | 0.01 | 0.01 | 6 | 0.056 | Remainder | 24 | B | A |
| Example 60 | 96-2 | 0.5 | PG | 23 | - | - | TMP | 134 | 5 | 0.2 | 1 | FS63 | 0.01 | 0.01 | 6 | 0.056 | Remainder | 24 | B | A |
| Example 61 | 98-3 | 0.5 | PG | 20 | EG mHE | 2 | TMP | 134 | 3 | 0.2 | - | FS63 | 0.02 | - | 6 | 0.056 | Remainder | 22 | A | A |
| Example 62 | 100-4 | 0.5 | PG | 20 | EG mHE | 2 | Urea | 60 | 3 | 0.2 | - | FS63 | 0.02 | - | 6 | 0.056 | Remainder | 22 | A | A |
| Example 63 | 102-5 | 0.5 | PG | 20 | DEG mHE | 2 | TMP | 134 | 3 | 0.2 | - | FS63 | 0.02 | - | 6 | 0.056 | Remainder | 22 | A | A |
| Example 64 | 104-6 | 0.5 | PG | 20 | DEG mHE | 2 | Urea | 60 | 3 | 0.2 | - | FS63 | 0.02 | - | 6 | 0.056 | Remainder | 22 | A | A |
| Example 65 | 106-1 | 0.5 | PG | 20 | - | - | TMP | 134 | 3 | 0.2 | 1 | FS31 | 0.15 | 0.15 | 6 | 0.056 | Remainder | 25 | A | A |
| Example 66 | 108-2 | 0.5 | PG | 20 | - | - | Urea | 60 | 3 | 0.2 | 1 | FS31 | 0.15 | 0.15 | 6 | 0.056 | Remainder | 25 | A | A |
| Example 67 | 110-3 | 0.5 | PG | 20 | - | - | TMP | 134 | 3 | 0.2 | 1 | FS31 | 0.15 | 0.15 | 6 | 0.056 | Remainder | 25 | A | A |
| Example 68 | 112-4 | 0.5 | PG | 20 | - | - | Urea | 60 | 3 | 0.2 | 1 | FS31 | 0.15 | 0.15 | 6 | 0.056 | Remainder | 25 | A | A |
| Comparative example 1 | 1-1 | 0.5 | PG | 20 | - | - | Urea | 60 | 4 | 0.2 | 1 | - | 0 | 0 | 6 | 0.056 | Remainder | 35 | C | A |
| Comparative example 2 | 3-2 | 0.5 | PG | 28 | - | - | - | - | 0 | 0.2 | 1 | FS63 | 0.02 | 0.02 | 6 | 0.056 | Remainder | 22 | C | C |
| Comparative example 3 | 1-1 | 0.5 | PG | 20 | - | - | Galactooligosaccharide | 3000 | 5 | 0.2 | 1 | FS63 | 0.02 | 0.02 | 6 | 0.056 | Remainder | 22 | C | B |
| Comparative example 4 | 3-2 | 0.5 | PG | 20 | - | - | TMP | 134 | 12 | 0.2 | 1 | FS63 | 0.02 | 0.02 | 6 | 0.056 | Remainder | 22 | C | C |
| Comparative example 5 | 4-1 | 0.5 | PG | 40 | - | - | TMP | 134 | 3 | 0.2 | 1 | FS63 | 0.02 | 0.02 | 6 | 0.056 | Remainder | 22 | D | C |
| Comparative example 6 | 4-2 | 0.5 | PG | 60 | - | - | TMP | 134 | 3 | 0.2 | 1 | FS63 | 0.02 | 0.02 | 6 | 0.056 | Remainder | 22 | D | C |

As shown in Tables 1 to 3, the rub resistance and the infrared absorbing properties of the formed infrared absorbing image were excellent in each of Examples using the ink including the specific infrared absorbing material, the resin particles, the water-soluble organic solvent, the water-soluble organic compound X1, the surfactant, and water, in which the content of the water-soluble organic solvent is 10 mass% to 26 mass% with respect to a total amount of the ink, the content of the water-soluble organic compound X1 is 1 mass% to 8 mass% with respect to the total amount of the ink, and the surface tension is 18 mN/m to 30 mN/m.

Contrary to each of Examples, the rub resistance of the infrared absorbing image deteriorated

in Comparative Example 1 in which the surface tension of the ink was higher than 30 mN/m,
Comparative Example 2 in which the ink did not include the water-soluble organic compound X1,
Comparative Example 3 in which the ink included a comparative compound (galactooligosaccharide) having a molecular weight of 3000 instead of the water-soluble organic compound X1,
Comparative Example 4 in which the content of the water-soluble organic compound X1 was higher than 8 mass% with respect to the total amount of the ink, and
Comparative Examples 5 and 6 in which the content of the water-soluble organic solvent was higher than 26 mass% with respect to the total amount of the ink.

In Comparative Examples 2, 4, 5, and 6, the infrared absorbing properties of the infrared absorbing image deteriorated.

The disclosure of Japanese Patent Application No. 2019-068256 filed on March 29, 2019 is incorporated herein in its entirety.

All publications, patent applications, and technical standards mentioned in the present specification are herein incorporated by reference to the same extent as if each individual publication, patent application, or technical standard was specifically and individually indicated to be incorporated by reference.

## Claims

**1.** An ink jet ink for forming an infrared absorbing image comprising:

an infrared absorbing material represented by Formula (1);
resin particles;

a water-soluble organic solvent;
a water-soluble organic compound X1 having a melting point of 50°C or higher and a molecular weight of lower than 3000;
a surfactant; and
water,
wherein a content of the water-soluble organic solvent is from 10 mass% to 26 mass% with respect to a total amount of the ink jet ink for forming an infrared absorbing image,
a content of the water-soluble organic compound X1 is from 1 mass% to 8 mass% with respect to the total amount of the ink jet ink for forming an infrared absorbing image, and
a surface tension at 25°C is 18 mN/m to 30 mN/m:

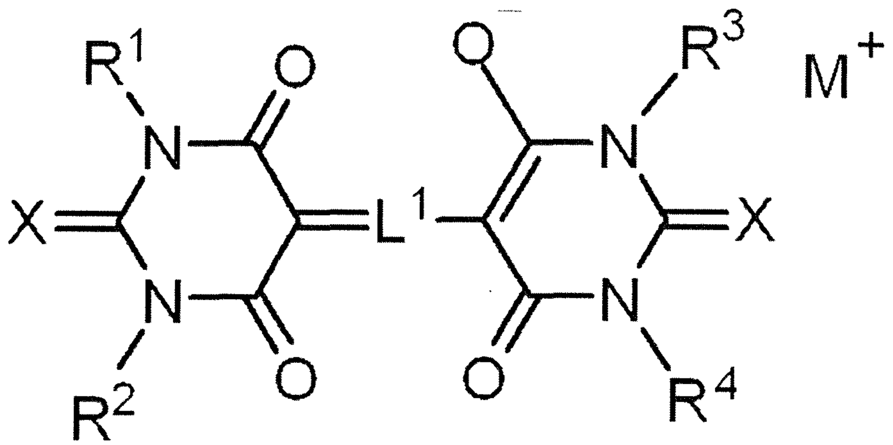

(1)

wherein, in Formula (1), $M^+$ represents a proton, a monovalent alkali metal cation, or an organic cation, $L^1$ represents a methine chain consisting of 5 or 7 methine groups, and a methine group at a center of the methine chain has a substituent,
each of $R^1$, $R^2$, $R^3$, and $R^4$ independently represents a hydrogen atom, an alkyl group, an aryl group, or a monovalent heterocyclic group, and
each X independently represents an O atom, a S atom, or a Se atom.

**2.** The ink jet ink for forming an infrared absorbing image according to claim 1,
wherein the infrared absorbing material represented by Formula (1) is an infrared absorbing material represented by Formula (2):

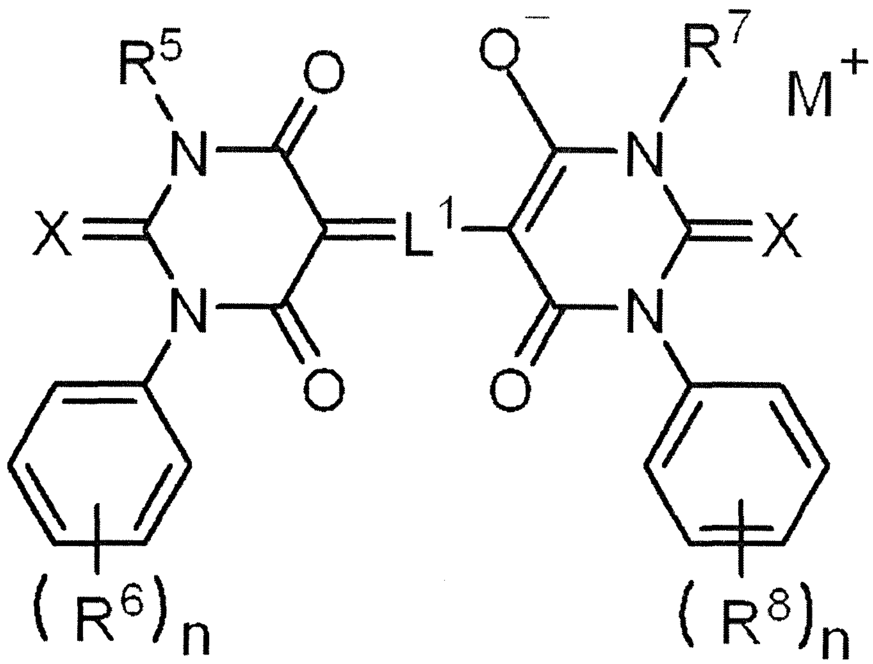

(2)

wherein, in Formula (2), $M^+$ represents a proton, a monovalent alkali metal cation, or an organic cation, $L^1$ represents a methine chain consisting of 5 or 7 methine groups, and a methine group at a center of the methine chain has a substituent,

each of $R^5$ and $R^7$ independently represents a hydrogen atom, an alkyl group, an aryl group, or a monovalent heterocyclic group.

each of $R^6$ and $R^8$ independently represents an alkyl group, a halogen atom, an alkenyl group, an aryl group, a monovalent heterocyclic group, a nitro group, a cyano group, $-OR^{L3}$, $-C(=O)R^{L3}$, $-C(=O)OR^{L3}$, $-OC(=O)R^{L3}$, $-N(R^{L3})_2$, $-NHC(=O)R^{L3}$, $-C(=O)N(R^{L3})_2$, $-NHC(=O)OR^{L3}$, $-OC(=O)N(R^{L3})_2$, $-NHC(=O)N(R^{L3})_2$, $-SR^{L3}$, $-S(=O)_2R^{L3}$, $-S(=O)_2OR^{L3}$, $-NHS(=O)_2R^{L3}$, or $-S(=O)_2N(R^{L3})_2$, and $R^{L3}$'s each independently represent a hydrogen atom, an alkyl group, an alkenyl group, an aryl group, or a monovalent heterocyclic group,

each n independently represents an integer from 1 to 5, and

each X independently represents an O atom, a S atom, or a Se atom.

**3.** The ink jet ink for forming an infrared absorbing image according to claim 2,
wherein in Formula (2), $R^6$ and $R^8$ each independently represent $-NHC(=O)R^{L3}$.

**4.** The ink jet ink for forming an infrared absorbing image according to any one of claims 1 to 3,
wherein a proportion of a water-soluble organic solvent L1 having a boiling point of 200°C or lower in the water-soluble organic solvent is 70 mass% or higher.

**5.** The ink jet ink for forming an infrared absorbing image according to any one of claims 1 to 4,
wherein the water-soluble organic compound X1 includes at least one of urea or trimethylolpropane.

**6.** An infrared absorbing image forming method comprising:
a step of forming an infrared absorbing image by applying the ink jet ink for forming an infrared absorbing image according to any one of claims 1 to 5 to a substrate using an ink jet method.

**7.** The infrared absorbing image forming method according to claim 6, further comprising:

a step of applying a treatment liquid including an aggregating agent to the substrate before the step of forming the infrared absorbing image,

wherein in the step of forming the infrared absorbing image, the infrared absorbing image is formed by applying the ink jet ink for forming an infrared absorbing image to at least a part of a region of the substrate to which the treatment liquid is applied.

**8.** The infrared absorbing image forming method according to claim 7, wherein in the step of applying the treatment liquid, the treatment liquid is applied to the substrate in a pattern image shape using an ink jet method.

**9.** A recorded material comprising:

a substrate; and
an infrared absorbing image that is disposed on the substrate and is a dry material of the ink jet ink for forming an infrared absorbing image according to any one of claims 1 to 5.

## INTERNATIONAL SEARCH REPORT

International application No.
PCT/JP2020/004098

A. CLASSIFICATION OF SUBJECT MATTER
Int.Cl. B41J2/01(2006.01)i, C09D11/328(2014.01)i, C09D11/38(2014.01)i, B41M5/00(2006.01)i, C09B23/01(2006.01)i, C09B67/46(2006.01)i
FI: C09D11/328, C09D11/38, C09B67/46A, C09B23/01, B41J2/01501, B41J2/01123, B41M5/00120, B41M5/00100, B41M5/00132
According to International Patent Classification (IPC) or to both national classification and IPC

B. FIELDS SEARCHED
Minimum documentation searched (classification system followed by classification symbols)
Int.Cl. B41J2/01, C09D11/328, C09D11/38, B41M5/00, C09B23/01, C09B67/46

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2018/034347 A1 (FUJIFILM CORPORATION) 22.02.2018 (2018-02-22), claims, examples, paragraph [0152] | 1-9 |
| Y | JP 2014-047302 A (FUJIFILM CORPORATION) 17.03.2014 (2014-03-17), paragraphs [0152]-[0155], examples | 1-9 |
| Y | JP 2008-144004 A (FUJIFILM CORPORATION) 26.06.2008 (2008-06-26), paragraphs [0042], [0043] | 1-9 |
| Y | WO 2016/098603 A1 (DIC CORP.) 23.06.2016 (2016-06-23), paragraphs [0021]-[0023], examples | 1-9 |
| P, X | WO 2019/163916 A1 (FUJIFILM CORPORATION) 29.08.2019 (2019-08-29), claims, examples | 1-9 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01.04.2020 | 14.04.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/004098

| | | |
|---|---|---|
| WO 2018/034347 A1 | 22.02.2018 | US 2019/0176487 A1<br>claims, examples, paragraph [0308]<br>EP 3502198 A1<br>CN 109642106 A |
| JP 2014-047302 A | 17.03.2014 | (Family: none) |
| JP 2008-144004 A | 26.06.2008 | (Family: none) |
| WO 2016/098603 A1 | 23.06.2016 | US 2017/0342288 A1<br>paragraphs [0032]-[0034], examples<br>EP 3235884 A1<br>CN 107148456 A |
| WO 2019/163916 A1 | 29.08.2019 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008144004 A
- JP 2013189596 A
- WO 2017056760 A
- WO 2018034347 A
- JP 2002020648 A
- JP 2016188345 A
- WO 2013180074 A
- JP 2010188661 A
- JP 5148436 A
- JP H5148436 A
- JP 5295312 A
- JP H5295312 A
- JP 7097541 A
- JP H797541 A
- JP 7082515 A
- JP H782515 A
- JP 7118584 A
- JP H7118584 A
- JP 11286637 A
- JP H11286637 A
- JP 63059936 A
- JP S5459936 A
- JP 2003306623 A
- JP 2011042150 A
- JP 51157636 A
- JP S59157636 A
- JP 2003322926 A
- JP 2004325707 A
- JP 2004309806 A
- JP 2019068256 A


### Non-patent literature cited in the description


- **F. M. HARMER.** Heterocyclic Compounds Cyanine Dyes and Related Compounds. John Wiley&Sons, 1964
- **J.BRANDRUP ; E.H.IMMERGUT.** Polymer Handbook. Wiley-Interscience, 1989
- **TOSHINAO OKITSU.** *Journal of the Adhesion Society of Japan,* 1993, vol. 29 (5
- *Photographic Science and Engineering,* 1974, vol. 18